(19) Europäisches Patentamt
European Patent Office
Office européen des brevets

(11) EP 2 871 846 A1

(12) **EUROPEAN PATENT APPLICATION**
published in accordance with Art. 153(4) EPC

(43) Date of publication:
**13.05.2015 Bulletin 2015/20**

(21) Application number: **14814217.7**

(22) Date of filing: **10.06.2014**

(51) Int Cl.:
***H04N 19/30*** *(2014.01)*

(86) International application number:
**PCT/JP2014/065287**

(87) International publication number:
**WO 2014/203763 (24.12.2014 Gazette 2014/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.06.2013 JP 2013130441**

(71) Applicant: **Sony Corporation**
**Tokyo 108-0075 (JP)**

(72) Inventor: **SATO, Kazushi**
**Tokyo 108-0075 (JP)**

(74) Representative: **Horner, David Richard**
**D Young & Co LLP**
**120 Holborn**
**London EC1N 2DY (GB)**

(54) **DECODING DEVICE, DECODING METHOD, ENCODING DEVICE, AND ENCODING METHOD**

(57) The present disclosure relates to a decoding device, a decoding method, a coding device, and a coding method capable of improving coding efficiency of an image layered for each gamut. A gamut conversion unit converts a gamut of a decoded image of a base layer into a gamut of an enhancement layer. An adaptive offset unit performs a filter process on a predetermined band of the decoded image of the base layer subjected to the gamut conversion. An addition unit decodes a coded image of the enhancement layer using the decoded image of the base layer subjected to the filter process to generate a decoded image of the enhancement layer. The present disclosure can be applied to, for example, the decoding device.

FIG. 27

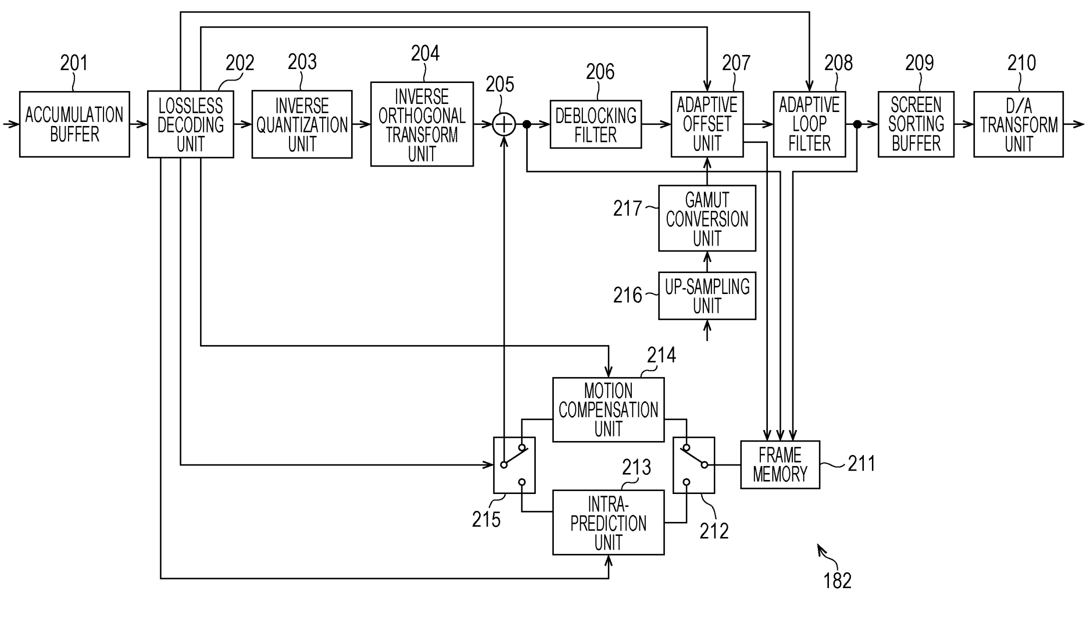


EP 2 871 846 A1

Printed by Jouve, 75001 PARIS (FR)

## Description

Technical Field

The present disclosure relates to a decoding device, a decoding method, a coding device, and a coding method, and particularly, to a decoding device, a decoding method, a coding device, and a coding method capable of improving coding efficiency of an image layered for each gamut.

Background Art

In recent years, devices that conform to schemes such as Moving Picture Experts Group phase (MPEG) executing compression by orthogonal transform, such as discrete cosine transform, and motion compensation by using redundancy unique to image information have been widespread in both of information delivery of broadcasting stations or the like and information reception in ordinary households.

In particular, the MPEG2 (ISO/IEC 13818-2) scheme is defined as a general image coding scheme and has widely been used at present as a standard covering both of an interlaced scanning image and a sequential scanning image and a standard resolution image and a high-definition image in a wide range of applications for professional purposes and consumer purposes. When the MPEG2 scheme is used, a high compression ratio and an excellent image quality can be realized by allocating a coding amount (bit rate) of 4 Mbps to 8 Mbps in the case of an interlaced scanning image with, for example, a standard resolution of 720x480 pixels and allocating a coding amount (bit rate) of 18 Mbps to 22 Mbps in the case of an interfaced scanning image with a high resolution of 1920x1088 pixels.

MPEG2 is mainly used for high-image quality coding suitable for broadcast, but does not correspond to a coding scheme of a coding amount (bit rate) lower than MPEG1, that is, a higher compression ratio. The need for such a coding scheme has been considered to increase in future due to spread of portable terminals, and MPEG4 has accordingly been standardized in response to the need. For the image coding scheme of MPEG4, the standard has been approved as the international standard, ISO/IEC 14496-2, in December 1998.

In recent years, standardization of H.26L (ITU-TQ6/16 VCEG) has progressed at first for the purpose of image coding for a video conference. While a larger calculation amount is necessary for coding and decoding than the coding scheme of the related art such as MPEG2 or MPEG4, the H.26L is known to realize higher coding efficiency.

In recent years, as part of the activity of MPEG4, standardization for realizing higher coding efficiency also in addition to functions which are not supported in H.26L on the basis of H.26L has been carried out as Joint Model of Enhanced-Compression Video Coding. This standardization has been achieved as the international standard of the name of H.264 and MPEG-4 Part 10 (Advanced Video Coding (AVC)) in March 2003.

As an extension of the standard, standardization of Fidelity Range Extension (FRExt) including a coding tool necessary for business use, such as RGB, YUV422, or YUV444, and 8x8 DCT or a quantization matrix defined in MPEG-2 has been completed in February 2005. Thus, the AVC scheme has been realized as a coding scheme capable of expressing film noise contained in a movie excellently, and thus has been used in a wide range of applications such as a Blu-ray (registered trademark) Disc (BD).

In these days, however, the need for coding of a higher compression ratio has increased to compress an image with about 4000x2000 pixels which is four times the resolution of a high-definition image or to deliver a high-definition image in an environment of a restricted transmission capacity such as the Internet. For this reason, an improvement in coding efficiency has been examined in Video Coding Expert Group (VCEG) affiliated with ITU-T.

At present, in order to improve coding efficiency more than AVC, standardization of a coding scheme called High Efficiency Video Coding (HEVC) has progressed in Joint Collaboration Team-Video Coding (JCTVC) which is a joint standardization group of ITU-T and ISO/IEC. NPL 1 has been issued as a draft as of May 2013.

Incidentally, the image coding schemes, MPEG-2 and AVC, have a scalable function of layering and coding images. According to the scalable function, coded data can be transmitted in accordance with a processing capability of a decoding side without performing a transcoding process.

Specifically, for example, only a coded stream of an image of a base layer which is a layer serving as a base can be transmitted to a terminal with a low processing capability, such as a mobile phone. On the other hand, a coded stream of images of a base layer and an enhancement layer which is a layer other than the base layer can be transmitted to a terminal with a high processing capability, such as a television receiver or a personal computer.

For the HEVC scheme, a scalable function (hereinafter referred to as gamut scalability) of layering and coding images according to gamuts has been suggested (for example, see NPL 2).

In the gamut scalability, for example, an image of the base layer is considered to be an image with the gamut BT.709 of an HD image with 1920x1080 pixels and an image of an enhancement layer is considered to be an image with the gamut BT.2020 examined as the gamut of an Ultra High Definition (UHD) image. A UHD image is an image with about 4000x2000 pixels or an image with about 8000x4000 pixels, and a bit depth of 10 bits or 12 bits rather than 8 bits of the related art is examined.

When a decoded image of the base layer is referred to at the time of coding of an image of an enhancement layer in the gamut scalability, it is necessary to convert the gamut of the decoded image of the base layer into the gamut of the enhancement layer.

As gamut conversion methods, for example, there are a method of performing bit shift on the pixel value of a decoded image of a base layer based on linear approximation of a relation between the gamuts of the base layer and an enhancement layer and a method of calculating a pixel value after conversion using a gain and offset. Hereinafter, the former method is referred to as a bit shift method and the latter method is referred to as a gain offset method.

Citation List

Non Patent Literature

NPL 1: Benjamin Bross, Woo-Jin Han, Jens-Rainer Ohm, Gary J. Sullivan, Ye-Kui Wang, Thomas Wiegand,"High Efficiency Video Coding (HEVC) text specification draft 10," JCTVC-L1003 v34, 2013.1. 14-1. 23

NPL 2: Louis Kerofsky, Andrew Segall, Seung-Hwan Kim, Kiran Misra,"Color Gamut Scalable Video Coding: New Results," JCTVC-L0334, 2013.1. 14-1. 23

Summary of Invention

Technical Problem

However, since the linear approximation is not established in a low band (low luminance) and a high band (high luminance) in the above-described gamut conversion methods, the gamut may not be converted with high accuracy at the low band and the high band. As a result, the accuracy of a predicted image of an enhancement layer generated with reference to an image of a base layer may deteriorate, and thus coding efficiency is lowered.

The present disclosure is devised in light of such circumstances and an object of the present disclosure is to improve coding efficiency of an image layered for each gamut. Solution to Problem

According to a first aspect of the present disclosure, there is provided a decoding device including a reception unit that receives a coded image of a first layer in an image layered for each gamut; a gamut conversion unit that converts a gamut of a decoded image of a second layer into a gamut of the first layer; a filter processing unit that performs a filter process on a predetermined band of the decoded image of the second layer converted by the gamut conversion unit; and a decoding unit that decodes the coded image of the first layer received by the reception unit using the decoded image of the second layer subjected to the filter process by the filter processing unit to generate a decoded image of the first layer.

According to the first aspect of the present disclosure, a decoding method corresponds to the decoding device according to the first aspect of the present disclosure.

In the first aspect of the present disclosure, a coded image of a first layer in an image layered for each gamut is received; a gamut of a decoded image of a second layer is converted into a gamut of the first layer; a filter process is performed on a predetermined band of the converted decoded image of the second layer; and the coded image of the first layer is decoded using the decoded image of the second layer subjected to the filter process to generate a decoded image of the first layer.

According to a second aspect of the present disclosure, there is provided a coding device including a gamut conversion unit that converts a gamut of a decoded image of a second layer used for coding of an image of a first layer in an image layered for each gamut into a gamut of the first layer; a filter processing unit that performs a filter process on a predetermined band of the decoded image of the second layer converted by the gamut conversion unit; a coding unit that codes the image of the first layer using the decoded image of the second layer subjected to the filter process by the filter processing to generate a coded image of the first layer; and a transmission unit that transmits the coded image of the first layer generated by the coding unit.

According to the second aspect of the present disclosure, a coding method corresponds to the coding device according to the second aspect of the present disclosure.

In the second aspect of the present disclosure, a gamut of a decoded image of a second layer used for coding of an image of a first layer in an image layered for each gamut is converted into a gamut of the first layer; a filter process is performed on a predetermined band of the converted decoded image of the second layer; the image of the first layer is coded using the decoded image of the second layer subjected to the filter process to generate a coded image of the first layer; and the coded image of the first layer is transmitted.

The decoding device according to the first aspect and the coding device according to the second aspect can be realized by causing a computer to execute a program.

A program executed by the computer to realize the decoding device according to the first aspect and the coding device according to the second aspect can be transmitted via a transmission medium or can be recorded on a recording medium to be supplied.

The decoding device according to the first aspect and the coding device according to the second aspect may be independent devices or may be internal blocks included in one device.

Advantageous Effects of Invention

According to the first aspect of the present disclosure, it is possible to decode a coded stream of which the coded efficiency of an image layered for each gamut is improved.

According to the second aspect of the present disclosure, it is possible to improve the coding efficiency of an image layered for each gamut.

Brief Description of Drawings

[Fig. 1] Fig. 1 is a diagram for describing spatial scalability.
[Fig. 2] Fig. 2 is a diagram for describing temporal scalability.
[Fig. 3] Fig. 3 is a diagram for SNR scalability.
[Fig. 4] Fig. 4 is a diagram illustrating the gamut BT.709 and the gamut BT.2020.
[Fig. 5] Fig. 5 is a diagram for describing gamut scalability coding of the related art.
[Fig. 6] Fig. 6 is a diagram illustrating a relation between a luminance signal and a color difference signal in the gamut BT.709 and the gamut BT.2020 0 in a middle band.
[Fig. 7] Fig. 7 is a diagram illustrating the number of parameters transmitted to a decoding side in a bit shift method and a gain offset method.
[Fig. 8] Fig. 8 is a diagram illustrating an example of the syntax of a part of a PPS.
[Fig. 9] Fig. 9 is a diagram illustrating a relation between a luminance signal and a color difference signal in the gamut BT.2020 and the gamut BT.709 of a low band or a high band.
[Fig. 10] Fig. 10 is a block diagram illustrating an example of the configuration of a coding device of an embodiment to which the present disclosure is applied.
[Fig. 11] Fig. 11 is a block diagram illustrating an example of the configuration of an enhancement coding unit in Fig. 10.
[Fig. 12] Fig. 12 is a block diagram illustrating an example of the configuration of a coding unit in Fig. 11.
[Fig. 13] Fig. 13 is a diagram for describing a CU.
[Fig. 14] Fig. 14 is a block diagram illustrating an example of the configuration of an adaptive offset unit in Fig. 12.
[Fig. 15] Fig. 15 is a diagram for describing a band offset process.
[Fig. 16] Fig. 16 is a diagram illustrating bands in the band offset process on a base image.
[Fig. 17] Fig. 17 is a diagram for describing adjacent pixels in an edge offset process.
[Fig. 18] Fig. 18 is a diagram for describing categories in the edge offset process.
[Fig. 19] Fig. 19 is a diagram illustrating an example of the syntax of offset information.
[Fig. 20] Fig. 20 is a diagram illustrating a relation between a type of the adaptive offset process and type information.
[Fig. 21] Fig. 21 is a flowchart for describing a layer coding process of a coding device in Fig. 10.
[Fig. 22] Fig. 22 is a flowchart for describing the details of an enhancement coding process in Fig. 21.
[Fig. 23] Fig. 23 is a flowchart for describing the details of the enhancement coding process in Fig. 21.
[Fig. 24] Fig. 24 is a flowchart for describing the details of an adaptive offset process in Fig. 22.
[Fig. 25] Fig. 25 is a block diagram illustrating an example of the configuration of a decoding device of an embodiment to which the present disclosure is applied.
[Fig. 26] Fig. 26 is a block diagram illustrating an example of the configuration of an enhancement decoding unit in Fig. 25.
[Fig. 27] Fig. 27 is a block diagram illustrating an example of the configuration of a decoding unit in Fig. 26.
[Fig. 28] Fig. 28 is a block diagram illustrating an example of the configuration of an adaptive offset unit in Fig. 27.
[Fig. 29] Fig. 29 is a flowchart for describing a layer decoding process of the decoding device in Fig. 25.
[Fig. 30] Fig. 30 is a flowchart for describing the details of an enhancement decoding process in Fig. 29.
[Fig. 31] Fig. 31 is a flowchart for describing the details of an adaptive offset process in Fig. 30.
[Fig. 32] Fig. 32 is a diagram illustrating another example of coding by a scalable function.
[Fig. 33] Fig. 33 is a block diagram illustrating an example of a hardware configuration of a computer.

[Fig. 34] Fig. 34 is a diagram illustrating an example of a multi-view image coding scheme.

[Fig. 35] Fig. 35 is a diagram illustrating an example of the configuration of a multi-view image coding device to which the present technology is applied.

[Fig. 36] Fig. 36 is a diagram illustrating an example of the configuration of a multi-view image decoding device to which the present technology is applied.

[Fig. 37] Fig. 37 is a diagram illustrating an example of an overall configuration of a television device to which the present disclosure is applied.

[Fig. 38] Fig. 38 is a diagram illustrating an example of an overall configuration of a mobile phone to which the present disclosure is applied.

[Fig. 39] Fig. 39 is a diagram illustrating an example of an overall configuration of a recording reproduction device to which the present disclosure is applied.

[Fig. 40] Fig. 40 is a diagram illustrating an example of an overall configuration of an imaging device to which the present disclosure is applied.

[Fig. 41] Fig. 41 is a block diagram illustrating an example of scalable coding use.

[Fig. 42] Fig. 42 is a block diagram illustrating another example of the scalable coding use.

[Fig. 43] Fig. 43 is a block diagram illustrating still another example of the scalable coding use.

[Fig. 44] Fig. 44 is a block diagram illustrating an example of an overall configuration of a video set to which the present technology is applied.

[Fig. 45] Fig. 45 is a block diagram illustrating an example of an overall configuration of a video processor to which the present technology is applied.

[Fig. 46] Fig. 46 is a block diagram illustrating another example of an overall configuration of the video processor to which the present technology is applied.

[Fig. 47] Fig. 47 is an explanatory diagram illustrating the configuration of a content reproduction system.

[Fig. 48] Fig. 48 is an explanatory diagram illustrating a flow of data in the content reproduction system.

[Fig. 49] Fig. 49 is an explanatory diagram illustrating a specific example of an MPD.

[Fig. 50] Fig. 50 is a functional block diagram illustrating the configuration of a content server of a content reproduction system.

[Fig. 51] Fig. 51 is a functional block diagram illustrating the configuration of a content reproduction device of the content reproduction system.

[Fig. 52] Fig. 52 is a functional block diagram illustrating the configuration of a content server of the content reproduction system.

[Fig. 53] Fig. 53 is a sequence chart illustrating an example of a communication process between devices of a wireless communication system.

[Fig. 54] Fig. 54 is a sequence chart illustrating an example of a communication process between the devices of the wireless communication system.

[Fig. 55] Fig. 55 is a diagram schematically illustrating an example of the configuration of a frame format transmitted and received in the communication process between the devices of the wireless communication system.

[Fig. 56] Fig. 56 is a sequence chart illustrating an example of a communication process between devices of a wireless communication system.

## Description of Embodiments

### <Description of Scalable Functions>

### (Description of Spatial Scalability)

Fig. 1 is a diagram for describing spatial scalability.

As illustrated in Fig. 1, spatial scalability is a scalable function of layering and coding images according to a spatial resolution. Specifically, in the spatial scalability, an image with a low resolution is coded as an image of a base layer and an image with a high resolution is coded as an image of an enhancement layer.

Accordingly, a coding device transmits only coded data of an image of a base layer to a decoding device with low processing capability, so that the decoding device can generate the image with the low resolution. Further, the coding device transmits coded data of images of a base layer and an enhancement layer to a decoding device with high processing capability, so that the decoding device can decode the images of the base layer and the enhancement layer and generate the images with the high resolution.

(Description of Temporal Scalability)

Fig. 2 is a diagram for describing temporal scalability.

As illustrated in Fig. 2, the temporal scalability is a scalable function of layering and coding images according to a frame rate. Specifically, in the temporal scalability, for example, an image at a low frame rate (7.5 fps in an example of Fig. 2) is coded as an image of a base layer. An image at a middle frame rate (15 fps in the example of Fig. 2) is coded as an image of an enhancement layer. An image at a high frame rate (30 fps in the example of Fig. 2) is coded as an image of an enhancement layer.

Accordingly, a coding device transmits only coded data of the image of a base layer to a decoding device with low processing capability, so that the decoding device can generate the image with the low frame rate. The coding device transmits coded data of images of the base layer and an enhancement layer to a decoding device with high processing capability, so that the decoding device can decode the images of the base layer and the enhancement layer and generate the images with the high frame rate or the middle frame rate.

(Description of SNR Scalability)

Fig. 3 is a diagram for describing SNR scalability.

As illustrated in Fig. 3, SNR scalability is a scalable function of layering and coding an image according to a signal-noise ratio (SNR). Specifically, in the SNR scalability, an image with a low SNR is coded as an image of a base layer and an image with a high SNR is coded as an image of an enhancement layer.

Accordingly, the coding device transmits only coded data of an image of a base layer to a decoding device with low processing capability, so that the decoding device can generate the image with the low SNR. The coding device transmits coded data of images of a base layer and an enhancement layer to a decoding device with high processing capability, so that the decoding device can decode the images of the base layer and the enhancement layer and generate the images with the high SNR.

Although not illustrated, there are also other functions as the scalable functions in addition to gamut scalability, spatial scalability, temporal scalability, and SNR scalability.

For example, there is also bit-depth scalability of layering and coding images according to the number of bits as the scalable function. In this case, for example, an 8-bit video image is considered to be an image of a base layer and a 10-bit video image is considered to be an image of an enhancement layer for coding.

There is also chroma scalability of layering and coding images according to the format of a color difference signal as the scalable function. In this case, for example, an image of YUV 420 is considered to be an image of a base layer and an image of YUV 422 is considered to be an image of an enhancement layer for coding.

Hereinafter, a case in which the number of enhancement layers is 1 will be described to facilitate the description.

<Prerequisites of the Present Disclosure>

(Description of Gamut)

Fig. 4 is a diagram illustrating the gamut BT.709 and the gamut BT.2020.

The graph of Fig. 4 is a gamut graph that maps 3-dimensional color spaces into 2-dimensional planes based on a predetermined restraint condition. A cross mark in the graph indicates a position at which white is mapped and a dashed line indicates a range of colors which can be expressed with the gamut BT.709. A solid line indicates a range of colors which can be expressed with the gamut BT.2020 and a dotted line indicates a range of colors which can be recognized by a person.

As illustrated in Fig. 4, the gamut BT.2020 can express colors more various than the gamut BT.709.

(Description of Coding by Gamut Scalability of Related Art)

Fig. 5 is a diagram for describing coding (hereinafter referred to as gamut scalable coding) by gamut scalability of the related art when an HD image is set as an image of a base layer and a UHD image is set as an image of an enhancement layer.

As illustrated in Fig. 5, when an HD image is input as an image of a base layer (hereinafter referred as a base image) to the coding device, the base image is coded to generate base stream. The coded base image is decoded and considered to be a base image for reference. The base image for reference is used when a base image subsequent to the base image in a coding order is coded.

The base image for reference is up-sampled so that the resolution of the base image for reference becomes the resolution of an image of an enhancement layer (hereinafter referred to as an enhancement image), and the gamut is converted into a gamut of an enhancement layer by a bit shift method and a gain offset method.

A UHD image input as an enhancement image to the coding device is coded using the base image for reference subjected to the gamut conversion and an enhancement image for reference to generate an enhancement stream. The enhancement image for reference is an image obtained by decoding a previous coded enhancement image in the coding order. The base stream and the enhancement stream are combined to be output.

(Relation between Gamut BT.2020 and Gamut BT.709 of Middle Band)

Fig. 6 is a diagram illustrating a relation between a luminance signal and a color difference signal in the gamut BT.2020 and the gamut BT.709 of a middle band which is a band other than a low band and a high band.

The graphs in A of Fig. 6 to C of Fig. 6 are graphs that indicate relations of values of a luminance signal Y, values of a color difference signal U, and values of a color difference signal V between the gamut BT.2020 and the gamut BT.709 of a middle band, respectively. In Fig. 6, the horizontal axis represents the values of the gamut BT.709 and the vertical axis represents the values of the gamut BT.2020.

As illustrated in Fig. 6, the relation between a luminance signal and a color difference signal in the gamut BT.2020 and the gamut BT.709 of a middle band can be linearly approximated. Specifically, the relations between the luminance signal and the color difference signal in the gamut BT.2020 and the gamut BT.709 can be linearly approximated with straight lines or can be approximated with dotted lines in Fig. 6. The straight lines can be expressed in Expression (1) below and the dotted lines can be expressed in Expression (2) below.

[Expression 1]

$$Y_{2020} = Y_{709} << 2$$
$$U_{2020} = U_{709} << 2$$
$$V_{2020} = V_{709} << 2 \qquad (1)$$

[Expression 2]

$$Y_{2020} = g_1 \cdot Y_{709} + o_1$$
$$U_{2020} = g_2 \cdot U_{709} + o_2$$
$$V_{2020} = g_3 \cdot U_{709} + o_3 \qquad (2)$$

In Expression (1) and Expression (2), $Y_{2010}$, $U_{2010}$, and $V_{2010}$ indicate a value of the luminance signal Y, a value of the color difference signal U, and a value of the color difference signal V, respectively, in the gamut BT.2020. Further, $Y_{709}$, $U_{709}$, and $V_{709}$ indicate a value of the luminance signal Y, a value of the color difference signal U, and a value of the color difference signal V, respectively, in the gamut BT.709.

In Expression (2), $g_1$ to $g_3$ indicate gains that are multiplied to $Y_{709}$, $U_{709}$, and $V_{709}$, respectively, and $O_1$ to $O_3$ indicate offsets that are added to $Y_{709}$, $U_{709}$, and $V_{709}$, respectively. The gains $g_1$ to $g_3$ and the offsets $o_1$ to $o_3$ may be fixed values determined in advance or may be variable values set for each picture.

As described above, the relation between the luminance signal and the color difference signal in the gamut BT.2020 and the gamut BT.709 can be linearly approximated with the straight line indicated in Expression (1) or the dotted line indicated in Expression (2). Accordingly, the gamut BT.709 can be converted into the gamut BT.2020 according to the bit shift method of calculating values of the gamut BT.2020 using values of the gamut BT.709 by Expression (1) or the gain offset method of calculating values of the gamut BT.2020 using values of the gamut BT.709 by Expression (2).

(Description of Number of Parameters in Bit Shift Method and Gain Offset Method)

Fig. 7 is a diagram illustrating the number of parameters transmitted to a decoding side in the bit shift method and the gain offset method.

In the bit shift method, as illustrated in Fig. 7, values $Y_{2010}$, $U_{2010}$, and $V_{2010}$ of the gamut BT.2020 are calculated by shifting values $Y_{709}$, $U_{709}$, and $V_{709}$ of the gamut BT.709 to the left by 2 bits. Accordingly, there is no parameter necessarily transmitted to a decoding side. Accordingly, the number of parameters transmitted to the decoding side is 0.

In the gain offset method, as illustrated in Fig. 7, values $Y_{2010}$, $U_{2010}$, and $V_{2010}$ of the gamut BT.2020 are calculated by multiplying the gains $g_1$, $g_2$, and $g_3$ with values $Y_{709}$, $U_{709}$, and $V_{709}$ of the gamut BT.709 and adding the offsets $o_1$, $o_2$, and $o_3$. Accordingly, when the gains $g_1$, $g_2$, and $g_3$ and the offsets $o_1$, $o_2$, and $o_3$ are fixed values, there is no parameter necessarily transmitted to the decoding side. Accordingly, the number of parameters transmitted to the decoding side is 0.

Conversely, when the gains $g_1$ to $g_3$ and the offsets $o_1$, $o_2$, and $o_3$ are variable values, the gains $g_1$ to $g_3$ and the offsets $o_1$, $o_2$, and $o_3$ are necessarily transmitted to the decoding side. Accordingly, the number of parameters transmitted to the decoding side is 6.

(Example of Information Designating Gamut Conversion Method)

Fig. 8 is a diagram illustrating an example of the syntax of a part of a picture parameter set (PPS).

As illustrated in A of Fig. 8, an extension flag (pps_extension_flag) indicating whether the PPS is extended is set in the picture parameter set (PPS). The extension flag is 1 when the PPS indicates the extension, and is 0 when the PPS indicates no extension.

When the extension flag is 1, a conversion flag (use_color_prediction) indicating whether to perform gamut conversion is set in the PPS. The conversion flag is 1 when the gamut conversion is performed, and is 0 when the gamut conversion is not performed.

When the conversion flag is 1, gamut conversion information (color_pred_data) regarding the gamut conversion is further set in the PPS. The gamut conversion information includes gamut conversion method information (color_prediction_model) designating a gamut conversion method.

As illustrated in B of Fig. 8, the gamut conversion method information is 0 when the gamut conversion method is the bit shift method. The gamut conversion method information is 1 when the gamut conversion method is a fixed gain offset method which is a gain offset method using fixed values as the gains and the offsets. The gamut conversion method information is 2 when the gamut conversion method is an adaptive gain offset method which is a gain offset method using variable values as the gains and the offsets.

As described above, the gamut can be converted by the bit shift method, the fixed gain offset method, or the adaptive gain offset method. However, the relation in Fig. 6 is not established in a low band or a high band.

(Relation between Gamut BT.2020 and Gamut BT.709 in Low Band or High Band)

Fig. 9 is a diagram illustrating a relation between a luminance signal and a color difference signal in the gamut BT.2020 and the gamut BT.709 of a low band or a high band.

The graphs in A of Fig. 9 to C of Fig. 9 are graphs that indicate relations of values of a luminance signal Y, values of a color difference signal U, and values of a color difference signal V between the gamut BT.2020 and the gamut BT.709 of a low band or a high band, respectively. In Fig. 9, the horizontal axis represents the values of the gamut BT.709 and the vertical axis represents the values of the gamut BT.2020.

As illustrated in Fig. 9, the relation between the luminance signal and the color difference signals in the gamut BT.2020 and the gamut BT.709 in a low band or a high band may not be linearly approximated. Accordingly, an error occurs in a luminance signal and a color difference signal for which the gamut is converted by the bit shift method, the fixed gain offset method, or the adaptive gain offset method.

Accordingly, in the present disclosure, a base image subjected to the gamut conversion is corrected by performing a filter process on a base image subjected to the gamut conversion by the bit shift method, the fixed gain offset method, or the adaptive gain offset method in a low band or a high band.

<First Embodiment>

(Example of Configuration of Embodiment of Coding Device)

Fig. 10 is a block diagram illustrating an example of the configuration of a coding device of an embodiment to which the present disclosure is applied.

A coding device 30 in Fig. 10 includes a base coding unit 31, an enhancement coding unit 32, a combining unit 33, and a transmission unit 34. The coding device 30 performs gamut scalable coding according to a scheme conforming to the HEVC scheme using an HD image and a UHD image.

Specifically, an HD image is input as a base image from the outside to the base coding unit 31 of the coding device 30. The base coding unit 31 is configured as in a coding device of the HEVC scheme of the related art and codes a base image according to the HEVC scheme. The base coding unit 31 supplies the combining unit 33 with a coded stream including coded data, a video parameter set (VPS), a sequence parameter set (SPS), and a picture parameter set (PPS) obtained as the result of the coding as a base stream. The base coding unit 31 supplies the enhancement coding unit 32 with the decoded base image so that the decoded base image is used as a reference image at the time of coding of the base image.

A UHD image is input as an enhancement image from the outside to the enhancement coding unit 32. The enhancement coding unit 32 codes the enhancement image according to a scheme conforming to the HEVC scheme. At this time, the enhancement coding unit 32 refers to the base image from the base coding unit 31. The enhancement coding unit 32 supplies the combining unit 33 with a coded stream including extension regions or the like of coded data, an SPS, a PPS, and a VPS obtained as the result of the coding as an enhancement stream.

The combining unit 33 combines the base stream supplied from the base coding unit 31 and the enhancement stream supplied from the enhancement coding unit 32 to generate a coded stream of all of the layers. The combining unit 33 supplies the transmission unit 34 with the coded stream of all the layers.

The transmission unit 34 transmits the coded stream of all of the layers supplied from the combining unit 33 to a decoding device to be described below.

Here, the coding device 30 is assumed to transmit the coded stream of all of the layers, but can also transmit only the base stream, as necessary.

(Example of Configuration of Enhancement Coding Unit)

Fig. 11 is a block diagram illustrating an example of the configuration of the enhancement coding unit 32 in Fig. 10.

The enhancement coding unit 32 in Fig. 11 includes a setting unit 51 and a coding unit 52.

The setting unit 51 of the enhancement coding unit 32 sets a parameter set of an extension region or the like of an SPS, a PPS, and a VPS, as necessary. The setting unit 51 supplies the set parameter set to the coding unit 52.

The coding unit 52 codes the enhancement image input from the outside according to the scheme conforming to the HEVC scheme with reference to the base image from the base coding unit 31. The coding unit 52 generates an enhancement stream from coded data obtained as the result of the coding and the parameter set supplied from the setting unit 51 and supplies the enhancement stream to the combining unit 33 in Fig. 10.

(Example of Configuration of Coding Unit)

Fig. 12 is a block diagram illustrating an example of the configuration of the coding unit 52 in Fig. 11.

The coding unit 52 in Fig. 12 includes an A/D conversion unit 71, a screen sorting buffer 72, a calculation unit 73, an orthogonal transform unit 74, a quantization unit 75, a lossless coding unit 76, an accumulation buffer 77, a generation unit 78, an inverse quantization unit 79, an inverse orthogonal transform unit 80, an addition unit 81, a deblocking filter 82, an adaptive offset unit 83, an adaptive loop filter 84, a frame memory 85, a switch 86, an intra-prediction unit 87, a motion prediction compensation unit 88, a predicted image selection unit 89, a rate control unit 90, an up-sampling unit 91, and a gamut conversion unit 92.

The A/D conversion unit 71 of the coding unit 52 performs A/D conversion on enhancement images in units of input frames and outputs the enhancement images to the screen sorting buffer 72 to store the enhancement images. The screen sorting buffer 72 sorts the enhancement images in units of frames in a stored display order in an order for coding according to a GOP structure and outputs the sorted enhancement images to the calculation unit 73, an intra-prediction unit 87, and a motion prediction compensation unit 88.

The calculation unit 73 functions as a coding unit and performs coding by calculating a difference between a predicted image supplied from a predicted image selection unit 89 and the coding target enhancement image output from the screen sorting buffer 72. Specifically, the calculation unit 73 performs the coding by subtracting the predicted image supplied from the predicted image selection unit 89 from the coding target enhancement image output from the screen sorting buffer 72.

The calculation unit 73 outputs the image obtained as the result as the residual information to the orthogonal transform unit 74. When the predicted image is not supplied from the predicted image selection unit 89, the calculation unit 73 outputs the enhancement image read from the screen sorting buffer 72 as residual information to the orthogonal transform unit 74 without change.

The orthogonal transform unit 74 performs orthogonal transform on the residual information from the calculation unit 73 according to a predetermined scheme and supplies a generated orthogonal transform coefficient to the quantization unit 75.

The quantization unit 75 quantizes the orthogonal transform coefficient supplied from the orthogonal transform unit 74 and supplies a coefficient obtained as the result of the quantization to the lossless coding unit 76.

The lossless coding unit 76 acquires intra-prediction mode information indicating an optimum intra-prediction mode from the intra-prediction unit 87. The lossless coding unit 76 acquires inter-prediction mode information indicating an optimum inter-prediction mode, a motion vector, reference image specifying information specifying a reference image, and the like from the motion prediction compensation unit 88. The lossless coding unit 76 acquires offset information serving as a parameter of an adaptive offset process from the adaptive offset unit 83 and acquires a filter coefficient from the adaptive loop filter 84.

The lossless coding unit 76 performs lossless coding, such as variable-length coding (for example, context-adaptive variable length coding (CAVLC)) or arithmetic coding (for example, context-adaptive binary arithmetic coding (CABAC)), on the quantized coefficient supplied from the quantization unit 75.

The lossless coding unit 76 performs lossless coding on the intra-prediction mode information or the inter-prediction mode information, the motion vector, the reference image specifying information, the offset information, and the filter coefficient as coded information regarding the coding. The lossless coding unit 76 supplies the coded information subjected to the lossless coding and the coefficient subjected to the lossless coding as coded data to the accumulation buffer 77 to store the coded information and the coefficient. The coded information subjected to the lossless coding may be added as a header to the coded data.

The accumulation buffer 77 temporarily stores the coded data supplied from the lossless coding unit 76. The accumulation buffer 77 supplies the stored coded data to the generation unit 78.

The generation unit 78 generates an enhancement stream from the parameter set supplied from the setting unit 51 in Fig. 11 and the coded data supplied from the accumulation buffer 77 and supplies the enhancement stream to the combining unit 33 in Fig. 10.

The quantized coefficient output from the quantization unit 75 is also input to the inverse quantization unit 79. The inverse quantization unit 79 inversely quantizes the coefficient quantized by the quantization unit 75 and supplies an orthogonal transform coefficient obtained as the result to the inverse orthogonal transform unit 80.

The inverse orthogonal transform unit 80 performs 4-order inverse orthogonal transform on the orthogonal transform coefficient supplied from the inverse quantization unit 79 according to a scheme corresponding to the orthogonal transform scheme in the orthogonal transform unit 74 and supplies residual information obtained as the result to the addition unit 81.

The addition unit 81 functions as a decoding unit and adds the residual information supplied from the inverse orthogonal transform unit 80 and the predicted image supplied from the predicted image selection unit 89 to obtain a locally decoded enhancement image. When the predicted image is not supplied from the predicted image selection unit 89, the addition unit 81 sets the residual information supplied from the inverse orthogonal transform unit 80 as a locally decoded enhancement image. The addition unit 81 supplies the locally decoded enhancement image to the deblocking filter 82 and supplies the locally decoded enhancement image to the frame memory 85 to accumulate the locally decoded enhancement image.

The deblocking filter 82 performs a deblocking filter process of removing block distortion on the locally decoded enhancement image supplied from the addition unit 81 and supplies the enhancement image obtained as the result to the adaptive offset unit 83.

The adaptive offset unit 83 performs an adaptive offset process (sample adaptive offset (SAO)) of removing ringing mainly on the enhancement image subjected to the deblocking filter process and supplied from the deblocking filter 82.

Specifically, the adaptive offset unit 83 determines a type of adaptive offset process to be performed on the enhancement image for each largest coding unit (LCU), which is units of maximum coding, through a band offset process or an edge offset process.

The band offset process is a filter process using an offset set only in a predetermined band. The edge offset process is a filter process using an offset according to a relation with adjacent pixels.

When the type of adaptive offset process is the band offset process, the adaptive offset unit 83 determines a band in which an offset is set for each LCU and calculates the offset. On the other hand, when the type of adaptive offset process is the edge offset process, the adaptive offset unit 83 determines a pattern of the adjacent pixels for each LCU and calculates an offset according to the relation with the adjacent pixels of the pattern.

The type and band of the adaptive offset process are determined and the offset is calculated, for example, so that a difference between the enhancement image subjected to the adaptive offset process and the enhancement image output from the screen sorting buffer 72 decreases.

The adaptive offset unit 83 performs the determined type of adaptive offset process on the enhancement image subjected to the deblocking filter process based on the calculated offset and the determined band or the pattern of the adjacent pixels. Then, the adaptive offset unit 83 supplies the enhancement image subjected to the adaptive offset process to the adaptive loop filter 84.

The adaptive offset unit 83 calculates the offset corresponding to the predetermined band of the base image supplied from the gamut conversion unit 92 for each LCU. Specifically, the adaptive offset unit 83 calculates the offset so that a difference between the base image subjected to the band offset process and the enhancement image output from the screen sorting buffer 72 decreases.

Then, the adaptive offset unit 83 performs the filter process using the offset corresponding to the predetermined band of the base image from the gamut conversion unit 92 as the band offset process based on the calculated offset. The adaptive offset unit 83 supplies the base image subjected to the band offset process to the frame memory 85.

The adaptive offset unit 83 supplies type information indicating a type of adaptive offset process on the enhancement image, the offset, band information specifying the band or pattern information specifying the pattern of the adjacent pixels, and the type information and the offset of the base image as offset information to the lossless coding unit 76.

The adaptive loop filter 84 includes, for example, a 2-dimensional Wiener filter. The adaptive loop filter 84 performs, for example, an adaptive loop filter (ALF) process on the enhancement image subjected to the adaptive offset process and supplied from the adaptive offset unit 83 for each LCU.

Specifically, the adaptive loop filter 84 calculates a filter coefficient used for the adaptive loop filter process for each LCU so that a difference between the enhancement image from the screen sorting buffer 72 and the enhancement image subjected to the adaptive loop filter process is minimized. Then, the adaptive loop filter 84 performs the adaptive loop filter process on the enhancement image subjected to the adaptive offset process for each LCU using the calculated filter coefficient.

The adaptive loop filter 84 supplies the enhancement image subjected to the adaptive loop filter process to the frame memory 85. The adaptive loop filter 84 supplies the filter coefficient to the lossless coding unit 76.

Herein, the adaptive loop filter process is assumed to be performed for each LCU, but units of processes of the adaptive loop filter process are not limited to the LCU. The process can be efficiently performed by matching the units of processes of the adaptive offset unit 83 and the adaptive loop filter 84.

The frame memory 85 accumulates the enhancement image supplied from the adaptive loop filter 84, the enhancement image supplied from the addition unit 81, and the base image supplied from the adaptive offset unit 83. The base image or the enhancement image accumulated in the frame memory 85 is output as a reference image to the intra-prediction unit 87 or the motion prediction compensation unit 88 via the switch 86.

The intra-prediction unit 87 performs intra-prediction of all of the intra-prediction mode candidates using the reference image read from the frame memory 85 via the switch 86.

The intra-prediction unit 87 calculates a cost function value (which will be described below in detail) on all of the intra-prediction mode candidates based on the enhancement image read from the screen sorting buffer 72, the predicted image generated as the result of the intra-prediction, information indicating the intra-prediction mode, and the like. Then, the intra-prediction unit 87 determines the intra-prediction mode with the minimum cost function value as an optimum intra-prediction mode.

The intra-prediction unit 87 supplies the predicted image generated in the optimum intra-prediction mode and the corresponding cost function value to the predicted image selection unit 89. The intra-prediction unit 87 supplies intra-prediction mode information to the lossless coding unit 76 when the predicted image selection unit 89 notifies the intra-prediction unit 87 that the predicted image generated in the optimum intra-prediction mode is selected.

The cost function value is also referred to as a rate distortion (RD) cost and is calculated, for example, based on one scheme of a high complexity mode and a low complexity mode decided by a joint model (JM) which is reference software in the H.264/AVC scheme. The reference software in the H.264/AVC scheme is publicized in http://iphome.hhi.de/suehring/tml/index.htm.

Specifically, when the high complexity mode is adopted as a scheme of calculating the cost function value, up to decoding is performed provisionally on all of the prediction mode candidates and a cost function value Cost (Mode) expressed by Expression (3) below is calculated for each prediction mode.

[Expression 3]

$$\mathrm{Cost\ (Mode)} = D + \lambda \cdot R \qquad (3)$$

D indicates a difference (distortion) between an original image and a decoded image, R indicates an occurrence coding amount including up to the coefficient of the orthogonal transform, and λ indicates a Lagrange undetermined-multiplier given as a function of a quantization parameter QP.

On the other hand, when the low complexity mode is adopted as the scheme of calculating the cost function value, the generation of the predicted image and the calculation of the coding amount of the coded information are performed on all of the prediction mode candidates and a cost function Cost (Mode) expressed by Expression (4) below is calculated for each prediction mode.

[Expression 4]

$$\mathrm{Cost\ (Mode)} = D + \mathrm{QPtoQuant\ (QP)} \cdot \mathrm{Header_Bit} \qquad (4)$$

D indicates a difference (distortion) between an original image and a decoded image, Header_Bit indicates the coding amount of the coded information, and QPtoQuant indicates a function given as a function of a quantization parameter QP.

In the low complexity mode, the predicted images may be generated for all of the prediction modes. Since it is not necessary to generate a decoded image, a calculation amount decreases.

The motion prediction compensation unit 88 performs a motion prediction compensation process of all of the inter-prediction mode candidates. Specifically, the motion prediction compensation unit 88 detects motion vectors of all of the inter-prediction mode candidates based on the enhancement image supplied from the screen sorting buffer 72 and the reference image read from the frame memory 85 via the switch 86. Then, the motion prediction compensation unit 88 performs a compensation process on the reference image based on the motion vector to generate a predicted image.

At this time, the motion prediction compensation unit 88 calculates cost function values for all of the inter-prediction mode candidates based on the enhancement image supplied from the screen sorting buffer 72 and the predicted image and determines the inter-prediction mode with the minimum cost function value as an optimum inter-prediction mode. Then, the motion prediction compensation unit 88 supplies the predicted image corresponding to the cost function value of the optimum inter-prediction mode to the predicted image selection unit 89.

The motion prediction compensation unit 88 outputs the inter-prediction mode information, the corresponding motion vector, the reference image specifying information, and the like to the lossless coding unit 76 when the predicted image selection unit 89 notifies the motion prediction compensation unit 88 that the predicted image generated in the optimum inter-prediction mode is selected.

The predicted image selection unit 89 determines the prediction mode with the corresponding small cost function value as an optimum prediction mode between the optimum intra-prediction mode and the optimum inter-prediction mode based on the cost function values supplied from the intra-prediction unit 87 and the motion prediction compensation unit 88. Then, the predicted image selection unit 89 supplies the predicted image of the optimum prediction mode to the calculation unit 73 and the addition unit 81. The predicted image selection unit 89 notifies the intra-prediction unit 87 or the motion prediction compensation unit 88 that the predicted image of the optimum prediction mode is selected.

The rate control unit 90 controls a rate of a quantization operation of the quantization unit 75 based on the coded data accumulated in the accumulation buffer 77 so that overflow or underflow does not occur.

The up-sampling unit 91 acquires the decoded base image supplied from the base coding unit 31 in Fig. 10 and used as the reference image at the time of the coding of the base image. The up-sampling unit 91 converts the resolution of the base image into the resolution of the enhancement resolution and supplies the image to the gamut conversion unit 92.

The gamut conversion unit 92 converts the gamut of the base image supplied from the up-sampling unit 91 into the gamut of the enhancement image by the bit shift method, the fixed gain offset method, or the adaptive gain offset method. The gamut conversion unit 92 supplies the base image subjected to the gamut conversion to the adaptive offset unit 83. When the gamut is converted by the adaptive gain offset method, the gamut conversion unit 92 supplies the gains $g_1$ to $g_3$ and the offsets $o_1$ to $o_3$ to the lossless coding unit 76 so that the gains $g_1$ to $g_3$ and the offsets $o_1$ to $o_3$ are included in the coded information.

(Description of Units of Coding)

Fig. 13 is a diagram for describing a coding unit (CU) which is units of coding in the HEVC scheme.

Since an image with a large image frame such as an ultra high definition (UHD) of 4000 pixels x 2000 pixels is also a target in the HEVC scheme, it is not optimal to fix the size of units of coding to 16 pixels x 16 pixels. Accordingly, in the HEVC scheme, the CU is defined as units of coding.

The CU serves as a macro-block in the AVC scheme. Specifically, the CU is split into a prediction block (PU) which is units of intra-prediction or inter-prediction or is split into a conversion block (TU) which is units of orthogonal transform.

Here, the size of the CU is a square which is expressed by pixels of a variable power of two for each sequence. Specifically, the CU is set through bisecting the CU in the horizontal and vertical directions by any number of times so that an LCU which is the CU with the maximum size is not less than a smallest coding unit (SCU) which is the CU with the minimum size. That is, a size of an arbitrary layer when the size of an upper layer is layered to be 1/4 of the size of a lower layer until the LCU becomes the SCU is the size of the CU.

For example, in Fig. 13, the size of the LCU is 128 and the size of the SCU is 8. That is, a layer depth of the LCU is 0 to 4 and the number of layer depths is 5. That is, the number of splits corresponding to the CU is one of 0 to 4.

Information designating the sizes of the LCU and the SCU can be included in an SPS. The number of splits corresponding to the CU is designated by split_flag indicating whether each layer is further split. The details of the CU are described in NPL 1.

In the present specification, a coding tree unit (CTU) is assumed to be a unit including parameters when processing is performed with a coding tree block (CTB) of the LCU and an LCU base (level) thereof. The CU included in the CTU is assumed to be a unit including parameters when processing is performed with a CB (Coding Block) and a CU base (level) thereof.

(Example of Configuration of Adaptive Offset Unit)

Fig. 14 is a block diagram illustrating an example of the configuration of the adaptive offset unit 83 in Fig. 12.

The adaptive offset unit 83 in Fig. 14 includes a separation unit 111, an edge offset calculation unit 112, a band offset calculation unit 113, and a filter processing unit 114.

The separation unit 111 of the adaptive offset unit 83 determines a type of adaptive offset process for each LCU based on the enhancement image supplied from the deblocking filter 82 in Fig. 12 and the enhancement image output from the screen sorting buffer 72. The separation unit 111 supplies the type information regarding the determined type as offset information to the lossless coding unit 76 in Fig. 12.

When the determined type is the edge offset process, the separation unit 111 supplies the enhancement image from the deblocking filter 82 to the edge offset calculation unit 112. On the other hand, when the determined type is the band offset process, the separation unit 111 supplies the enhancement image from the deblocking filter 82 to the band offset calculation unit 113.

The edge offset calculation unit 112 determines the pattern of the adjacent pixels in the edge offset process based on the enhancement images output from the separation unit 111 and the screen sorting buffer 72 and calculates an offset for each category of the pixels. The edge offset calculation unit 112 supplies the offset and the pattern information regarding the determined pattern, and the enhancement image from the separation unit 111 to the filter processing unit 114. The edge offset calculation unit 112 supplies the offset and the pattern information as offset information to the lossless coding unit 76.

The band offset calculation unit 113 calculates a band in the band offset process and an offset in regard to the band based on the enhancement image from the separation unit 111 and the enhancement image output from the screen sorting buffer 72. The band offset calculation unit 113 supplies the offset and band information regarding the determined band, and the enhancement image from the separation unit 111 to the filter processing unit 114. The band offset calculation unit 113 supplies the offset of the enhancement image and the band information as offset information to the lossless coding unit 76.

The band offset calculation unit 113 calculates an offset in regard to the band determined in advance in the band offset process in the LCU unit based on the base image from the gamut conversion unit 92 in Fig. 12 and the enhancement image output from the screen sorting buffer 72. The band offset calculation unit 113 supplies the offset and the base image from the gamut conversion unit 92 to the filter processing unit 114. The band offset calculation unit 113 supplies, as offset information, the offset of the base image and type information indicating the band offset process as type information regarding the base image to the lossless coding unit 76.

The filter processing unit 114 performs a filter process on the enhancement image based on the pattern information and the offset of each category supplied from the edge offset calculation unit 112.

Specifically, the filter processing unit 114 determines adjacent pixels of each pixel of the enhancement image based on the pattern information and classifies the pixels into categories based on pixel values of the adjacent pixels. Then, the filter processing unit 114 determines the offset of each pixel of the enhancement image as the offset of the category into which this pixel is classified and performs the filter process on the enhancement image using the determined offset of each pixel.

The filter processing unit 114 sets the offset in regard to the band specified by the band information based on the offset and the band information of the enhancement image supplied from the band offset calculation unit 113. The filter processing unit 114 performs the filter process on the enhancement image using the set offset.

The filter processing unit 114 sets the offset of the base image supplied from the band offset calculation unit 113 as the offset in regard to the band determined in advance. The filter processing unit 114 performs the filter process on the predetermined band of the base image using the set offset. The filter processing unit 114 supplies the enhancement image subjected to the filter process to the adaptive loop filter 84 in Fig. 12 and supplies the base image subjected to the filter process to the frame memory 85.

(Description of Band Offset Process)

Fig. 15 is a diagram for describing a band offset process.

In the band offset process, as illustrated in Fig. 15, pixel values are equally divided into, for example, 32 bands. Then, an offset is set in a predetermined band among the 32 bands and the filter process is performed using the set offset. The number of bands in which the offset is set is determined in advance. For example, by specifying the lowest band among the bands, it is possible to specify the band in which the offset is set.

In the example of Fig. 15, the bit depth of the pixel values is 8 bits and the pixel values are values of 0 to 255. Accordingly, each band is formed with 8 pixel values. In the embodiment, the number of bands in which the offset is set is 4. Accordingly, by setting information specifying the 10th band from the lowest band as band information, the filter process can be performed on the 10th to 13th bands from the lowest band. That is, the filter process can be performed on the pixel values which are values of 80 to 112.

Through the above-described band offset process, it is possible to improve image-quality deterioration in which a pseudo-contour occurs in a flat image such as a void image.

(Band in Band Offset Process on Base Image)

Fig. 16 is a diagram illustrating bands in the band offset process of the base image.

In a low band or a high band, as described above, the relation between the luminance signal and the color difference signal in the gamut BT.2020 and the gamut BT.709 may not be approximated with Expression (1) or Expression (2). Accordingly, in the band offset process on the base image, the filter process is performed on the 4 lowest bands and the 4 highest bands.

The filter process may be performed only on any one of the 4 lowest bands and the 4 highest bands. The number of bands on which the filter process is performed may not be equal to the number of bands in the case of the enhancement image.

(Description of Edge Offset Process)

Fig. 17 is a diagram for describing the adjacent pixels in the edge offset process.

As illustrated in Fig. 17, the number of patterns of the adjacent pixels in the edge offset process is 4 types. Specifically, as illustrated in A of Fig. 17, a first pattern of the adjacent pixels is a pattern in which a pixel 131 adjacent on the left side of a processing target pixel 130 and a pixel 132 adjacent on the right side thereof are adjacent pixels. As illustrated in B of Fig. 17, a second pattern is a pattern in which a pixel 133 adjacent on the upper side of the pixel 130 and a pixel 134 adjacent on the lower side thereof are adjacent pixels.

As illustrated in C of Fig. 17, a third pattern is a pattern in which a pixel 135 adjacent on the upper left side of the pixel 130 and a pixel 136 adjacent on the lower right side thereof are adjacent pixels. As illustrated in D of Fig. 17, a fourth pattern is a pattern in which a pixel 137 adjacent on the upper right side of the pixel 130 and a pixel 138 adjacent on the lower left side thereof are adjacent pixels.

In the edge offset process, one of the first to fourth patterns is selected for each LCU and the pixels in the LCU are classified into the categories based on the pixel values of the adjacent pixels of the selected pattern. The pattern information of each LCU is transmitted as the offset information to the decoding device.

Fig. 18 is a diagram for describing categories in the edge offset process.

In the graphs of Fig. 18, the horizontal axis represents the processing target pixel and the adjacent pixels as an item and the vertical axis represents pixel values (luminance values).

As illustrated in Fig. 18, the number of categories into which processing target pixels are classified is 5. Specifically, as illustrated in A of Fig. 18, a first category is a category in which the pixel value of the processing target pixel is less than both of the pixel values of the adjacent pixels. As illustrated in B of Fig. 18, a second category is a category in which the pixel value of the processing target pixel is equal to one of the pixel values of the adjacent pixels and is less than the other pixel value.

As illustrated in C of Fig. 18, a third category is a category in which the pixel value of the processing target pixel is equal to one of the pixel values of the adjacent pixels and is greater than the other pixel value. As illustrated in D of Fig. 18, a fourth category is a category in which the pixel value of the processing target pixel is greater than both of the pixel values of the adjacent pixels. As illustrated in E of Fig. 18, a fifth category is a category in which the pixel value of the processing target pixel is greater than one of the pixel values of the adjacent pixels of the adjacent pixels and is less than the other pixel value.

An offset is calculated for the processing target pixels classified into the first to fourth categories and is transmitted as offset information to the decoding device. However, the positive or negative of the offset is fixed for each category, and thus information regarding the positive or negative of the offset is not transmitted. An offset is not calculated for the processing target pixel classified into the fifth category.

In the edge offset process, the filter process is performed on the pixels classified into the first to fourth categories using the calculated offsets. Thus, it is possible to reduce mosquito noise occurring in an edge circumference and to improve image quality.

(Example of Syntax of Offset Information)

Fig. 19 is a diagram illustrating an example of the syntax of the offset information.

As illustrated in the 2nd line of Fig. 19, a base flag (inter_layer_sao_flag) indicating whether the offset information is the offset information regarding the base image is set in the offset information. The base flag is 1 when the base flag indicates the offset information regarding the base image, and is 0 when the base flag does not indicate the offset information regarding the base image.

As illustrated in the 19th and 20th lines, when the conversion flag is 1 and the base flag is 1, 1 is set as type information (sao_type_idx_luma) regarding the adaptive offset process in regard to the corresponding luminance value of the LCU in the offset information.

That is, the band offset process is performed on the base image. Therefore, when the offset information is the offset information regarding the base image, 1 indicating the band offset process as the type of adaptive offset process is set as the type information.

As illustrated in Fig. 20, the type information is 1 when the type of adaptive offset process is the band offset process. However, the type information is 0 when the adaptive offset process is not performed. The type information is 2 when the type of adaptive offset process is the edge offset process. The conversion flag is set in the PPS, as illustrated in Fig. 8.

On the other hand, as illustrated in the 21st and 22nd lines, when the conversion flag is not 1 or the base flag is not 1, the type information (sao_type_idx_luma) is set in regard to the corresponding luminance value of the LCU in the offset information.

As in the case of the luminance value, as illustrated in the 25th and 26th lines, when the conversion flag is 1 and the base flag is 1, 1 is set as type information (sao_type_idx_chroma) in regard to the corresponding color difference value of the LCU in the offset information.

As illustrated in the 27th and 28th lines, when the conversion flag is not 1 or the base flag is not 1, the type information (sao_type_idx_luma) is set in regard to the corresponding color difference value of the LCU in the offset information.

As illustrated in the 30th and 32nd lines, when the type information is a value other than 0, an absolute value (sao_offset_abs) of the offset is set in the offset information. As illustrated in the 33rd and 37th lines, when the type information is 1, a sign (sao_offset_sign) of the offset is set and band information (sao_band_position) is set.

On the other hand, as illustrated in the 38th to 42nd lines, when the type information is a value other than 0 and is not 1, that is, the type information is 2, pattern information (sao_eo_class_luma and sao_eo_class_chroma) is set.

(Description of Process of Coding Device)

Fig. 21 is a flowchart for describing the layer coding process of the coding device 30 in Fig. 10.

In step S11 of Fig. 21, the base coding unit 31 of the coding device 30 codes the base image input from the outside according to the HEVC scheme and generates the base stream by adding the parameter set. Then, the base coding unit 31 supplies the base stream to the combining unit 33.

In step S12, the base coding unit 31 supplies the base image decoded to be used as the reference image to the enhancement coding unit 32.

In step S13, the setting unit 51 (see Fig. 11) of the enhancement coding unit 32 sets the parameter set of the enhancement image. In step S14, the up-sampling unit 91 (see Fig. 12) of the coding unit 52 converts the resolution of the base image supplied from the base coding unit 31 into the resolution of the enhancement image and supplies the converted image to the gamut conversion unit 92.

In step S15, the gamut conversion unit 92 converts the gamut of the base image supplied from the up-sampling unit 91 into the gamut of the enhancement image by the bit shift method, the fixed gain offset method, or the adaptive gain offset method. The gamut conversion unit 92 supplies the base image subjected to the gamut conversion to the adaptive offset unit 83.

In step S16, the coding unit 52 performs the enhancement coding process of coding the enhancement image input from the outside using the base image subjected to the gamut conversion. The details of the enhancement coding process will be described with reference to Figs. 22 and 23 to be described below.

In step S17, the generation unit 78 (see Fig. 12) of the coding unit 52 generates the enhancement stream from the coded data generated in step S16 and the parameter set supplied from the setting unit 51 and supplies the enhancement stream to the combining unit 33.

In step S18, the combining unit 33 combines the base stream supplied from the base coding unit 31 and the enhancement stream supplied from the enhancement coding unit 32 to generate the coded stream of all of the layers. The combining unit 33 supplies the coded stream of all of the layers to the transmission unit 34.

In step S19, the transmission unit 34 transmits the coded stream of all of the layers supplied from the combining unit 33 to the decoding device to be described.

Figs. 22 and 23 are flowcharts for describing the details of the enhancement coding process of step S16 of Fig. 21.

In step S31 of Fig. 22, the A/D conversion unit 71 of the coding unit 52 performs the A/D conversion on the input enhancement image in units of frames and outputs the enhancement image to the screen sorting buffer 72 to store the enhancement image.

In step S32, the screen sorting buffer 72 sequentially sorts the enhancement images of the frames in the stored display order for the purpose of the coding according to the GOP structure. The screen sorting buffer 72 supplies the sorted enhancement image in units of frames to the calculation unit 73, the intra-prediction unit 87, and the motion prediction compensation unit 88.

In step S33, the intra-prediction unit 87 performs the intra-prediction process of all of the intra-prediction mode candidates. The intra-prediction unit 87 calculates the cost function value in regard to all of the intra-prediction mode candidates based on the enhancement image read from the screen sorting buffer 72 and the predicted image generated as the result of the intra-prediction process. The intra-prediction unit 87 determines the intra-prediction mode with the minimum cost function value as the optimum intra-prediction mode. The intra-prediction unit 87 supplies the predicted image generated in the optimum intra-prediction mode and the corresponding cost function value to the predicted image selection unit 89.

The motion prediction compensation unit 88 performs the motion prediction compensation process of all of the inter-prediction mode candidates. The motion prediction compensation unit 88 calculates the cost function value in all of the inter-prediction mode candidates based on the enhancement image and the predicted image supplied from the screen sorting buffer 72 and determines the inter-prediction mode with the minimum cost function value as the optimum inter-prediction mode. The motion prediction compensation unit 88 supplies the cost function value of the optimum inter-prediction mode and the corresponding predicted image to the predicted image selection unit 89.

In step s34, the predicted image selection unit 89 determines, as the optimum prediction mode, the prediction mode with the minimum cost function value between the optimum intra-prediction mode and the optimum inter-prediction mode based on the cost function values supplied from the intra-prediction unit 87 and the motion prediction compensation unit 88. Then, the predicted image selection unit 89 supplies the predicted image of the optimum prediction mode to the calculation unit 73 and the addition unit 81.

In step S35, the predicted image selection unit 89 determines whether the optimum prediction mode is the optimum inter-prediction mode. When the predicted image selection unit 89 determines in step S35 that the optimum prediction mode is the optimum inter-prediction mode, the predicted image selection unit 89 notifies the motion prediction compensation unit 88 that the predicted image generated in the optimum inter-prediction mode is selected.

Then, in step S36, the motion prediction compensation unit 88 supplies the inter-prediction mode information, the corresponding motion vector, and the reference image specifying information to the lossless coding unit 76, and then the process proceeds to step S38.

Conversely, when the predicted image selection unit 89 determines in step S35 that the optimum prediction mode is not the optimum inter-prediction mode, that is, the optimum prediction mode is the optimum intra-prediction mode, the predicted image selection unit 89 notifies the intra-prediction unit 87 that the predicted image generated in the optimum intra-prediction mode is selected.

Then, in step S37, the intra-prediction unit 87 supplies the intra-prediction mode information to the lossless coding unit 76, and then the process proceeds to step S38.

In step S38, the calculation unit 73 performs the coding of subtracting the predicted image supplied from the predicted image selection unit 89 from the enhancement image supplied from the screen sorting buffer 72. The calculation unit 73 outputs the image obtained as the result as the residual information to the orthogonal transform unit 74.

In step S39, the orthogonal transform unit 74 performs the orthogonal transform on the residual information from the calculation unit 73 and supplies the orthogonal transform coefficient obtained as the result to the quantization unit 75.

In step S40, the quantization unit 75 quantizes the coefficient supplied from the orthogonal transform unit 74 and supplies the coefficient obtained as the result to the lossless coding unit 76 and the inverse quantization unit 79.

In step S41 of Fig. 23, the inverse quantization unit 79 inversely quantizes the quantized coefficient supplied from the quantization unit 75 and supplies the orthogonal transform coefficient obtained as the result to the inverse orthogonal transform unit 80.

In step S42, the inverse orthogonal transform unit 80 performs the inverse orthogonal transform on the orthogonal transform coefficient supplied from the inverse quantization unit 79 and supplies the residual information obtained as the result to the addition unit 81.

In step S43, the addition unit 81 adds the residual information supplied from the inverse orthogonal transform unit 80 and the predicted image supplied from the predicted image selection unit 89 to obtain the locally decoded enhancement image. The addition unit 81 supplies the obtained enhancement image to the deblocking filter 82 and also supplies the obtained enhancement image to the frame memory 85.

In step S44, the deblocking filter 82 performs the deblocking filter process on the locally decoded enhancement image supplied from the addition unit 81. The deblocking filter 82 supplies the enhancement image obtained as the result to the adaptive offset unit 83.

In step S45, the adaptive offset unit 83 performs the adaptive offset process on the enhancement image supplied from the deblocking filter 82 and the base image supplied from the gamut conversion unit 92 for each LCU. The details of the adaptive offset process will be described with reference to Fig. 24 to be described below.

In step S46, the adaptive loop filter 84 performs the adaptive loop filter process on the enhancement image supplied from the adaptive offset unit 83 for each LCU. The adaptive loop filter 84 supplies the enhancement image obtained as the result to the frame memory 85. The adaptive loop filter 84 supplies the filter coefficient used in the adaptive loop filter process to the lossless coding unit 76.

In step S47, the frame memory 85 accumulates the enhancement image supplied from the adaptive loop filter 84, the enhancement image supplied from the addition unit 81, and the base image supplied from the adaptive offset unit 83. The images accumulated in the frame memory 85 are output as the reference images to the intra-prediction unit 87 or the motion prediction compensation unit 88 via the switch 86.

In step S48, the lossless coding unit 76 performs the lossless coding on the intra-prediction mode information or the inter-prediction mode information, the motion vector, the reference image specifying information, the offset information, and the filter coefficient as the coded information.

In step S49, the lossless coding unit 76 performs the lossless coding on the quantized coefficient supplied from the quantization unit 75. Then, the lossless coding unit 76 generates the coded data from the coded information subjected to the lossless coding in the process of step S48 and the coefficient subjected to the lossless coding and supplies the coded data to the accumulation buffer 77.

In step S50, the accumulation buffer 77 temporarily accumulates the coded data supplied from the lossless coding unit 76.

In step S51, the rate control unit 90 controls the rate of the quantization operation of the quantization unit 75 based on the coded data accumulated in the accumulation buffer 77 so that overflow or underflow does not occur.

In step S52, the accumulation buffer 77 outputs the stored coded data to the generation unit 78. Then, the process returns to step S16 of Fig. 21 and proceeds to step S17.

In the coding process of Figs. 22 and 23, the intra-prediction process and the motion prediction compensation process have been performed normally to facilitate the description. However, in practice, only one of the intra-prediction process and the motion prediction compensation process is performed by a type of picture or the like in some cases.

Fig. 24 is a flowchart for describing the details of the adaptive offset process of step S45 of Fig. 22.

In step S71 of Fig. 24, the separation unit 111 (see Fig. 14) of the adaptive offset unit 83 determines the type of adaptive offset process on the enhancement image based on the enhancement images from the deblocking filter 82 and the screen sorting buffer 72. The separation unit 111 supplies the type information regarding the determined type as the offset information to the lossless coding unit 76.

In step S72, the separation unit 111 determines whether the type of adaptive offset process determined in step S71 is the edge offset process. When the separation unit 111 determines in step S72 that the type of adaptive offset process is the edge offset process, the separation unit 111 supplies the enhancement image from the deblocking filter 82 to the edge offset calculation unit 112.

Then, in step S73, the edge offset calculation unit 112 determines the pattern of the adjacent pixels in the edge offset process based on the enhancement images from the separation unit 111 and the screen sorting buffer 72 and calculates the offset of each category. The edge offset calculation unit 112 supplies the offset, the pattern information, and the enhancement image from the separation unit 111 to the filter processing unit 114.

In step S74, the edge offset calculation unit 112 outputs the pattern information and the offset as the offset information to the lossless coding unit 76.

In step S75, the filter processing unit 114 performs the filter process on the enhancement image based on the offset and the pattern information supplied from the edge offset calculation unit 112. Then, the filter processing unit 114 supplies the enhancement image subjected to the filter process to the adaptive loop filter 84 in Fig. 12, and then the process proceeds to step S79.

Conversely, when the separation unit 111 determines in step S75 that the type of adaptive offset process is not the edge offset process, that is, the type of adaptive offset process determined in step S71 is the band offset process, the separation unit 111 supplies the enhancement image from the deblocking filter 82 to the band offset calculation unit 113.

Then, in step S76, the band offset calculation unit 113 determines the band in the band offset process based on the enhancement images from the separation unit 111 and the screen sorting buffer 72 and calculates the offset in regard to the band. The band offset calculation unit 113 supplies the offset, the band information, and the enhancement image from the separation unit 111 to the filter processing unit 114.

In step S77, the band offset calculation unit 113 supplies the offset and the band information regarding the enhancement image as the offset information to the lossless coding unit 76.

In step S78, the filter processing unit 114 performs the filter process on the enhancement image based on the offset and the band information regarding the enhancement image supplied from the band offset calculation unit 113. Then, the filter processing unit 114 supplies the enhancement image subjected to the filter process to the adaptive loop filter 84 in Fig. 12, and then the process proceeds to step S79.

In step S79, the band offset calculation unit 113 calculates the offset of the base image in regard to the band determined in advance in the band offset process based on the base image from the gamut conversion unit 92 in Fig. 12 and the enhancement image output from the screen sorting buffer 72. The band offset calculation unit 113 supplies the offset and the base image from the gamut conversion unit 92 to the filter processing unit 114. The band offset calculation unit 113 supplies, as the offset information, the offset of the base image and the type information indicating the band offset process as the type information regarding the base image to the lossless coding unit 76.

In step S80, the filter processing unit 114 performs the filter process on the base image based on the offset of the base image supplied from the band offset calculation unit 113. The filter processing unit 114 supplies the base image subjected to the filter process to the frame memory 85.

As described above, the coding device 30 converts the gamut of the base image referred to at the time of the coding of the enhancement image into the gamut of the enhancement image and performs the filter process on the predetermined band of the base image subjected to the gamut conversion. Accordingly, it is possible to improve the accuracy of the base image subjected to the gamut conversion in a low band or a high band in which the linear approximation of the gamut conversion is not established and to code the enhancement image using the high-definition base image subjected to the gamut conversion. As a result, the coding efficiency is improved.

In the coding device 30, the adaptive offset unit 83 performing the adaptive offset process on the enhancement image also performs the band offset process on the base image. Therefore, it is possible to improve the coding efficiency without an increase in a circuit size.

(Example of Configuration of Decoding Device of Embodiment)

Fig. 25 is a block diagram illustrating an example of the configuration of the decoding device decoding the coded stream of all of the layers transmitted from the coding device 30 in Fig. 10 in an embodiment to which the present disclosure is applied.

A decoding device 160 in Fig. 25 includes a reception unit 161, a separation unit 162 a base decoding unit 163, and an enhancement decoding unit 164.

The reception unit 161 receives the coded stream of all of the layers transmitted from the coding device 30 in Fig. 10 and supplies the coded stream to the separation unit 162.

The separation unit 162 separates the base stream from the coded stream of all of the layers supplied from the reception unit 161 to supply the base stream to the base decoding unit 163 and separates the enhancement stream from the coded stream of all of the layers to supply the enhancement stream to the enhancement decoding unit 164.

The base decoding unit 163 is configured as in a decoding device of the HEVC scheme of the related art and decodes the base stream supplied from the separation unit 162 according to the HEVC scheme to generate the base image. The base decoding unit 163 supplies the base image to the enhancement decoding unit 164 and outputs the base image.

The enhancement decoding unit 164 decodes the enhancement stream supplied from the separation unit 162 according to a scheme conforming to the HEVC scheme to generate the enhancement image. At this time, the enhancement decoding unit 164 refers to the base image supplied from the base decoding unit 163, as necessary. The enhancement decoding unit 164 outputs the generated enhancement image.

(Example of Configuration of Enhancement Coding Unit)

Fig. 26 is a block diagram illustrating an example of the configuration of the enhancement decoding unit 164 in Fig. 25.

The enhancement decoding unit 164 in Fig. 26 includes an extraction unit 181 and a decoding unit 182.

The extraction unit 181 of the enhancement decoding unit 164 extracts the parameter set and the coded data from the enhancement stream supplied from the separation unit 162 in Fig. 25 and supplies the parameter set and the coded data to the decoding unit 182.

Referring to the base image supplied from the base decoding unit 163 in Fig. 25, the decoding unit 182 decodes the coded data supplied from the extraction unit 181 according to a scheme conforming to the HEVC scheme. At this time, the decoding unit 182 refers to the parameter set supplied from the extraction unit 181, as necessary. The decoding unit 182 outputs the enhancement image obtained as the result of the decoding.

(Example of Configuration of Decoding Unit)

Fig. 27 is a block diagram illustrating an example of the configuration of the decoding unit 182 in Fig. 26.

The decoding unit 182 in Fig. 27 includes an accumulation buffer 201, a lossless decoding unit 202, an inverse quantization unit 203, an inverse orthogonal transform unit 204, an addition unit 205, a deblocking filter 206, an adaptive offset unit 207, an adaptive loop filter 208, a screen sorting buffer 209, a D/A conversion unit 210, a frame memory 211, a switch 212, an intra-prediction unit 213, a motion compensation unit 214, a switch 215, an up-sampling unit 216, and a gamut conversion unit 217.

The accumulation buffer 201 of the decoding unit 182 receives and accumulates the coded data from the extraction unit 181 in Fig. 26. The accumulation buffer 201 supplies the accumulated coded data to the lossless decoding unit 202.

The lossless decoding unit 202 obtains the quantized coefficient and the coded information by performing lossless decoding corresponding to the lossless coding of the lossless coding unit 76 in Fig. 12, such as variable-length decoding or arithmetic decoding, on the coded data from the accumulation buffer 201. The lossless decoding unit 202 supplies the quantized coefficient to the inverse quantization unit 203. The lossless decoding unit 202 supplies the intra-prediction mode information as the coded information to the intra-prediction unit 213 and supplies the inter-prediction mode information, the motion vector, the reference image specifying information, and the like to the motion compensation unit 214.

When the inter-prediction mode information is not included in the coded information, the lossless decoding unit 202 instructs the switch 215 to select the intra-prediction unit 213. When the inter-prediction mode information is included, the lossless decoding unit 202 instructs the switch 215 to select the motion compensation unit 214. The lossless decoding unit 202 supplies the offset information as the coded information to the adaptive offset unit 207 and supplies the filter coefficient to the adaptive loop filter 208.

The inverse quantization unit 203, the inverse orthogonal transform unit 204, the addition unit 205, the deblocking filter 206, the adaptive offset unit 207, the adaptive loop filter 208, the frame memory 211, the switch 212, the intra-prediction unit 213, the motion compensation unit 214, the up-sampling unit 216, and the gamut conversion unit 217 perform the same processes as the inverse quantization unit 79, the inverse orthogonal transform unit 80, the addition unit 81, the deblocking filter 82, the adaptive offset unit 83, the adaptive loop filter 84, the frame memory 85, the switch 86, the intra-prediction unit 87, the motion prediction compensation unit 88, the up-sampling unit 91, and the gamut conversion unit 92 in Fig. 12, respectively, so that the image is decoded.

Specifically, the inverse quantization unit 203 inversely quantizes the coefficient quantized by the lossless decoding unit 202 and supplies an orthogonal transform coefficient obtained as the result to the inverse orthogonal transform unit 204.

The inverse orthogonal transform unit 204 performs inverse orthogonal transform on the orthogonal transform coefficient from the inverse quantization unit 203. The inverse orthogonal transform unit 204 supplies the residual information obtained as the result of the inverse orthogonal transform to the addition unit 205.

The addition unit 205 functions as a decoding unit and performs decoding by adding the residual information as a decoding target image supplied from the inverse orthogonal transform unit 204 and the predicted image supplied from the switch 215. The addition unit 205 supplies the enhancement image obtained as the result of the decoding to the deblocking filter 206 and also supplies the enhancement image to the frame memory 211. When the predicted image is not supplied from the switch 215, the addition unit 205 supplies the image which is the residual information supplied from the inverse orthogonal transform unit 204 as the enhancement image obtained as the result of the decoding to the deblocking filter 206 and supplies the image to the frame memory 211 to accumulate the image.

The deblocking filter 206 performs the deblocking filter process on the enhancement image supplied from the addition unit 205 and supplies the enhancement image obtained as the result to the adaptive offset unit 207.

The adaptive offset unit 207 performs the adaptive offset process on the enhancement image from the deblocking filter 206 for each LCU using the offset information of the enhancement image supplied from the lossless decoding unit 202. The adaptive offset unit 207 supplies the enhancement image subjected to the adaptive offset process to the adaptive loop filter 208.

The adaptive offset unit 207 performs the band offset process on the base image supplied from the gamut conversion unit 217 for each LCU using the offset information regarding the base image and supplies the base image obtained as the result to the frame memory 211.

The adaptive loop filter 208 performs the adaptive loop filter process on the enhancement image supplied from the adaptive offset unit 207 for each LCU using the filter coefficient supplied from the lossless decoding unit 202. The adaptive loop filter 208 supplies the enhancement image obtained as the result to the frame memory 211 and the screen sorting buffer 209.

The screen sorting buffer 209 stores the enhancement image supplied from the adaptive loop filter 208 in units of frames. The screen sorting buffer 209 sorts the enhancement images in units of frames in a stored coding order in the original display order and supplies the enhancement images to the D/A conversion unit 210.

The D/A conversion unit 210 performs the D/A conversion on the enhancement image of units of frames supplied from the screen sorting buffer 209 and outputs the enhancement image.

The frame memory 211 accumulates the enhancement image supplied from the adaptive loop filter 208, the enhancement image supplied from the addition unit 205, and the base image supplied from the gamut conversion unit 217. The base image or the enhancement image accumulated in the frame memory 211 is read as a reference image and is supplied to the intra-prediction unit 213 or the motion compensation unit 214 via the switch 212.

The intra-prediction unit 213 performs the intra-prediction of the optimum intra-prediction mode indicated by the intra-prediction mode information supplied from the lossless decoding unit 202 using the reference image read from the frame memory 211 via the switch 212. The intra-prediction unit 213 supplies a predicted image generated as the result to the switch 215.

The motion compensation unit 214 reads the reference image specified by the reference image specifying information supplied from the lossless decoding unit 202, from the frame memory 211 via the switch 212. The motion compensation unit 214 performs a motion compensation process of the optimum inter-prediction mode indicated by the inter-prediction mode information supplied from the lossless decoding unit 202 using the motion vector and the reference image supplied from the lossless decoding unit 202. The motion compensation unit 214 supplies the predicted image generated as the result to the switch 215.

When the switch 215 is instructed to select the intra-prediction unit 213 from the lossless decoding unit 202, the switch 215 supplies the predicted image supplied from the intra-prediction unit 213 to the addition unit 205. On the other hand, when the switch 215 is instructed to select the motion compensation unit 214 from the lossless decoding unit 202, the switch 215 supplies the predicted image supplied from the motion compensation unit 214 to the addition unit 205.

The up-sampling unit 216 acquires the base image supplied from the base decoding unit 163 in Fig. 25. As in the up-sampling unit 91 in Fig. 12, the up-sampling unit 216 converts the resolution of the base image into the resolution of the enhancement image and supplies the converted image to the gamut conversion unit 217.

The gamut conversion unit 217 converts the gamut of the base image supplied from the up-sampling unit 216 into the gamut of the enhancement image by the bit shift method, the fixed gain offset method, or the adaptive gain offset method. The gamut conversion unit 217 supplies the base image subjected to the gamut conversion to the adaptive offset unit 207.

(Example of Configuration of Adaptive Offset Unit)

Fig. 28 is a block diagram illustrating an example of the configuration of the adaptive offset unit 207 in Fig. 27.

The adaptive offset unit 207 in Fig. 28 includes a separation unit 231, an edge offset acquisition unit 232, a band offset acquisition unit 233, and a filter processing unit 234.

When the type information of the offset information of the enhancement image supplied from the lossless decoding unit 202 in Fig. 27 is 2, the separation unit 231 of the adaptive offset unit 207 supplies the enhancement image from the deblocking filter 206 to the edge offset acquisition unit 232. On the other hand, when the type information of the offset information of the enhancement image is 1, the separation unit 231 supplies the enhancement image from the deblocking filter 82 to the band offset acquisition unit 233.

When the type information of the offset information of the enhancement image is 0, the separation unit 231 supplies the enhancement image from the deblocking filter 206 to the adaptive loop filter 208 in Fig. 27 without change.

The edge offset acquisition unit 232 acquires the pattern information and the offset of each category included in the offset information of the enhancement image from the lossless decoding unit 202 and supplies the pattern information and the offset to the filter processing unit 234. The edge offset acquisition unit 232 supplies the enhancement image supplied from the separation unit 231 to the filter processing unit 234.

The band offset acquisition unit 233 acquires the band information and the offset included in the offset information of the enhancement image from the lossless decoding unit 202 and supplies the band information and the offset to the filter processing unit 234. The edge offset acquisition unit 232 supplies the enhancement image supplied from the separation unit 231 to the filter processing unit 234.

The band offset acquisition unit 233 acquires the offset included in the offset information of the base image from the lossless decoding unit 202 and supplies the offset to the filter processing unit 234. The band offset acquisition unit 233 supplies the base image supplied from the base decoding unit 163 in Fig. 25 to the filter processing unit 234.

The filter processing unit 234 performs the filter process on the enhancement image based on the offset of each category and the pattern information supplied from the edge offset acquisition unit 232, as in the filter processing unit 114 in Fig. 14.

The filter processing unit 234 performs the filter process on the enhancement image based on the offset and the band information regarding the enhancement image supplied from the band offset acquisition unit 233, as in the filter processing unit 114.

The filter processing unit 234 performs the filter process using the offset in regard to the predetermined band of the base image based on the offset of the base image supplied from the band offset acquisition unit 233, as in the filter processing unit 114. The filter processing unit 234 supplies the enhancement image subjected to the filter process to the adaptive loop filter 208 in Fig. 27 and supplies the base image subjected to the filter process to the frame memory 211.

(Description of Process of Decoding Device)

Fig. 29 is a flowchart illustrating a layer decoding process of the decoding device 160 in Fig. 25.

In step S111 of Fig. 29, the reception unit 161 of the decoding device 160 receives the coded stream of all of the layers transmitted from the coding device 30 in Fig. 10 and supplies the coded stream to the separation unit 162.

In step S112, the separation unit 162 separates the base stream and the enhancement stream from the coded stream of all of the layers. The separation unit 162 supplies the base stream to the base decoding unit 163 and supplies the enhancement stream to the enhancement decoding unit 164.

In step S113, the base decoding unit 163 decodes the base stream supplied from the separation unit 162 according to the HEVC scheme to generate the base image. The base decoding unit 163 supplies the generated base image to the enhancement decoding unit 164 and outputs the base image.

In step S114, the extraction unit 181 (see Fig. 26) of the enhancement decoding unit 164 extracts the parameter set and the coded data from the enhancement stream supplied from the separation unit 162.

In step S115, the up-sampling unit 216 (see Fig. 27) of the decoding unit 182 converts the resolution of the base image supplied from the base decoding unit 163 into the resolution of the enhancement image and supplies the converted image to the gamut conversion unit 217.

In step S116, the gamut conversion unit 217 converts the gamut of the base image supplied from the up-sampling unit 216 into the gamut of the enhancement image by the bit shift method, the fixed gain offset method, and the adaptive gain offset method. The gamut conversion unit 217 supplies the base image subjected to the gamut conversion to the adaptive offset unit 207.

In step S117, the decoding unit 182 performs an enhancement decoding process of decoding the coded data supplied from the extraction unit 181 according to a scheme conforming to the HEVC scheme with reference to the base image subjected to the gamut conversion. The details of the enhancement decoding process will be described with reference to Fig. 30 to be described below. Then, the process ends.

Fig. 30 is a flowchart for describing the details of the enhancement decoding process of step S117 of Fig. 29.

In step S130 of Fig. 30, the accumulation buffer 201 (see Fig. 27) of the enhancement decoding unit 182 receives and accumulates the coded data in units of frames from the extraction unit 181 in Fig. 26. The accumulation buffer 201 supplies the accumulated coded data to the lossless decoding unit 202.

In step S131, the lossless decoding unit 202 performs lossless decoding on the coded data from the accumulation buffer 201 to obtain the quantized coefficient and the coded information. The lossless decoding unit 202 supplies the quantized coefficient to the inverse quantization unit 203. The lossless decoding unit 202 supplies the intra-prediction mode information serving as the coded information to the intra-prediction unit 213 and supplies the inter-prediction mode information, the motion vector, the reference image specifying information, and the like to the motion compensation unit 214.

When the inter-prediction mode information is not included in the coded information, the lossless decoding unit 202 instructs the switch 215 to select the intra-prediction unit 213. When the inter-prediction mode information is included, the lossless decoding unit 202 instructs the switch 215 to select the motion compensation unit 214. The lossless decoding unit 202 supplies the offset information serving as the coded information to the adaptive offset unit 207 and supplies the filter coefficient to the adaptive loop filter 208.

In step S132, the inverse quantization unit 203 inversely quantizes the quantized coefficient from the lossless decoding unit 202 and supplies the orthogonal transform coefficient obtained as the result to the inverse orthogonal transform unit 204. In step S133, the inverse orthogonal transform unit 204 performs the inverse orthogonal transform on the orthogonal transform coefficient from the inverse quantization unit 203 and supplies the residual information obtained as the result to the addition unit 205.

In step S134, the motion compensation unit 214 determines whether the inter-prediction mode information is supplied from the lossless decoding unit 202. When it is determined in step S134 that the inter-prediction mode information is supplied, the process proceeds to step S135.

In step S135, the motion compensation unit 214 reads the reference image based on the reference image specifying information supplied from the lossless decoding unit 202 and performs the motion compensation process of the optimum inter-prediction mode indicated by the inter-prediction mode information using the motion vector and the reference image. The motion compensation unit 214 supplies the predicted image generated as the result to the addition unit 205 via the switch 215, and the process proceeds to step S137.

Conversely, when it is determined in step S134 that the inter-prediction mode information is not supplied, that is, the intra-prediction mode information is supplied to the intra-prediction unit 213, the process proceeds to step S136.

In step S136, the intra-prediction unit 213 performs the intra-prediction process using the reference image read from the frame memory 211 via the switch 212. The intra-prediction unit 213 supplies the predicted image generated as the result to the addition unit 205 via the switch 215, and the process proceeds to step S137.

In step S137, the addition unit 205 adds the residual information supplied from the inverse orthogonal transform unit 204 and the predicted image supplied from the switch 215. The addition unit 205 supplies the enhancement image obtained as the result to the deblocking filter 206 and supplies the enhancement image to the frame memory 211.

In step S138, the deblocking filter 206 performs the deblocking filter process on the enhancement image supplied from the addition unit 205 to remove block distortion. The deblocking filter 206 supplies the enhancement image obtained as the result to the adaptive offset unit 207.

In step S139, the adaptive offset unit 207 performs the adaptive offset process on the enhancement image supplied from the deblocking filter 206 and the base image supplied from the gamut conversion unit 92 for each LCU. The details of the adaptive offset process will be described with reference to Fig. 31 to be described below.

In step S140, the adaptive loop filter 208 performs the adaptive loop filter process on the enhancement image supplied from the adaptive offset unit 207 for each LCU using the filter coefficient supplied from the lossless decoding unit 202. The adaptive loop filter 208 supplies the enhancement image obtained as the result to the frame memory 211 and the screen sorting buffer 209.

In step S141, the frame memory 211 accumulates the enhancement image supplied from the addition unit 205, the enhancement image supplied from the adaptive loop filter 208, and the base image supplied from the adaptive offset unit 207. The base image or the enhancement image accumulated in the frame memory 211 is supplied as the reference image to the intra-prediction unit 213 or the motion compensation unit 214 via the switch 212.

In step S142, the screen sorting buffer 209 stores the enhancement image supplied from the adaptive loop filter 208 in units of frames, sorts the enhancement images in units of frames in the stored coding order in the original display order, and supplies the enhancement images to the D/A conversion unit 210.

In step S143, the D/A conversion unit 210 performs the D/A conversion on the enhancement image of units of frames supplied from the screen sorting buffer 209 and outputs the enhancement image. Then, the process returns to step S117 of Fig. 29 and ends.

Fig. 31 is a flowchart for describing the details of the adaptive offset process of step S139 of Fig. 30.

In step S161 of Fig. 31, the separation unit 231 (see Fig. 28) of the adaptive offset unit 207 acquires the type information included in the offset information regarding the enhancement image supplied from the lossless decoding unit 202 in Fig. 27.

When the type information is 2 in step S162, the separation unit 231 supplies the enhancement image from the deblocking filter 206 to the edge offset acquisition unit 232, and then the process proceeds to step S163.

In step S163, the edge offset acquisition unit 232 acquires the offset of each category and the pattern information included in the offset information of the enhancement image from the lossless decoding unit 202 and supplies the offset and the pattern information to the filter processing unit 234. The edge offset acquisition unit 232 supplies the enhancement image supplied from the separation unit 231 to the filter processing unit 234.

In step S164, the filter processing unit 234 performs the filter process on the enhancement image based on the offset of each category and the pattern information supplied from the edge offset acquisition unit 232. The filter processing unit 234 supplies the enhancement image subjected to the filter process to the adaptive loop filter 208 in Fig. 27, and then the process proceeds to step S168.

Conversely, when it is determined in step S162 that the type information is not 2, the separation unit 231 determines in step S165 whether the type information is 1. When it is determined in step S165 that the type information is 1, the separation unit 231 supplies the enhancement image from the deblocking filter 82 to the band offset acquisition unit 233.

In step S166, the band offset acquisition unit 233 acquires the offset and the band information included in the offset information of the enhancement image from the lossless decoding unit 202 and supplies the offset and the band information to the filter processing unit 234. The edge offset acquisition unit 232 supplies the enhancement image supplied from the separation unit 231 to the filter processing unit 234.

In step S167, the filter processing unit 234 performs the filter process on the enhancement image based on the offset and the band information regarding the enhancement image supplied from the band offset acquisition unit 233. The filter processing unit 234 supplies the enhancement image subjected to the filter process to the adaptive loop filter 208, and then the process proceeds to step S168.

When it is determined in step S165 that the type information is not 1, that is, the type information is 0, the separation unit 231 supplies the enhancement image from the deblocking filter 206 to the adaptive loop filter 208 in Fig. 27 without change, and then the process proceeds to step S168.

In step S168, the band offset acquisition unit 233 acquires the offset included in the offset information of the base image from the lossless decoding unit 202 and supplies the offset to the filter processing unit 234. The band offset acquisition unit 233 supplies the base image supplied from the base decoding unit 163 in Fig. 25 to the filter processing unit 234.

In step S169, the filter processing unit 234 performs the filter process using the offset in regard to the predetermined band of the base image based on the offset of the base image supplied from the band offset acquisition unit 233. The filter processing unit 234 supplies the base image subjected to the filter process to the frame memory 211. Then, the process returns to step S139 of Fig. 30 and proceeds to step S140.

As described above, the decoding device 160 converts the gamut of the base image referred to at the time of the decoding of the enhancement image into the gamut of the enhancement image and performs the filter process in regard to the predetermined band of the base image subjected to the gamut conversion. Accordingly, it is possible to improve the accuracy of the base image subjected to the gamut conversion in a low band or a high band in which the linear approximation of the gamut conversion is not established and to decode the enhancement image using the high-definition base image subjected to the gamut conversion. As a result, it is possible to decode the enhancement stream which is generated by the coding device 30 and of which the coding efficiency is improved.

In the first embodiment, the number of layers is assumed to be 2, but the number of layers may be 2 or more.

In the first embodiment, the base image has been coded according to the HEVC scheme, but the base image may be coded according to an AVC scheme.

In the first embodiment, the adaptive offset process has necessarily been performed on the base image subjected to the gamut conversion, but the adaptive offset process may be performed, as necessary. In this case, when the adaptive offset process is not performed, the type information of the offset information regarding the base image is considered to be 0.

In the first embodiment, the band offset process has been performed on the base image, but another filter process may be performed.

In the first embodiment, the band in the band offset process on the base image has been fixed, but the band may be variable. In this case, as in the case of the enhancement image, band information is transmitted from the coding device 30 to the decoding device 160.

In the first embodiment, the type information regarding the base image has been included in the offset information. However, the type information regarding the base image may not be included in the offset information, but the adaptive offset process may be performed by setting the type information regarding the base image to 1.

<Another Example of Coding by Scalable Function>

Fig. 32 is a diagram illustrating another example of the coding by the scalable function.

As illustrated in Fig. 32, in the coding by the scalable function, a difference in a quantization parameter can also be taken in layers (the same layer).

(1) base-layer:

(1-1) dQP (base layer) = Current_CU_QP (base layer) - LCU_QP (base layer)

(1-2) dQP (base layer) = Current_CU_QP (base layer) - Previous_CU_QP (base layer)

(1-3) dQP (base layer) = Current_CU_QP (base layer) - Slice_QP (base layer)

(2) non-base-layer:

(2-1) dQP (non-base layer) = Current_CU_QP (non-base layer) - LCU_QP (non-base layer)

(2-2) dQP (non-base layer) = CurrentQP (non-base layer) - PreviousQP (non-base layer)

(2-3) dQP (non-base layer) = Current_CU_QP (non-base layer) - Slice_QP (non-base layer)

A difference in the quantization parameter can also be taken in layers (different layers).

(3) base-layer/non-base layer:

(3-1) dQP (inter-layer) = Slice_QP (base layer) - Slice_QP (non-base layer)

(3-2) dQP (inter-layer) = LCU_QP (base layer) - LCU_QP (non-base layer)

(4) non-base layer/non-base layer:

(4-1) dQP (inter-layer) = Slice_QP (non-base layer i) - Slice_QP (non-base layer j)

(4-2) dQP (inter-layer) = LCU_QP (non-base layer i) - LCU_QP (non-base layer j)

In this case, the foregoing (1) to (4) can be combined to be used. For example, in a non-base layer, a method (combination of 3-1 and 2-3) of taking a difference in the quantization parameter at a slice level between a base layer and a non-base layer or a method (combination of 3-2 and 2-1) of taking a difference in the quantization parameter at an LCU level between a base layer and a non-base layer is considered. In this way, even when layer coding is performed by applying the difference repeatedly, the coding efficiency can be improved.

As in the above-described method, a flag identifying whether dQP which does not have a value of 0 is present can be set in each dQP described above.

<Second Embodiment>

(Description of Computer to Which the Present Disclosure Is Applied)

The above-described series of processes can be executed by hardware or may be executed by software. When the series of processes are executed by software, a program of the software is installed in a computer. Here, the computer includes, for example, a computer embedded in dedicated hardware and a general personal computer capable of executing various functions by installing various programs.

Fig. 33 is a block diagram illustrating an example of a hardware configuration of a computer executing the above-described series of processes by a program.

In the computer, a central processing unit (CPU) 501, a read-only memory (ROM) 502, and a random access memory (RAM) 503 are connected to each other by a bus 504.

An input/output interface 505 is also connected to the bus 504. An input unit 506, an output unit 507, a storage unit 508, a communication unit 509, and a drive 510 are connected to the input/output interface 505.

The input unit 506 includes a keyboard, a mouse, and a microphone. The output unit 507 includes a display and a speaker. The storage unit 508 includes a hard disk and a non-volatile memory. The communication unit 509 includes a network interface. The drive 510 drives a removable media 511 such as a magnetic disk, an optical disc, a magnetooptical disc, or a semiconductor memory.

In the computer with such a configuration, the CPU 501 performs the above-described series of processes, for example, by loading a program stored in the storage unit 508 to the RAM 503 via the input/output interface 505 and the bus 504 and executing the program.

For example, the program executed by the computer (the CPU 501) can be recorded and supplied to the removable medium 511 serving as a package medium or the like. The program can be supplied via a wired or wireless transmission medium such as a local area network, the Internet, or digital satellite broadcasting.

In the computer, the removable medium 511 is mounted on the drive 510, so that a program can be installed to the storage unit 508 via the input/output interface 505. The program can received via a wired or wireless transmission medium by the communication unit 509 and can be installed in the storage unit 508. The program can also be installed in advance in the ROM 502 or the storage unit 508.

A program executed by the computer may be a program that performs processes chronologically in the order described in the present specification or may be a program that performs processes in parallel or at a necessary timing such as a calling time.

<Third Embodiment>

(Application to Multi-view Image Coding and Multi-view Image Decoding)

The above-described series of processes can be applied to multi-view image coding and multi-view image decoding. Fig. 34 illustrates an example a multi-view image coding scheme.

As illustrated in Fig. 34, multi-view images include images of a plurality of views. The plurality of views of the multi-view images include base views for which coding and decoding are performed using only the images of the base views without using the images of other views and non-base views for which coding and decoding are performed using the images of other views. The non-base view may be configured to use the image of the base view or may be configured to use the image of another non-base view.

When the multi-view image as in Fig. 34 is coded or decoded, the image of each view is coded or decoded. However, the method of the above-described first embodiment may be applied to the coding or the decoding of each view. By doing so, it is possible to improve the coding efficiency of an image layered for each gamut.

The flags or the parameters used in the method of the above-described first embodiment may be shared in the coding or decoding of each view. More specifically, for example, the components of the syntax of the offset information or the like may be shared in the coding or the decoding of each view. Of course, necessary information other than the components may be shared in the coding or the decoding of each view.

By doing so, it is possible to suppress transmission of redundant information and reduce an information amount (coding amount) to be transmitted (that is, it is possible to suppress a reduction of the coding efficiency).

(Multi-view Image Coding Device)

Fig. 35 is a diagram illustrating a multi-view image coding device that codes the above-described multi-view image. As illustrated in Fig. 35, a multi-view image coding device 600 includes a coding unit 601, a coding unit 602, and a multiplexing unit 603.

The coding unit 601 codes a base view image to generate a base view image coded stream. The coding unit 602 codes a non-base view image to generate a non-base view image coded stream. The multiplexing unit 603 multiplexes the base view image coded stream generated by the coding unit 601 and the non-base view image coded stream generated by the coding unit 602 to generate a multi-view image coded stream.

The coding device 30 (see Fig. 10) can be applied to the coding unit 601 and the coding unit 602 of the multi-view image coding device 600. That is, it is possible to improve the coding efficiency of an image layered for each gamut in the coding of each view. Since the coding unit 601 and the coding unit 602 can perform the coding using the mutually same flags or parameters (for example, the components of the syntax or the like in regard to a process between images) (that is, the coding units can share the flags or the parameters), it is possible to suppress a reduction in the coding efficiency.

(Multi-view Image Decoding Device)

Fig. 36 is a diagram illustrating a multi-view image decoding device that decodes the above-described multi-view image. As illustrated in Fig. 36, a multi-view image decoding device 610 includes a demultiplexing unit 611, a decoding unit 612, and a decoding unit 613.
The demultiplexing unit 611 demultiplexes the multi-view image coded stream generated by multiplexing the base view image coded stream and the non-base view image coded stream to extract the base view image coded stream and the non-base view image coded stream. The decoding unit 612 decodes the base view image coded stream extracted by the demultiplexing unit 611 to obtain the base view image. The decoding unit 613 decodes the non-base view image coded stream extracted by the demultiplexing unit 611 to obtain the non-base view image.
The decoding device 160 (see Fig. 25) can be applied to the decoding unit 612 and the decoding unit 613 of the multi-view image decoding device 610. That is, in the decoding of each view, it is possible to decode the coded stream for which the coding efficiency of an image layered for each gamut is improved. Since the decoding unit 612 and the decoding unit 613 can perform the decoding using the mutually same flags or parameters (for example, the components of the syntax or the like in regard to a process between images) (that is, the coding units can share the flags or the parameters), it is possible to suppress a reduction in the coding efficiency.

<Fourth Embodiment>

(Example of Configuration of Television Device)

Fig. 37 exemplifies an overall configuration of a television device to which the present disclosure is applied. A television device 900 includes an antenna 901, a tuner 902, a demultiplexer 903, a decoder 904, a video signal processing unit 905, a display unit 906, an audio signal processing unit 907, a speaker 908, and an external interface unit 909. The television device 900 further includes a control unit 910 and a user interface unit 911.
The tuner 902 tunes and demodulates a desired channel from a carrier-wave signal received by the antenna 901 and outputs an obtained coded bit stream to the demultiplexer 903.
The demultiplexer 903 extracts video or audio packets of a program to be viewed from the coded bit stream and outputs data of the extracted packets to the decoder 904. The demultiplexer 903 supplies a packet of the data such as an electronic program guide (EPG) to the control unit 910. When scrambling is performed, the scrambling is released by the demultiplexer or the like.
The decoder 904 performs a decoding process on the packets, outputs video data generated through the decoding process to the video signal processing unit 905, and outputs audio data to the audio signal processing unit 907.
The video signal processing unit 905 performs noise removal, video processing or the like on the video data according to user setting. The video signal processing unit 905 generates, for example, video data of a program to be displayed by the display unit 906 or image data by a process based on an application supplied via a network. The video signal processing unit 905 generates video data to display a menu screen for item selection or the like and superimposes the video data on the video data of the program. The video signal processing unit 905 generates a driving signal based on the video data generated in this way to drive the display unit 906.
The display unit 906 drives a display device (for example, a liquid crystal display element) based on the driving signal from the video signal processing unit 905 to display a video or the like of the program.
The audio signal processing unit 907 performs a predetermined process such as noise removal on the audio data, performs a D/A conversion process or an amplification process on the processed audio data, and performs audio output by supplying the audio data to the speaker 908.
The external interface unit 909 is an interface for connection to an external device or a network and performs data transmission and reception of the video data, the audio data, or the like.
The user interface unit 911 is connected to the control unit 910. The user interface unit 911 includes an operation switch and a remote control signal reception unit and supplies an operation signal according to a user's operation to the control unit 910.
The control unit 910 is configured using a central processing unit (CPU), a memory, and the like. The memory stores a program to be executed by the CPU, various kinds of data necessary for the CPU to execute a process, EPG data, data acquired via a network, and the like. The program stored in the memory is read at a predetermined timing such as an activation time of the television device 900 by the CPU to be executed. The CPU executes the program to control each unit so that the television device 900 is operated according to a user's operation.
In the television device 900, a bus 912 is installed to connect the control unit 910 to the tuner 902, the demultiplexer 903, the video signal processing unit 905, the audio signal processing unit 907, the external interface unit 909, and the like.

In the television device with such a configuration, the decoder 904 has the functions of a decoding device (decoding method) according to the present specification. Therefore, it is possible to decode a coded stream for which the coding efficiency of an image layered for each gamut is improved.

<Fifth Embodiment>

(Example of Configuration of Mobile Phone)

Fig. 38 exemplifies an overall configuration of a mobile phone to which the present disclosure is applied. A mobile phone 920 includes a communication unit 922, an audio codec 923, a camera unit 926, an image processing unit 927, a multiplexing separation unit 928, a recording reproduction unit 929, a display unit 930, and a control unit 931. These units are connected to each other via a bus 933.

An antenna 921 is connected to the communication unit 922 and a speaker 924 and a microphone 925 are connected to the audio codec 923. Further, an operation unit 932 is connected to the control unit 931.

The mobile phone 920 performs various operations such as transmission and reception of an audio signal, transmission and reception of an electronic mail or image data, photographing of an image, and recording of data in various modes such as an audio calling mode or a data communication mode.

In the audio calling mode, an audio signal generated by the microphone 925 is converted into audio data or compressed to data by the audio codec 923 to be supplied to the communication unit 922. The communication unit 922 performs an audio data modulation process or a frequency conversion process to generate a transmission signal. The communication unit 922 supplies the transmission signal to the antenna 921 to transmit the transmission signal to a base station (not illustrated). The communication unit 922 supplies the audio codec 923 with audio data obtained by performing amplification, a frequency conversion process, and a demodulation process on a received signal received by the antenna 921. The audio codec 923 performs data decompression on the audio data, performs conversion into an analog audio signal, and output the analog audio signal to the speaker 924.

In the data communication mode, when a mail is transmitted, the control unit 931 receives text data input through an operation of the operation unit 932 and displays the input text on the display unit 930. The control unit 931 generates mail data based on a user's instruction in the operation unit 932 and supplies the mail data to the communication unit 922. The communication unit 922 performs a modulation process, a frequency conversion process, or the like on the mail data and transmits an obtained transmission signal to the antenna 921. The communication unit 922 performs amplification, a frequency conversion process and a demodulation process, or the like on a received signal received by the antenna 921 to restore the mail data. The mail data is supplied to the display unit 930 to display mail contents.

In the mobile phone 920, the recording reproduction unit 929 can also store the received mail data in a storage medium. The storage medium is any rewritable storage medium. For example, the storage medium is a semiconductor memory such as a RAM or a built-in flash memory or a removable medium such as a hard disk, a magnetic disk, a magneto-optical disc, an optical disc, a USB memory, or a memory card.

When image data is transmitted in the data communication mode, the image data generated by the camera unit 926 is supplied to the image processing unit 927. The image processing unit 927 performs a coding process on the image data to generate coded data.

The multiplexing separation unit 928 multiplexes the coded data generated by the image processing unit 927 and the audio data supplied from the audio codec 923 according to a predetermined scheme and supplies the multiplexed data to the communication unit 922. The communication unit 922 performs a modulation process or a frequency conversion process on the multiplexed data and transmits an obtained transmission signal from the antenna 921. The communication unit 922 performs amplification, a frequency conversion process and a demodulation process, or the like on the received signal received by the antenna 921 to restore the multiplexed data. The multiplexed data is supplied to the multiplexing separation unit 928. The multiplexing separation unit 928 separates the multiplexed data and supplies the coded data and the audio data to the image processing unit 927 and the audio codec 923, respectively. The image processing unit 927 performs a coding process on the coded data to generate the image data. The image data is supplied to the display unit 930 to display the received image. The audio codec 923 converts the audio data into an analog audio signal and supplies the analog audio signal to the speaker 924 to output the received audio.

In the mobile phone device with such a configuration, the image processing unit 927 has the functions of the coding device and the decoding device (the coding method and the decoding method) of the present specification. Therefore, it is possible to improve the coding efficiency of an image layered for each gamut. Further, it is possible to decode the coded stream for which the coding efficiency of an image layered for each gamut is improved.

<Sixth Embodiment>

(Example of Configuration of Recording Reproduction Device)

Fig. 39 exemplifies an overall configuration of a recording reproduction device to which the present disclosure is applied. A recording reproduction device 940 records, for example, audio data and video data of a received broadcast program on a recording medium to supply the recorded data to a user at a timing according to a user's instruction. For example, the recording reproduction device 940 can also acquire audio data or video data from another device and record the audio data and the video data on a recording medium. The recording reproduction device 940 can decode and output audio data or video data recorded on a recording medium to perform audio output or image display on a monitor device or the like.

The recording reproduction device 940 includes a tuner 941, an external interface unit 942, an encoder 943, a hard disk drive (HDD) unit 944, a disc driver 945, a selector 946, a decoder 947, an on-screen display (OSD) unit 948, a control unit 949, and a user interface unit 950.

The tuner 941 tunes a desired channel from a broadcast signal received by an antenna (not illustrated). The tuner 941 outputs a coded bit stream obtained by demodulating the received signal of the desired channel to the selector 946.

The external interface unit 942 includes at least one of an IEEE1394 interface, a network interface unit, a USB interface, and a flash memory interface. The external interface unit 942 is an interface that is connected to an external device, a network, a memory card, or the like and receives data such as video data or audio data to be recorded.

When video data or audio data supplied from the external interface unit 942 is not coded, the encoder 943 performs coding according to a predetermined scheme to output a coded bit stream to the selector 946.

The HDD unit 944 records content data such as a video or audio, various programs, other data, or the like on an internal hard disk and reads the data or the program from the hard disk at the time of reproduction.

The disc driver 945 records and reproduces a signal on and from a mounted optical disc. The optical disc is, for example, a DVD disc (a DVD-video, a DVD-RAM, a DVD-R, a DVD-RW, a DVD+R, a DVD+RW, or the like) or a Blu-ray (registered trademark) disc.

The selector 946 selects any coded bit stream from the tuner 941 or the encoder 943 at the time of recording of a video or audio and supplies the selected coded bit stream to one of the HDD unit 944 and the disc driver 945. The selector 946 supplies the decoder 947 with a coded bit stream output from the HDD unit 944 or the disc driver 945 at the time of reproduction of a video or audio.

The decoder 947 performs a decoding process on the encoded bit stream. The decoder 947 supplies video data generated by performing the decoding process to the OSD unit 948. The decoder 947 outputs audio data generated by performing the decoding process.

The OSD unit 948 generates video data to display a menu screen for item selection or the like and superimposes the video data on the video data output from the decoder 947 to output the data.

The user interface unit 950 is connected to the control unit 949. The user interface unit 950 includes an operation switch or a remote control signal reception unit and supplies an operation signal according to a user's operation to the control unit 949.

The control unit 949 is configured using a CPU, a memory, and the like. The memory stores a program to be executed by the CPU or various kinds of data necessary for the CPU to execute a process. The program stored in the memory is read at a predetermined timing such as an activation time of the recording reproduction device 940 by the CPU to be executed. The CPU executes the program to control each unit so that the recording reproduction device 940 is operated according to a user's operation.

In the recording reproduction device with such a configuration, the decoder 947 has the functions of a decoding device (decoding method) according to the present specification. Therefore, it is possible to decode a coded stream for which the coding efficiency of an image layered for each gamut is improved.

<Seventh Embodiment>

(Example of Configuration of Imaging Device)

Fig. 40 exemplifies an overall configuration of an imaging device to which the present disclosure is applied. An imaging device 960 images a subject and displays an image of the subject on a display unit or records the image of the subject as image data on a recording medium.

The imaging device 960 includes an optical block 961, an imaging unit 962, a camera signal processing unit 963, an image data processing unit 964, a display unit 965, an external interface unit 966, a memory unit 967, a media drive 968, an OSD unit 969, and a control unit 970. A user interface unit 971 is connected to the control unit 970. The image data processing unit 964, the external interface unit 966, the memory unit 967, the media drive 968, the OSD unit 969, and the control unit 970 are connected to each other via a bus 972.

The optical block 961 is configured using a focus lens, a diaphragm mechanism, and the like. The optical block 961 forms an optical image of a subject on an imaging surface of the imaging unit 962. The imaging unit 962 is configured using a CCD or CMOS image sensor, generates an electric signal according to the optical image through photoelectric conversion, and supplies the electric signal to the camera signal processing unit 963.

The camera signal processing unit 963 performs various kinds of camera signal processing such as knee correction, gamma correction, and color correction on the electric signal supplied from the imaging unit 962. The camera signal processing unit 963 supplies image data subjected to the camera signal processing to the image data processing unit 964.

The image data processing unit 964 performs a coding process on the image data supplied from the camera signal processing unit 963. The image data processing unit 964 supplies coded data generated by performing the coding process to the external interface unit 966 or the media drive 968. The image data processing unit 964 performs a decoding process on the coded data supplied from the external interface unit 966 or the media drive 968. The image data processing unit 964 supplies the image data generated by performing the decoding process to the display unit 965. The image data processing unit 964 performs a process of supplying the image data supplied from the camera signal processing unit 963 to the display unit 965 and superimposes display data acquired from the OSD unit 969 on the image data to supply the data to the display unit 965.

The OSD unit 969 generates display data such as a menu screen formed by signs, text, and figures or an icon and outputs the display data to the image data processing unit 964.

The external interface unit 966 includes, for example, a USB input/output terminal and is connected to a printer when an image is printed. A drive is connected to the external interface unit 966, as necessary, so that a removable medium such as a magnetic disk or an optical disc is appropriately mounted, and a computer program read from the removable medium is installed, as necessary. The external interface unit 966 includes a network interface connected to a predetermined network such as a LAN or the Internet. For example, the control unit 970 can read the coded data from the media drive 968 according to an instruction from the user interface unit 971 and supply the coded data from the external interface unit 966 to another device connected via a network. The control unit 970 can acquire the coded data or image data supplied from another device via a network through the external interface unit 966 and supply the coded data or the image data to the image data processing unit 964.

For example, any removable medium capable of performing reading and writing, such as a magnetic disk, a magneto-optical disc, an optical disc, or a semiconductor memory, is used as a recording medium driven in the media drive 968. The recording medium is any type of removable medium and may be a tape device, a disk, or a memory card. Of course, a contactless integrated circuit (IC) card or the like may be used.

The media drive 968 may be integrated with the recording medium and may be configured by, for example, a non-portable storage medium such as an internal hard disk drive or a solid state drive (SSD).

The control unit 970 is configured using a CPU. The memory unit 967 stores a program to be executed by the control unit 970, various kinds of data necessary for the control unit 970 to perform a process, and the like. The program stored in the memory unit 967 is read at a predetermined timing such as an activation time of the imaging device 960 by the control unit 970 to be executed. The control unit 970 performs the program to control each unit so that the imaging device 960 is operated according to a user's operation.

In the imaging device with such a configuration, the image data processing unit 964 has the functions of the coding device and the decoding device (the coding method and the decoding method) of the present specification. Therefore, it is possible to improve the coding efficiency of an image layered for each gamut. Further, it is possible to decode the coded stream for which the coding efficiency of an image layered for each gamut is improved.

<Application Examples of Scalable Coding>

(First System)

Next, a specific use example of the scalable coded data subjected to scalable coding (layer coding) which is coding by the scalable function will be described. For example, the scalable coding is used to select data to be transmitted, as in the example illustrated in Fig. 41.

In a data transmission system 1000 illustrated in Fig. 41, a delivery server 1002 reads scalable coded data stored in a scalable coded data storage unit 1001 and delivers the scalable coded data to terminal devices such as a personal computer 1004, an AV device 1005, a tablet device 1006, and a mobile phone 1007 via a network 1003.

At this time, the delivery server 1002 selects and transmits the coded data with proper quality according to the capability of a terminal device, a communication environment, or the like. When the delivery server 1002 transmits data with unnecessarily high quality, a terminal device may not obtain a high-quality image and there is a concern of delay or overflow occurring due to the data with the unnecessarily high quality. There is also a concern of a communication bandwidth being unnecessarily occupied or a load of the terminal device unnecessarily increasing. Conversely, when the delivery server 1002 transmits data with unnecessarily low quality, there is a concern of the terminal device not obtaining a sufficient quality image. For this reason, the delivery server 1002 appropriately reads and transmits the scalable coded data stored in the scalable coded data storage unit 1001 as coded data with quality proper to the capability of the terminal device, a communication environment, or the like.

For example, the scalable coded data storage unit 1001 is assumed to store scalably coded scalable coded data (BL+EL) 1011. The scalable coded data (BL+EL) 1011 is coded data that includes both of a base layer and an enhancement layer and is a data which is subjected to the decoding so that both of an image of the base layer and an image of the enhancement layer can be obtained.

The delivery server 1002 selects an appropriate layer according to the capability of a terminal device to which data is transmitted, a communication environment, or the like and reads data of the layer. For example, for the personal computer 1004 or the tablet device 1006 with high processing capability, the delivery server 1002 reads the high-quality scalable coded data (BL+EL) 1011 from the scalable coded data storage unit 1001 and transmits the high-quality scalable coded data (BL+EL) 1011 without change. On the other hand, for example, for the AV device 1005 or the mobile phone 1007 with low processing capability, the delivery server 1002 extracts the data of the base layer from the scalable coded data (BL+EL) 1011 and transmits the data of the base layer as scalable coded data (BL) 1012 which is the same content data as the scalable coded data (BL+EL) 1011 but has lower quality than the scalable coded data (BL+EL) 1011.

Since the amount of data can be adjusted easily by using the scalable coded data in this way, it is possible to suppress occurrence of delay or overflow or suppress an unnecessary increase of a load of the terminal device or the communication medium. Since redundancy between the layers is reduced in regard to the scalable coded data (BL+EL) 1011, the amount of data can be reduced further than when the coded data of each layer is set as individual data. Accordingly, a storage region of the scalable coded data storage unit 1001 can be used more efficiently.

Since various devices can be applied to terminal devices such as the personal computer 1004 to the mobile phone 1007, the hardware capability of the terminal devices differs for each device. Since applications executed by the terminal devices are various, the capability of software is also diverse. Since any of all of the communication line networks including wired networks, wireless networks, or both of the wired and wireless networks such as the Internet or a local area network (LAN) can be applied as the network 1003 serving as a communication medium, the data transmission capability is also diverse. Further, there is a concern of the data transmission capability being varied due to another communication or the like.

Accordingly, before starting data transmission, the delivery server 1002 may communicate with the terminal device which is a data transmission destination to obtain information regarding the capability of the terminal device such as the hardware capability of the terminal device or the capability of an application (software) or the like executed by the terminal device and information regarding a communication environment such as an available bandwidth of the network 1003. The delivery server 1002 may select an appropriate layer based on the obtained information.

The layer may also be extracted by the terminal device. For example, the personal computer 1004 may decode the transmitted scalable coded data (BL+EL) 1011 and may display the image of the base layer or the image of the enhancement layer. For example, the personal computer 1004 may extract the scalable coded data (BL) 1012 of the base layer from the transmitted scalable coded data (BL+EL) 1011, may store the scalable coded data (BL) 1012, may transmit the scalable coded data (BL) 1012 to another device, or may decode the scalable coded data (BL) 1012 and display the image of the base.

Of course, any number of scalable coded data storage units 1001, any number of delivery servers 1002, any number of networks 1003, and any number of terminal devices can be used. The example in which the delivery server 1002 transmits the data to the terminal device has been described above, but the use example is not limited thereto. The data transmission system 1000 can be applied to any system, as long as the data transmission system 1000 is a system that selects an appropriate layer according to the capability of a terminal device, a communication environment, or the like to transmit coded data when the system transmits the scalably coded data to the terminal device.

(Second System)

For example, the scalable coding is used to transmit data via a plurality of communication media, as in an example illustrated in Fig. 42.

In a data transmission system 1100 illustrated in Fig. 42, a broadcast station 1101 transmits scalable coded data (BL) 1121 of a base layer through terrestrial broadcasting 1111. The broadcast station 1101 transmits scalable coded data (EL) 1122 of an enhancement layer (for example, transmits packeted data) via any network 1112 formed by a wired communication network, a wireless communication network, or both of the wired and wireless communication networks.

The terminal device 1102 has a reception function of the terrestrial broadcasting 1111 performed by the broadcast station 1101 and receives the scalable coded data (BL) 1121 of the base layer transmitted via the terrestrial broadcasting 1111. The terminal device 1102 further has a communication function of performing communication via the network 1112 and receives the scalable coded data (EL) 1122 of the enhancement layer transmitted via the network 1112.

For example, according to a user's instruction or the like, the terminal device 1102 decodes the scalable coded data (BL) 1121 of the base layer acquired via the terrestrial broadcasting 1111 to obtain or store the image of the base layer or transmit the image of the base layer to another device.

For example, according to a user's instruction or the like, the terminal device 1102 combines the scalable coded data (BL) 1121 of the base layer acquired via the terrestrial broadcasting 1111 and the scalable coded data (EL) 1122 of the enhancement layer acquired via the network 1112 to obtain scalable coded data (BL+EL), decodes the scalable coded data (BL+EL) to obtain the image of the enhancement layer, stores the scalable coded data (BL+EL), or transmit the scalable coded data (BL+EL) to another device.

As described above, for example, the scalable coded data can be transmitted via a different communication medium for each layer. Accordingly, the load can be distributed, and thus it is possible to suppress occurrence of delay or overflow.

Depending on a circumstance, a communication medium used for transmission may be selected for each layer. For example, the scalable coded data (BL) 1121 of the base layer having a relatively large data amount may be transmitted via a communication medium with a broad bandwidth and the scalable coded data (EL) 1122 of the enhancement layer having a relatively small data amount may be transmitted via a communication medium with a narrow bandwidth. For example, whether a communication medium transmitting the scalable coded data (EL) 1122 of the enhancement layer is set to the network 1112 or the terrestrial broadcasting 1111 may be switched according to an available bandwidth of the network 1112. Of course, the same applies to the data of any layer.

By performing the control in this way, it is possible to further suppress an increase in the load in the data transmission.

Of course, any number of layers can be used and any number of communication media used for the transmission can be used. Any number of terminal devices 1102 which are data delivery destinations can be used. The broadcast from the broadcast station 1101 has been described above as an example, but the use example is not limited thereto. The data transmission system 1100 can be applied to any system, as long as the data transmission system 1100 is a system that divides the scalably coded data into a plurality of data in units of layers and transmits the divided data via a plurality of lines.

(Third System)

For example, the scalable coding is used to store the coded data, as in an example illustrated in Fig. 43.

In an imaging system 1200 illustrated in Fig. 43, an imaging device 1201 performs scalable coding on image data obtained by imaging a subject 1211 and supplies scalable coded data as scalable coded data (BL+EL) 1221 to a scalable coded data storage device 1202.

The scalable coded data storage device 1202 stores the scalable coded data (BL+EL) 1221 supplied from the imaging device 1201 and having quality according to a circumstance. For example, in the case of a normal time, the scalable coded data storage device 1202 extracts data of a base layer from the scalable coded data (BL+EL) 1221 and stores the extracted data as low-quality scalable coded data (BL) 1222 of the base layer with a small data amount. On the other hand, for example, in the case of a time of interest, the scalable coded data storage device 1202 stores the high-quality scalable coded data (BL+EL) 1221 with a large data amount.

By doing so, the scalable coded data storage device 1202 can store an image with high image quality only in a necessary case. Therefore, it is possible to suppress an increase in the amount of data while suppressing a reduction in the value of the image due to deterioration in image quality. Thus, it is possible to improve use efficiency of a storage region.

For example, the imaging device 1201 is assumed to be a monitoring camera. When a monitoring target (for example, an invader) is not pictured in a captured image (the case of the normal time), there is a high probability of the contents of the captured image being not important. Therefore, a reduction in the amount of data is preferred and low-quality image data (scalable coded data) is stored. On the other hand, when the monitoring target is pictured as the subject 1211 in a captured image (the case of the time of interest), there is a high probability of the contents of the captured image being important. Therefore, image quality is preferred and high-quality image data (scalable coded data) is stored.

The normal time or the time of interest may be determined, for example, when the scalable coded data storage device 1202 analyzes an image. The imaging device 1201 may determine the normal time or the time of interest and transmit a determination result to the scalable coded data storage device 1202.

Any determination criterion for the normal time or the time of interest can be used and any contents of an image serving as the determination criterion can be used. Of course, a condition other than the contents of an image can also be used as the determination criterion. For example, the determination criterion may be switched according to a size or a waveform of recorded audio, may be switched for each predetermined time, or may be switched according to an instruction from the outside, such as a user's instruction.

The example in which the two states of the normal time and the time of interest are switched has been described above, but any number of states can be used. For example, three or more states such as a normal time, a time of slight interest, a time of interest, and a time of considerable interest may be switched. Here, the upper limit of the number of switching states depends on the number of layers of the scalable coded data.

The imaging device 1201 may determine the number of layers of the scalable coding according to a state. For example, in the case of the normal time, the imaging device 1201 may generate the low-quality scalable coded data (BL) 1222 of the base layer with a small data amount and supply the generated scalable coded data (BL) 1222 to the scalable coded data storage device 1202. For example, in the case of the time of interest, the imaging device 1201 may generate the high-quality scalable coded data (BL+EL) 1221 with a large data amount and supply the generated scalable coded data (BL+EL) 1221 to the scalable coded data storage device 1202.

The monitoring camera has been described above as an example, but the imaging system 1200 can be applied for any use and the use example is not limited to the monitoring camera.

<Eighth Embodiment>

(Other Embodiments)

The examples of the devices and the systems to which the present technology is applied have been described above, but the present technology is not limited thereto. The present technology can also be realized as all of the configurations mounted on devices included in these devices or systems, for example, a processor of a system large scale integration (LSI), a module using a plurality of processes or the like, a unit using a plurality of modules or the like, a set (that is, a partial configuration of a device) to which other functions are added to a unit.

(Example of Configuration of Video Set)

An example of a case in which the present technology is realized as a set will be described with reference to Fig. 44. Fig. 44 illustrates an example of an overall configuration of a video set to which the present technology is applied.

In recent years, electronic devices have been multi-functioned. Thus, when parts of the configurations of the electronic devices are sold or provided in development or manufacturing, not only cases in which the electronic devices are realized as configurations having a single function but also cases in which the electronic devices are realized as a single set with a plurality of functions by combining a plurality of configurations with relevant functions can be considerably seen.

A video set 1300 illustrated in Fig. 44 has such a multi-functional configuration and is a video set in which a device having a function of coding or decoding an image (one of the coding and the decoding or both of the coding and the decoding) is combined with a function having a relevant function other than the function.

As illustrated in Fig. 44, the video set 1300 includes devices that include a module group of a video module 1311, an external memory 1312, a power management module 1313, a front end module 1314, and the like and have relevant functions of a connectivity 1321, a camera 1322, a sensor 1323, and the like.

A module is configured as a component having a cohesive function by collecting several mutually relevant component functions. Any specific physical configuration can be used. For example, a module can be considered in which a plurality of processors with respective functions, electronic circuit elements such as resistors and capacitors, other devices, and the like are disposed on a wiring substrate or the like to be integrated. A new module in which a module is combined with another module, a processor, or the like can also be considered.

In the case of Fig. 44, the video module 1311 is a module in which a configuration with a function relevant to image processing is combined. The video module 1311 includes an application processor, a video processor, a broadband modem 1333, and an RF module 1334.

A processor is a component in which a configuration with a predetermined function is integrated on a semiconductor chip by a SoC (System On a Chip) and a certain processor is called, for example, a system Large Scale Integration (LSI). A configuration with a predetermined function may be a logic circuit (hardware configuration), may be a configuration of a CPU, a ROM, a RAM, and the like and a program (software configuration) executed using the CPU, the ROM, the RAM, and the like, or may be a configuration in which both of the hardware and software configurations are combined. For example, a processor includes a logical circuit, a CPU, a ROM, and a RAM. Some of the functions may be realized by the logic circuit (hardware configuration) and the other functions may be realized by a program (software configuration) executed by the CPU.

The application processor 1331 in Fig. 44 is a processor that executes an application regarding image processing. An application executed by the application processor 1331 can execute a calculation process to realize a predetermined function and can also control, for example, the configurations inside and outside the video module 1311, such as a video processor 1332, as necessary.

The video processor 1332 is a processor that has a function regarding image coding/decoding (one or both of the coding and the decoding).

The broadband modem 1333 is a processor (or a module) that performs a process regarding a wired or wireless (or both of the wired or wireless) broadband communication performed via a broadband line such as the Internet or a public telephone line. For example, the broadband modem 1333 converts data (digital signal) to be transmitted into an analog signal through digital modulation or demodulates a received analog signal to convert the analog signal into data (digital signal). For example, the broadband modem 1333 can perform digital modulation and demodulation on any kind of information such as image data processed by the video processor 1332, a stream formed by coding image data, an application program, and setting data.

The RF module 1334 is a module that performs frequency conversion, modulation and demodulation, amplification, a filter process, or the like on a radio frequency (RF) signal transmitted and received via an antenna. For example, the RF module 1334 generates an RF signal by performing frequency conversion or the like on a baseband signal generated by the broadband modem 1333. For example, the RF module 1334 generates a baseband signal by performing frequency conversion or the like on the RF signal received via the front end module 1314.

In Fig. 44, as indicated by a dotted line 1341, the application processor 1331 and the video processor 1332 may be integrated to be formed as a single processor.

The external memory 1312 is a module that is installed outside the video module 1311 and includes a storage device used by the video module 1311. The storage device of the external memory 1312 may be realized by any physical configuration. Here, since the storage device is generally used to store large-capacity data such as image data in units of frames in many cases, the storage device is preferably realized by, for example, a relatively cheap large-capacity semiconductor memory such as a dynamic random access memory (DRAM).

The power management module 1313 manages and controls power supply to the video module 1311 (each configuration inside the video module 1311).

The front end module 1314 is a module that provides a front end function (a circuit at a transmission or reception end on an antenna side) to the RF module 1334. As illustrated in Fig. 44, the front end module 1314 includes, for example, an antenna unit 1351, a filter 1352, and an amplification unit 1353.

The antenna unit 1351 has an antenna transmitting and receiving a radio signal and its peripheral configuration. The antenna unit 1351 transmits a signal supplied from the amplification unit 1353 as a radio signal and supplies the received radio signal as an electric signal (RF signal) to the filter 1352. The filter 1352 performs a filter process or the like on the RF signal received via the antenna unit 1351 and supplies the processed RF signal to the RF module 1334. The amplification unit 1353 amplifies the RF signal supplied from the RF module 1334 and supplies the amplified signal to the antenna unit 1351.

The connectivity 1321 is a module that has a function regarding connection to the outside. Any physical configuration of the connectivity 1321 can be used. For example, the connectivity 1321 has a configuration with a communication function other than a communication standard to which the broadband modem 1333 corresponds or includes an external input/output terminal.

For example, the connectivity 1321 may include a module that has a communication function conforming to a wireless communication standard such as Bluetooth (registered trademark), IEEE802.11 (for example, Wireless Fidelity (Wi-Fi: registered trademark)), Near Field Communication (NFC), InfraRed Data Association (IrDA) or an antenna that transmits and receives a signal conforming to the standard. For example, the connectivity 1321 may include a module that has a communication function confirming to a wired communication standard such as Universal Serial Bus (USB) or High-Definition Multimedia Interface (HDMI: registered trademark) or a terminal confirming to the standard. For example, the connectivity 1321 may have another data (signal) transmission function of an analog input/output terminal or the like.

The connectivity 1321 may include a device of a data (signal) transmission destination. For example, the connectivity 1321 may include a drive (including not only a drive of a removable medium but also a hard disk, a solid-state drive (SSD), or a network attached storage (NAS)) that reads or writes data from or on a recording medium such as a magnetic disk, an optical disc, a magneto-optical disc, or a semiconductor memory. The connectivity 1321 may include an output device (a monitor, a speaker, or the like) of an image or audio.

The camera 1322 is a module that has a function of imaging a subject and obtaining image data of the subject. The image data obtained through the imaging by the camera 1322 is supplied to, for example, the video processor 1332 to be coded.

The sensor 1323 is a module that has any sensor function of, for example, an audio sensor, an ultrasonic sensor, an optical sensor, an illuminance sensor, an infrared sensor, an image sensor, a rotational sensor, an angular sensor, an angular velocity sensor, a speed sensor, an acceleration sensor, a tilt sensor, a magnetic identification sensor, an impact sensor, or a temperature sensor. Data detected by the sensor 1323 is supplied to, for example, the application processor 1331 to be used for an application or the like.

The configuration described above as the module may be realized by a processor or, conversely, the configuration described as a processor may be realized as a module.

In the video set 1300 with such a configuration, the present technology can be applied to the video processor 1332, as will be described below. Accordingly, the video set 1300 can be realized as a set to which the present technology is applied.

(Example of Configuration of Video Processor)

Fig. 45 illustrates an example of an overall configuration of the video processor 1332 (see Fig. 44) to which the present technology is applied.

In the case of the example in Fig. 45, the video processor 1332 has a function of receiving an input of a video signal and an audio signal and coding the video signal and the audio signal according to a predetermined scheme and a function of decoding the coded video data and audio data and reproducing and outputting the video signal and the audio signal.

As illustrated in Fig. 45, the video processor 1332 includes a video input processing unit 1401, a first image expansion contraction unit 1402, a second image expansion contraction unit 1403, a video output processing unit 1404, a frame memory 1405, and a memory control unit 1406. The video processor 1332 further includes a coding and decoding engine 1407, video elementary stream (ES) buffers 1408A and 1408B, and audio ES buffers 1409A and 1409B. The video processor 1332 further includes an audio encoder 1410, an audio decoder 1411, a multiplexer (MUX) 1412, a demultiplexer (DMUX) 1413, and a stream buffer 1414.

The video input processing unit 1401 acquires a video signal input from, for example, the connectivity 1321 (see Fig. 44) and converts the video signal into digital image data. The first image expansion contraction unit 1402 performs format conversion or an image expansion or contraction process on the image data. The second image expansion contraction unit 1403 performs an image expansion or contraction process on the image data according to a format of an output destination via the video output processing unit 1404 or the same format conversion or image expansion or contraction process as that of the first image expansion contraction unit 1402. The video output processing unit 1404 performs format conversion or conversion to an analog signal on the image data and outputs the image data as a reproduced video signal to, for example, the connectivity 1321 (see Fig. 44).

The frame memory 1405 is a memory for the image data shared by the video input processing unit 1401, the first image expansion contraction unit 1402, the second image expansion contraction unit 1403, the video output processing unit 1404, and the coding and decoding engine 1407. The frame memory 1405 is realized as, for example, a semiconductor memory such as a DRAM.

The memory control unit 1406 receives a synchronization signal from the coding and decoding engine 1407 and controls access of writing or reading on or from the frame memory 1405 according to an access schedule of the frame memory 1405 written in an access management table 1406A. The access management table 1406A is updated by the memory control unit 1406 through a process performed by the coding and decoding engine 1407, the first image expansion contraction unit 1402, the second image expansion contraction unit 1403, or the like.

The coding and decoding engine 1407 performs an coding process on the image data and performs a decoding process on a video stream which is data obtained by coding the image data. For example, the coding and decoding engine 1407 codes the image data read from the frame memory 1405 and sequentially writes the image data as a video stream on the video ES buffer 1408A. For example, the coding and decoding engine 1407 sequentially reads the video stream from the video ES buffer 1408B to decode the video stream and sequentially writes the video stream as the image data on the frame memory 1405. The coding and decoding engine 1407 uses the frame memory 1405 as a working area in such coding or decoding. The coding and decoding engine 1407 outputs a synchronization signal to the memory control unit 1406, for example, at a timing at which a process starts for each macroblock.

The video ES buffer 1408A buffers the video stream generated by the coding and decoding engine 1407 and supplies the video stream to the multiplexer (MUX) 1412. The video ES buffer 1408B buffers the video stream supplied from the demultiplexer (DMUX) 1413 and supplies the video stream to the coding and decoding engine 1407.

The audio ES buffer 1409A buffers the audio stream generated by the audio encoder 1410 and supplies the audio stream to the multiplexer (MUX) 1412. The audio ES buffer 1409B buffers the audio stream supplied from the demultiplexer (DMUX) 1413 and supplies the audio stream to the audio decoder 1411.

The audio encoder 1410 performs, for example, digital conversion on the audio signal input from, for example, the connectivity 1321 (see Fig. 44) and performs coding according to, for example, a predetermined scheme such as an MPEG audio scheme or an AC3 (AudioCode number 3) scheme. The audio encoder 1410 sequentially writes the audio stream which is data obtained by coding the audio signal on the audio ES buffer 1409A. The audio decoder 1411 decodes the audio stream supplied from the audio ES buffer 1409B, converts the audio stream into, for example, an analog signal, and supplies the analog signal as the reproduced audio signal to, for example, the connectivity 1321 (see Fig. 44).

The multiplexer (MUX) 1412 multiplexes the video stream and the audio stream. Any multiplexing method (that is, the format of a bit stream generated through the multiplexing) can be used. At the time of the multiplexing, the multiplexer (MUX) 1412 can also add predetermined header information or the like to the bit stream. That is, the multiplexer (MUX) 1412 can convert the format of the stream through the multiplexing. For example, the multiplexer (MUX) 1412 converts the bit stream into a transport stream which is a bit stream with a transmission format by multiplexing the video stream and the audio stream. For example, the multiplexer (MUX) 1412 converts the bit stream into data (file data) with a recording file format by multiplexing the video stream and the audio stream.

The demultiplexer (DMUX) 1413 demultiplexes the bit stream obtained by multiplexing the video stream and the audio stream according to a method corresponding to the multiplexing by the multiplexer (MUX) 1412. That is, the demultiplexer (DMUX) 1413 extracts the video stream and the audio stream (separates the video stream and the audio stream) from the bit stream read from the stream buffer 1414. That is, the demultiplexer (DMUX) 1413 can perform conversion (inverse conversion to the conversion by the multiplexer (MUX) 1412) of the format of the stream through the demultiplexing. For example, the demultiplexer (DMUX) 1413 can acquire the transport stream supplied from, for example, the connectivity 1321 (see Fig. 44) or the broadband modem 1333 (see Fig. 44) via the stream buffer 1414 and demultiplex the transport stream to perform the conversion into the video stream and the audio stream. For example, the demultiplexer (DMUX) 1413 can acquire the file data read from any of the various recording media by, for example, the connectivity 1321 (see Fig. 44) via the stream buffer 1414 and demutiplex the file data to perform conversion into the video stream and the audio stream.

The stream buffer 1414 buffers the bit stream. For example, the stream buffer 1414 buffers the transport stream supplied from the multiplexer (MUX) 1412 and supplies the transport stream to, for example, the connectivity 1321 (see Fig. 44) or the broadband modem 1333 (see Fig. 44) at a predetermined timing, in response to a request from the outside, or the like.

For example, the stream buffer 1414 buffers the file data supplied from the multiplexer (MUX) 1412 and supplies the file data to, for example, the connectivity 1321 (see Fig. 44) at a predetermined timing, in response to a request from the outside, or the like to record the file data on any of the various recording media.

The stream buffer 1414 buffers the transport stream acquired via, for example, the connectivity 1321 (see Fig. 44) or the broadband modem 1333 (see Fig. 44) and supplies the transport stream to the demultiplexer (DMUX) 1413 at a predetermined timing, in response to a request from the outside, or the like.

The stream buffer 1414 buffers the file data read from any of the various recording media in, for example, the connectivity 1321 (see Fig. 44) and supplies the file data to the demultiplexer (DMUX) 1413 at a predetermined timing, in response to a request from the outside, or the like.

Next, an example of an operation of the video processor 1332 with such a configuration will be described. For example, video signals input from the connectivity 1321 (see Fig. 44) or the like to the video processor 1332 are converted into digital image data according to a predetermined scheme, such as a 4:2:2 Y/Cb/Cr scheme, by the video input processing unit 1401, and then the digital image data is sequentially written on the frame memory 1405. The digital image data is read to the first image expansion contraction unit 1402 or the second image expansion contraction unit 1403, is subjected to format conversion according to a predetermined scheme, such as a 4:2:0 Y/Cb/Cr scheme, and an expansion or contraction process, and is written again on the frame memory 1405. The image data is coded by the coding and decoding engine 1407 and is written as the video stream on the video ES buffer 1408A.

The audio signal input from the connectivity 1321 (see Fig. 44) or the like to the video processor 1332 is coded by the audio encoder 1410 and is written as the audio stream on the audio ES buffer 1409A.

The video stream of the video ES buffer 1408A and the audio stream of the audio ES buffer 1409A are read to the multiplexer (MUX) 1412 and are multiplexed to be converted into the transport stream, the file data, or the like. After the transport stream generated by the multiplexer (MUX) 1412 is buffered to the stream buffer 1414, the transport stream is output to an external network via, for example, the connectivity 1321 (see Fig. 44) or the broadband modem 1333 (see Fig. 44). After the file data generated by the multiplexer (MUX) 1412 is buffered to the stream buffer 1414, the file data is output to, for example, the connectivity 1321 (see Fig. 44) to be recorded on any of the various recording media.

After the transport stream input from an external network to the video processor 1332 via, for example, the connectivity 1321 (see Fig. 44) or the broadband modem 1333 (see Fig. 44) is buffered to the stream buffer 1414, the transport stream is demultiplexed by the demultiplexer (DMUX) 1413. After the file data read from any of the various recording media in, for example, the connectivity 1321 (see Fig. 44) and input to the video processor 1332 is buffered to the stream buffer 1414, the file data is demultiplexd by the demultiplexer (DMUX) 1413. That is, the transport stream or the file data input to the video processor 1332 is separated into the video stream and the audio stream by the demultiplexer (DMUX) 1413.

The audio stream is supplied to the audio decoder 1411 via the audio ES buffer 1409B and is decoded so that the audio signal is reproduced. After the video stream is written on the video ES buffer 1408B, the video stream is sequentially read and decoded by the coding and decoding engine 1407 and is written on the frame memory 1405. The decoded image data is expanded or contracted by the second image expansion contraction unit 1403 and is written on the frame memory 1405. Then, the decoded image data is read by the video output processing unit 1404, the format of the image data is converted according to a predetermined scheme such as a 4:2:2 Y/Cb/Cr scheme, the image data is further converted into an analog signal, and the video signal is reproduced and output.

When the present technology is applied to the video processor 1332 with such a configuration, the present technology related to each of the above-described embodiment may be applied to the coding and decoding engine 1407. That is, for example, the coding and decoding engine 1407 may have the function of the coding device 30 or the decoding device 160. By doing so, the video processor 1332 can obtain the same advantageous effects as those described above with reference to Figs. 1 to 32.

In the coding and decoding engine 1407, the present technology (that is, the function of the image coding device or the image decoding device according to each of the above-described embodiments) may be realized by hardware such as a logic circuit, may be realized by software such as an embedded program, or may be realized by both of the hardware and the software.

(Another Example of Configuration of Video Processor)

Fig. 46 illustrates another example of the overall configuration of the video processor 1332 (see Fig. 44) to which the present technology is applied. In the case of the example in Fig. 46, the video processor 1332 has a function of coding and decoding video data according to a predetermined scheme.

More specifically, as illustrated in Fig. 46, the video processor 1332 includes a control unit 1511, a display interface 1512, a display engine 1513, an image processing engine 1514, and an internal memory 1515. The video processor 1332 further includes a codec engine 1516, a memory interface 1517, a multiplexer/demultiplexer (MUX DMUX) 1518, a network interface 1519, and a video interface 1520.

The control unit 1511 controls an operation of each processing unit inside the video processor 1332, such as the display interface 1512, the display engine 1513, the image processing engine 1514, and the codec engine 1516.

As illustrated in Fig. 46, the control unit 1511 includes, for example, a main CPU 1531, a sub-CPU 1532, and a system controller 1533. The main CPU 1531 executes a program or the like to control the operation of each processing unit inside the video processor 1332. The main CPU 1531 generates a control signal according to the program or the like and supplies the control signal to each processing unit (that is, controls the operation of each processing unit). The sub-CPU 1532 serves as an auxiliary role of the main CPU 1531. For example, the sub-CPU 1532 executes a sub-process or a sub-routine of the program or the like executed by the main CPU 1531. The system controller 1533 controls the operations of the main CPU 1531 and the sub-CPU 1532, for example, designates a program to be executed by the main CPU 1531 and the sub-CPU 1532.

The display interface 1512 outputs image data to, for example, the connectivity 1321 (see Fig. 44) under the control of the control unit 1511. For example, the display interface 1512 converts the image data of the digital data into an analog signal and outputs the analog signal as a reproduced video signal or the image data of the digital data to a monitor device or the like of the connectivity 1321 (see Fig. 44).

The display engine 1513 performs various conversion processes such as format conversion, size conversion, and gamut conversion on the image data according to a hardware specification of the monitor device or the like displaying the image under the control of the control unit 1511.

The image processing engine 1514 performs predetermined image processing on the image data, such as a filter process, for example, to improve image quality, under the control of the control unit 1511.

The internal memory 1515 is a memory that is installed inside the video processor 1332 and is shared by the display engine 1513, the image processing engine 1514, and the codec engine 1516. The internal memory 1515 is used to transmit and receive data to and from, for example, the display engine 1513, the image processing engine 1514, and the codec engine 1516. For example, the internal memory 1515 stores data supplied from the display engine 1513, the image processing engine 1514, or the codec engine 1516 and supplies the data to the display engine 1513, the image processing engine 1514, or the codec engine 1516, as necessary (for example, in response to a request). The internal memory 1515 may be realized by any storage device. Since the internal memory 1515 is generally used to store a small capacity of data such as image data or parameters in units of blocks in many cases, the internal memory 1515 is preferably realized by, for example, a semiconductor memory with a relatively small capacity (compared to, for example, the external memory 1312) and a high response speed, such as a Static Random Access Memory (SRAM).

The codec engine 1516 performs a process relevant to the coding and the decoding of the image data. Any coding and decoding scheme to which the codec engine 1516 corresponds can be used and the number of coding and decoding schemes may be singular or plural. For example, the codec engine 1516 may have codec functions of a plurality of coding and decoding schemes and perform the coding on the image data or the decoding on the coded data by selecting a coding and decoding scheme.

In the example illustrated in Fig. 46, the codec engine 1516 has, as functional blocks of a process relevant to a codec, for example, an MEPG-2 Video 1541, an AVC/H.264 1542, an HEVC/H.265 1543, an HEVC/H.265 (Scalable) 1544, an HEVC/H.265 (Multi-view) 1545, and an MPEG-DASH 1551.

The MEPG-2 Video 1541 is a functional block that codes or decodes the image data according to an MPEG-2 scheme. The AVC/H.264 1542 is a functional block that codes or decodes the image data according to an AVC scheme. The HEVC/H.265 1543 is a functional block that codes or decodes the image data according to an HEVC scheme. The HEVC/H.265 (Scalable) 1544 is a functional block that performs scalable coding or scalable decoding on the image data according to an HEVC scheme. The HEVC/H.265 (Multi-view) 1545 is a functional block that performs multi-view coding or multi-view decoding on the image data according to an HEVC scheme.

The MPEG-DASH 1551 is a functional block that transmits or receives the image data according to MPEG-Dynamic Adaptive Streaming over HTTP (MPEG-DASH). MPEG-DASH is a technology for streaming a video using Hyper Text Transfer Protocol (HTTP) and has one feature in which appropriate coded data is selected from a plurality of pieces of coded data with different resolutions prepared in advance to be transmitted in units of segments. The MPEG-DASH 1551 performs generation of a steam conforming to a standard, transmission control of the stream, and the like and performs coding or decoding on the image data using MPEG-2 Video 1541 to the HEVC/H.265 (Multi-view) 1545 described above.

The memory interface 1517 is an interface for the external memory 1312. The data supplied form the image processing engine 1514 or the codec engine 1516 is supplied to the external memory 1312 via the memory interface 1517. The data read from the external memory 1312 is supplied to the video processor 1332 (the image processing engine 1514 or the codec engine 1516) via the memory interface 1517.

The multiplexer/demultiplexer (MUX DMUX) 1518 performs multiplexing or demultiplexing on various kinds of data relevant to an image, such as a bit stream of the coded data, image data and, a video signal. Any method for the multiplexing and the demultiplexing can be used. For example, at the time of the multiplexing, the multiplexer/demultiplexer (MUX DMUX) 1518 can collect a plurality of pieces of data into one piece of data and can also add predetermined header information or the like to the data. At the time of the demultiplexing, the multiplexer/demultiplexer (MUX DMUX) 1518 can separate the one piece of data into the plurality of pieces of data and can also add predetermined header information or the like to each of the separated data. That is, the multiplexer/demultiplexer (MUX DMUX) 1518 can convert the format of the data through the multiplexing or the demultiplexing. For example, the multiplexer/demultiplexer (MUX DMUX) 1518 can multiplex the bit stream into a transport stream to perform conversion to a transport stream which is a bit stream with a transmission format or conversion to data (file data) with a recording file format. Of course, inverse conversion to the conversion can also be performed through demultiplexing.

The network interface 1519 is an interface dedicated for, for example, the broadband modem 1333 (see Fig. 44) or the connectivity 1321 (see Fig. 44). The video interface 1520 is an interface dedicated for, for example, the connectivity 1321 (see Fig. 44) or the camera 1322 (see Fig. 44).

Next, an example of an operation of the video processor 1332 will be described. For example, when the transport stream is received from an external network via the connectivity 1321 (see Fig. 44), the broadband modem 1333 (see Fig. 44), or the like, the transport stream is supplied to the multiplexer/demultiplexer (MUX DMUX) 1518 via the network interface 1519, is demultiplexed, and is decoded by the codec engine 1516. For example, the image data obtained through the decoding by the codec engine 1516 is subjected to predetermined image processing by the image processing engine 1514, is subjected to predetermined conversion by the display engine 1513, and is supplied to, for example, the connectivity 1321 (see Fig. 44) via the display interface 1512, so that the image is displayed on a monitor. For example, the image data obtained through the decoding by the codec engine 1516 is coded again by the codec engine 1516, is multiplexed by the multiplexer/demultiplexer (MUX DMUX) 1518 to be converted into the file data, is output to, for example, the connectivity 1321 (see Fig. 44) via the video interface 1520, and is recorded on any of the various recording media.

For example, the file data of the coded data obtained by coding the image data and read from a recording medium (not illustrated) by the connectivity 1321 (see Fig. 44) is supplied to the multiplexer/demultiplexer (MUX DMUX) 1518 via the video interface 1520 to be demultiplexed and is decoded by the codec engine 1516. The image data obtained through the decoding by the codec engine 1516 is subjected to predetermined image processing by the image processing engine 1514, is subjected to predetermined conversion by the display engine 1513, and is supplied to, for example, the connectivity 1321 (see Fig. 44) via the display interface 1512, so that the image is displayed on the monitor. For example, the image data obtained through the decoding by the codec engine 1516 is coded again by the codec engine 1516, is multiplexed by the multiplexer/demultiplexer (MUX DMUX) 1518 to be converted into the transport stream, is supplied to, for example, the connectivity 1321 (see Fig. 44) or the broadband modem 1333 (see Fig. 44) via the network interface 1519, and is transmitted to another device (not illustrated).

The transmission and reception of the image data or other data between the processing units inside the video processor 1332 are performed using, for example, the internal memory 1515 or the external memory 1312. The power management module 1313 controls power supply to, for example, the control unit 1511.

When the present technology is applied to the video processor 1332 with such a configuration, the present technology related to each of the above-described embodiment may be applied to codec engine 1516. That is, for example, the codec engine 1516 may have a functional block realizing the coding device 30 or the decoding device 160. For example, when the codec engine 1516 performs the above-described processes, the video processor 1332 can obtain the same advantageous effects as those described above with reference to Figs. 1 to 32.

In the codec engine 1516, the present technology (that is, the function of the image coding device or the image decoding device according to each of the above-described embodiments) may be realized by hardware such as a logic circuit, may be realized by software such as an embedded program, or may be realized by both of the hardware and the software.

The Two configurations of the video processor 1332 have been exemplified above, but the video processor 1332 may have any configuration and may have a configuration other than the above-described two configurations. The video processor 1332 may be configured by a single semiconductor chip or may be configured by a plurality of semiconductor chips. For example, the video processor 1332 may be realized by a 3-dimensionally stacked LSI in which a plurality of semiconductors are stacked or may be realized by a plurality of LSIs.

(Application Examples to Devices)

The video set 1300 can be embedded into various devices processing image data. For example, the video set 1300 can be embedded into the television device 900 (see Fig. 37), the mobile phone 920 (see Fig. 38), the recording reproduction device 940 (see Fig. 39), the imaging device 960 (see Fig. 40), and the like. By embedding the video set 1300, the device can obtain the same advantageous effects as those described above with reference to Figs. 1 to 32.

The video set 1300 can also be embedded into, for example, the terminal devices such as the personal computer 1004, the AV device 1005, the tablet device 1006, and the mobile phone 1007 in the data transmission system 1000 in Fig. 41, the broadcast station 1101 and the terminal device 1102 in the data transmission system 1100 in Fig. 42, and the imaging device 1201 and the scalable coded data storage device 1202, and the like in the imaging system 1200 in Fig. 43. By embedding the video set 1300, the device can obtain the same advantageous effects as those described above with reference to Figs. 1 to 32.

Even a part of each configuration of the above-described video set 1300 can also be realized as a configuration to which the present technology is applied, as long as the part of the configuration includes the video processor 1332. For example, only the video processor 1332 can be realized as a video processor to which the present technology is applied. For example, the processor indicated by the dotted line 1341 or the video module 1311, as described above, can be realized a process or a module to which the present technology is applied. For example, a combination of the video module 1311, the external memory 1312, the power management module 1313, and the front end module 1314 can also be realized as a video unit 1361 to which the present technology is applied. In any of the configurations, the device can obtain the same advantageous effects as those described above with reference to Figs. 1 to 32.

That is, a configuration can be embedded into various devices processing image data, as in the case of the video set 1300, as long as the configuration includes the video processor 1332. For example, the video processor 1332, the processor indicated by the dotted line 1341, the video module 1311, or the video unit 1361 can be embedded into the television device 900 (see Fig. 37), the mobile phone 920 (see Fig. 38), the recording reproduction device 940 (see Fig. 39), the imaging device 960 (see Fig. 40), the terminal devices such as the personal computer 1004, the AV device 1005, the tablet device 1006, and the mobile phone 1007 in the data transmission system 1000 in Fig. 41, the broadcast station 1101 and the terminal device 1102 in the data transmission system 1100 in Fig. 42, and the imaging device 1201 and the scalable coded data storage device 1202, and the like in the imaging system 1200 in Fig. 43. By embedding a configuration to which the present technology is desired to be applied, the device can obtain the same advantageous effects as those described above with reference to Figs. 1 to 32, as in the case of the video set 1300.

<Ninth Embodiment>

(Application Example of MPEG-DASH)

In the present technology, appropriate coded data is selected from a plurality of coded streams with different resolutions prepared in advance and is used in units of segments. For example, the present technology can also be applied to a content reproduction system of HTTP streaming such as MPEG DASH to be described below or a wireless communication system of the Wi-Fi standard.

<Overview of Content Reproduction System>

First, a content reproduction system to which the present technology can be applied will be described roughly with reference to Figs. 47 to 49.

Hereinafter, a basic configuration common to each embodiment will first be described with reference to Figs. 47 and 48.

Fig. 47 is an explanatory diagram illustrating the configuration of the content reproduction system. As illustrated in Fig. 47, the content reproduction system includes content servers 1610 and 1611, a network 1612, and content reproduction devices 1620 (client devices).

The content servers 1610 and 1611 and the content reproduction devices 1620 are connected to each other via the network 1612. The network 1612 is a wired or wireless transmission line of information transmitted from a device connected to the network 1612.

For example, the network 1612 may includes a public line network such as the Internet, a telephone line network, or a satellite communication network, various Local Area Networks (LANs) including Ethernet (registered trademark), and various Wide Area Networks (WANs). The network 1612 may include a dedicated line network such as Internet Protocol-Virtual Private Network (IP-VPN).

The content server 1610 codes content data to generate and store a data file including a coded stream and meta-information regarding the coded stream. When the content server 1610 generates a data file with the MP4 format, the coded stream corresponds to "mdat" and the meta-information corresponds to "moov."

The content data may be music data such as music, a lecture, or a radio program, video data such as a movie, a television program, a video program, a photo, document, a painting, or a table, a game, software, or the like.

Here, the content server 1610 generates a plurality of data files at different bit rates in regard to the same content. In response to a content reproduction request from the content reproduction device 1620, the content server 1611 includes information regarding a parameter which the content reproduction device 1620 adds to a URL of the content server 1610 in information regarding the URL and transmits the information to the content reproduction device 1620. Hereinafter, this fact will be described specifically with reference to Fig. 48.

Fig. 48 is an explanatory diagram illustrating a flow of data in the content reproduction system in Fig. 47. The content server 1610 codes the same content data at different bit rates and generates, for example, a file A of 2 Mbps, a file B of 1.5 Mbps, and a file C of 1 Mbps, as illustrated in Fig. 48. Relatively, the file A has a high bit rate, the file B has a standard bit rate, and the file C has a low bit rate.

As illustrated in Fig. 48, a coded stream of each file is divided into a plurality of segments. For example, the coded stream of the file A is divided into segments "A1," "A2," "A3," ..., "An," the coded stream of the file B is divided into segments "B1," "B2," "B3," ..., "Bn," and the coded stream of the file C is divided into segments "C1," "C2," "C3," ..., "Cn."

Each segment may be configured with a constituent sample by one or two or more video coded streams and audio coded streams which can be singly reproduced and start with a sink sample (for example, an IDR-picture in video coding of AVC/H.264) of MP4. For example, when video data with 30 frames per second is coded with a Group of Picture (GOP) with a fixed length of 15 frames, each segment may be 2-second video and audio coded streams corresponding to 4 GOP or may be 10-second video and audio coded streams corresponding to 20 GOP.

Reproduction range (ranges of time positions from the beginning of content) by the segments of which disposition orders are the same in the files are the same. For example, the reproduction ranges of the segment "A2," the segment "B2," and the segment "C2" are the same. When each segment is a 2-second coded stream, all of the reproduction ranges of the segment "A2," the segment "B2," and the segment "C2" are in the range of 2 seconds to 4 seconds of all kinds of content.

When the content server 1610 generates the files A to C including the plurality of segments, the content server 1610 stores the files A to C. Then, as illustrated in Fig. 48, the content server 1610 sequentially transmits the segments included in the different files to the content reproduction devices 1620 and the content reproduction devices 1620 perform streaming reproduction of the received segments.

Here, the content server 1610 according to the embodiment transmits a play list file (hereinafter referred to as Media Presentation Description (MPD)) including bit rate information and access information of each coded stream to the content reproduction devices 1620. The content reproduction device 1620 selects one bit rate from the plurality bit rates based on the MPD and gives a request to transmit the segments corresponding to the selected bit rate to the content server 1610.

Only one content server 1610 is illustrated in Fig. 47, but it is needless to say that the present disclosure is not limited to the relevant example.

Fig. 49 is an explanatory diagram illustrating a specific example of the MPD. As illustrated in Fig. 49, the MPD includes access information regarding a plurality of coded streams having different bit rates (BANDWIDTH). For example, the MPD illustrated in Fig. 49 includes the access information which is information regarding the coded streams and indicates that the coded streams of 256 Kbps, 1.024 Mbps, 1.384 Mbps, 1.536 Mbps, and 2.048 Mbps are present. The content reproduction device 1620 can dynamically change the bit rate of the coded stream reproduced in a streaming manner based on the MPD.

In Fig. 47, portable terminals are illustrated as examples of the content reproduction devices 1620, but the content reproduction devices 1620 are not limited to the examples. For example, the content reproduction devices 1620 may be information processing devices such as personal computers (PCs), household video processing devices (DVD recorders, video cassette recorders, or the like), Personal Digital Assistants (PDA), household game devices, or electric appliances. The content reproduction devices 1620 may be information processing devices such as mobile phones, Personal Handyphone System (PHS), portable music reproduction devices, portable video processing devices, or portable game devices.

<Configuration of Content Server 1610>

The overview of the content reproduction system has been described above with reference to Figs. 47 to 49. The configuration of the content server 1610 will be described continuously with reference to Fig. 50.

Fig. 50 is a functional block diagram illustrating the configuration of the content server 1610. As illustrated in Fig. 50, the content server 1610 includes a file generation unit 1631, a storage unit 1632, and a communication unit 1633.

The file generation unit 1631 includes an encoder 1641 that codes content data, and generates the above-described MPD and a plurality of coded streams with different bit rates with the same content. For example, when the file generation unit 1631 generates the coded streams of 256 Kbps, 1.024 Mbps, 1.384 Mbps, 1.536 Mbps, and 2.048 Mbps, the file generation unit 1631 generates the MPD illustrated in Fig. 49.

The storage unit 1632 stores the MPD and the plurality of coded streams with the different bit rates generated by the file generation unit 1631. The storage unit 1632 may be a storage medium such as a non-volatile memory, a magnetic disk, an optical disc, or a magneto-optical (MO) disc. Examples of the non-volatile memory include an Electrically Erasable Programmable Read-Only Memory (EEPROM) and an Erasable Programmable ROM (EPROM). Examples of the magnetic disk include a hard disk and a disk-type magnetic disk. Examples of the optical disc include a Compact Disc (CD), a Digital Versatile Disc Recordable (DVD-R), and a Blu-Ray Disc (BD: registered trademark).

The communication unit 1633 is an interface with the content reproduction devices 1620 and communicates with the content reproduction devices 1620 via the network 1612. More specifically, the communication unit 1633 has a function of an HTTP server communicating with the content reproduction devices 1620 according to HTTP. For example, the communication unit 1633 transmits the MPD to the content reproduction device 1620, extracts the coded stream from the storage unit 1632 in response to a request based on the MPD from the content reproduction device 1620 according to HTTP, and transmits the coded stream to the content reproduction device 1620 as an HTTP response.

<Configuration of Content Reproduction Device 1620>

The configuration of the content server 1610 according to the embodiment has been described above. The configuration of the content reproduction device 1620 will be described continuously with reference to Fig. 51.

Fig. 51 is a functional block diagram illustrating the configuration of the content reproduction device 1620. As illustrated in Fig. 51, the content reproduction device 1620 includes a communication unit 1651, a storage unit 1652, a reproduction unit 1653, a selection unit 1654, a current-site acquisition unit 1656.

The communication unit 1651 is an interface with the content server 1610 and gives a request for data to the content server 1610 to acquire the data from the content server 1610. More specifically, the communication unit 1651 has a function of an HTTP client communicating the content reproduction device 1620 according to HTTP. For example, the communication unit 1651 can use HTTP Range to selectively acquire the MPD or the segments of the coded stream from the content server 1610.

The storage unit 1652 stores various kinds of information regarding reproduction of content. For example, the storage unit 1652 sequentially buffers the segments acquired from the content server 1610 through the communication unit 1651. The segments of the coded stream buffered by the storage unit 1652 are sequentially supplied to the reproduction unit 1653 in First-In First-Out (FIFO).

Based on an instruction to add the parameter to the URL of the content described in the MPD from a content server 1611 to be described below, the storage unit 1652 adds a parameter to the URL through the communication unit 1651 and stores definition for access to the URL.

The reproduction unit 1653 sequentially reproduces the segments supplied from the storage unit 1652. Specifically, the reproduction unit 1653 performs decoding, DA conversion, and rendering, or the like of the segments.

The selection unit 1654 sequentially selects acquisition of the segments of the coded stream corresponding to a certain bit rate included in the MPD in the same content. For example, when the selection unit 1654 sequentially selects the segments "A1," "B2," and "A3" according to the bandwidth of the network 1612, the communication unit 1651 sequentially acquires the segments "A1," "B2," and "A3" from the content server 1610, as illustrated in Fig. 48.

The current-site acquisition unit 1656 acquires a current site of the content reproduction device 1620 and may include a module that acquires a current site of a Global Positioning System (GPS content reproduction device 1620) receiver or the like. The current-site acquisition unit 1656 may acquires the current position of the content reproduction device 1620 using a wireless network.

<Configuration of Content Server 1611>

Fig. 52 is an explanatory diagram illustrating an example of the configuration of the content server 1611. As illustrated in Fig. 52, the content server 1611 includes a storage unit 1671 and a communication unit 1672.

The storage unit 1671 stores information regarding the URL of the MPD. The information regarding the URL of the MPD is transmitted from the content server 1611 to the content reproduction device 1620 in response to a request from the content reproduction device 1620 having given the request to reproduce the content. When the information regarding the URL of the MPD is supplied to the content reproduction device 1620, the storage unit 1671 stores definition information, which is described in the MPD, at the time of addition of a parameter to the URL by the content reproduction device 1620.

The communication unit 1672 is an interface with the content reproduction device 1620 and communicates with the content reproduction device 1620 via the network 1612. That is, the communication unit 1672 receives a request for the information regarding the URL of the MPD from the content reproduction device 1620 having given the request to reproduce the content and transmits the information regarding the URL of the MPD to the content reproduction device 1620. The URL of the MPD transmitted from the communication unit 1672 includes information for adding the parameter by the content reproduction device 1620.

The parameter added to the URL of the MPD by the content reproduction device 1620 can be set variously with the definition information shared between the content server 1611 and the content reproduction device 1620. For example, the current position of the content reproduction device 1620, a user ID of a user using the content reproduction device 1620, a memory size of the content reproduction device 1620, or information regarding a storage capacity of the content reproduction device 1620 can be added to the URL of the MPD by the content reproduction device 1620.

In the content reproduction system with the above-described configuration, by applying the present technology described above with reference to Figs. 1 to 32, it is possible to obtain the same advantageous effects as those described above with reference to Figs. 1 to 32.

The encoder 1641 of the content server 1610 has the function of the coding device (for example, the coding device 10) according to the above-described embodiment. The reproduction unit 1653 of the content reproduction device 1620 has the function of the decoding device (for example, the decoding device 160) according to the above-described embodiments. Thus, it is possible to improve the coding efficiency of an image layered for each gamut. Further, it is possible to decode the coded stream for which the coding efficiency of an image layered for each gamut is improved.

By transmitting and receiving the coded stream generated according to the present technology in the content reproduction system, it is possible to improve the coding efficiency of an image layered for each gamut, it is possible to decode the coded stream for which the coding efficiency of an image layered for each gamut is improved.

<Tenth Embodiment>

<Application Example of Wireless Communication System of Wi-Fi Standard>

An example of a basic operation of a wireless communication device in a wireless communication system to which the present technology can be applied will be described.

<Example of Basic Operation of Wireless Communication Device>

First, a wireless packet is transmitted and received until peer-to-peer (P2P) connection is established and a specific application is operated.

Next, before connection with a second layer, a wireless packet is transmitted and received until a specific application to be used is designated, P2P connection is established, and a specific application is operated. Thereafter, after the connection with the second layer, a wireless packet is transmitted and received in a case of activation of the specific application.

<Communication Example at Start of Operation of Specific Application>

Figs. 53 and 54 are sequence charts illustrating an example of the transmission and reception of the wireless packet until the above-described peer-to-peer (P2P) connection is established and the specific application is operated and an example of a communication process of each device which is a basis of wireless communication. Specifically, an example of an establishment order of direct connection in which connection is made in the Wi-Fi direct standard (sometimes referred to as Wi-Fi P2P) standardized in Wi-Fi Alliance is illustrated.

Here, in the Wi-Fi direct, a plurality of wireless communication devices detect that the wireless communication devices are mutual present (Device Discovery, Service Discovery). Then, when devices to be connected are selected, the direct connection is established between the selected devices by performing device authentication by Wi-Fi Protected Setup (WPS). In the Wi-Fi direct, the plurality of wireless communication devices determine the role of a master device (Group Owner) or a slave device (Client) to form a communication group.

Here, in the example of the communication process, transmission and reception of some of the packets will be omitted. For example, at the time of initial connection, as described above, packet exchange is necessary in order to use the WPS. In exchange or the like of Authentication Request/Response, packet exchange is also necessary. However, in Figs. 53 and 54, such packet exchange is not illustrated and only connection after second connection is illustrated.

In Figs. 53 and 54, an example of a communication process between a first wireless communication device 1701 and a second wireless communication device 1702 is illustrated, but the same applies to a communication process between other wireless communication devices.

First, Device Discovery is performed between the first wireless communication device 1701 and the second wireless communication device 1702 (1711). For example, the first wireless communication device 1701 transmits a probe request (response request signal) and receives a probe response (response signal) to the probe request from the second wireless communication device 1702. Thus, the first wireless communication device 1701 and the second wireless communication device 1702 can find the mutual presence. Further, device names or types (a TV, a PC, a smartphone, or the like) of partners can be acquired through Device Discovery.

Subsequently, Service Discovery is performed between the first wireless communication device 1701 and the second wireless communication device 1702 (1712). For example, the first wireless communication device 1701 transmits Service Discovery Query to inquire of a service corresponding to the second wireless communication device 1702 found through Device Discovery. Then, the first wireless communication device 1701 acquires the service corresponding to the second wireless communication device 1702 by receiving Service Discovery Response from the second wireless communication device 1702. That is, the service or the like which the partner can perform can be acquired through the service discovery. Examples of the service which the partner can perform include a service and a protocol (Digital Living Network Alliance (DLNA), Digital Media Renderer (DMR), or the like).

Subsequently, a user performs an operation of selecting a connection partner (connection partner selection operation) (1713). The connection partner selection operation is performed by only one of the first wireless communication device 1701 and the second wireless communication device 1702 in some cases. For example, a connection partner selection screen is displayed on a display unit of the first wireless communication device 1701 and the second wireless communication device 1702 is selected as a connection partner through a user's operation on the connection partner selection screen.

When the user performs the connection partner selection operation (1713), Group Owner Negotiation is performed between the first wireless communication device 1701 and the second wireless communication device 1702 (1714). Figs. 53 and 54 illustrate an example in which the first wireless communication device 1701 serves as a group owner 1715 and the second wireless communication device 1702 serves as a client 1716 as the result of Group Owner Negotiation.

Subsequently, the direct connection is established by performing processes (1717 to 1720) between the first wireless communication device 1701 and the second wireless communication device 1702. That is, Association (L2 (second layer) link establishment) (1717) and Secure link establishment (1718) are sequentially performed. Then, IP Address Assignment (1719) and L4 setup (1720) on the L3 by Simple Service Discovery Protocol (SSDP) or the like are sequentially performed. L2 (layer 2) means the second layer (data link layer), L3 (layer 3) means the third layer (network layer), and L4 (layer 4) means the fourth layer (transport layer).

Subsequently, a designation or activation operation for a specific application (application designation activation operation) is performed by the user (1721). The application designation activation operation is performed by only of the first wireless communication device 1701 and the second wireless communication device 1702 in some cases. For example, an application designation activation operation screen is displayed on the display unit of the first wireless communication device 1701 and a specific application is selected on the application designation activation operation screen through the user's operation.

When the application designation activation operation is performed by the user (1721), the specific application corresponding to the application designation activation operation is performed between the first wireless communication device 1701 and the second wireless communication device 1702 (1722).

Here, a case is assumed in which connection between an access point (AP) and a station (STA) is made within a range of a specification (a specification standardized with IEEE802.11) previous to the Wi-Fi Direct standard. In this case, before the connection with the second layer (before association in the term of IEEE802.11), it may not be known in advance which device is connected.

Conversely, in the Wi-Fi Direct, as illustrated in Figs. 53 and 54, information regarding a connection partner can be acquired when a connection candidate partner is found in Device Discovery or Service Discovery (option). The information regarding the connection partner is, for example, a type of basic device or a corresponding specific application. Then, a connection partner can be selected based on the acquired information regarding the connection partner by the user.

By extending this structure, a wireless communication system can also be realized in which a specific application is designated before the connection with the second layer, a connection partner is selected, and a specific application is automatically activated after the selection. An example of a sequence of the connection in this case is illustrated in Fig. 56. An example of the configuration of a frame format transmitted and received in the communication process is illustrated in Fig. 55.

<Example of Configuration of Frame Format>

Fig. 55 is a diagram schematically illustrating an example of the configuration of the frame format transmitted and received in the communication process by devices as a basis of the present technology. That is, Fig. 55 illustrates an example of the configuration of a MAC frame used to establish connection with the second layer. Specifically, an example of the frame format of Association Request/Response (1787) for realizing the sequence illustrated in Fig. 56 is illustrated.

Frame Control (1751) to Sequence Control (1756) are a MAC header. When Association Request is transmitted, B3B2 = "0b00" and B7B6B5B4 = "0b0000" are set in Frame Control (1751). When Association Response is encapsulated, B3B2 = "0b00" and B7B6B5B4 = "0b0001" are also set in Frame Control (1751). "0b00" is "00" in binary, "0b0000" is "0000" in binary, "0b0001" is "0001" in binary.

Here, the MAC frame illustrated in Fig. 55 is basically the Association Request/Response frame format described in sections 7.2.3.4 and 7.2.3.5 of the IEEE802.11-2007 specification. However, the MAC frame differs in that not only Information Element (hereinafter abbreviated to IE) defined in the IEEE802.11 specification but also a uniquely extended IE are included.

In order to indicate Vendor Specific IE (1760), 127 is set as a decimal number in IE Type (Information Element ID (1761)). In this case, in section 7.3.2.26 of the IEEE802.11-2007 specification, a Length field (1762) and an OUI field (1763) continue and vendor specific content (1764) is disposed subsequently.

As the contents of Vendor specific content (1764), a field (IE type (1765)) indicating a type of vendor specific IE is first provided. Subsequently, it is considered that a plurality of subelements (1766) can be configured to be stored.

A title (1767) of a specific application to be used or a role (1768) of a device at the time of an operation of the specific application is considered to be included as the contents of subelements (1766). Information (information for L4 setup) (1769) such as a port number to be used for the specific application or its control or information (Capability information) regarding Capability in the specific application is considered to be included. Here, the Capability information is information that specifies, for example, correspondence to audio transmission/reproduction or correspondence to video transmission/reproduction, for example, when the designated specific application is DLNA.

In the wireless communication system with such a configuration, by applying the present technology described above with reference to Figs. 1 to 32, it is possible to obtain the same advantageous effects as those described above with reference to Figs. 1 to 32. The system has the function of the coding device (for example, the coding device 10) and the function of the decoding device (for example, the decoding device 160) according to the above-described embodiments, and thus can transmit and receive the coded stream. As a result, it is possible to improve the coding efficiency of an image layered for each gamut. Further, it is possible to decode the coded stream for which the coding efficiency of an image layered for each gamut is improved. In the above-described wireless communication system, by transmitting and receiving the coded stream generated according to the present technology, it is possible to improve the coding efficiency of an image layered for each gamut. Further, it is possible to decode the coded stream for which the coding efficiency of an image layered for each gamut is improved.

In the present specification, the example has been described in which various kinds of information such as the offset information are multiplexed in the coded stream and are transmitted from the coding side to the decoding side. However, the scheme of transmitting the information is not limited to the example. For example, the information may be transmitted or recorded as separate data associated with a coded bit stream without being multiplexed in the coded bit stream. Here, the term "associated" means that an image (which may be a part of an image such as a slice or a block) included in the bit stream and information corresponding to the image can be linked at the time of decoding. That is, the information may be transmitted along a transmission path different from that of the image (or the bit stream). The information may be recorded on a recording medium (or another recording area of the same recording medium) different from that of the image (or the bit stream). For example, the information and the image (or the bit stream) may be associated in arbitrary units such as units of a plurality of frames, units of one frame, or units of parts in a frame.

The present disclosure can be applied to a coding device or a decoding device used when a bit stream compressed by orthogonal transform, such as discrete cosine transform, and motion compensation such as MPEG or H.26x is received via a network medium such as satellite broadcasting, a cable TV, the Internet, or a mobile phone or when the bit stream is processed on a storage medium such as light, a magnetic disk, or a flash memory.

In the present specification, the case has been exemplified in which coding and decoding are performed according to a scheme conforming to an HEVC scheme, but a range scope of the present disclosure is not limited thereto. The present specification can also be applied to a coding device and a decoding device of another scheme as long as the coding device and the decoding device is a coding device performing gamut scalable coding and a corresponding decoding device.

Embodiments of the present disclosure are not limited to the above-described embodiments, but various modifications can be made within the scope of the present disclosure without departing from the gist of the present disclosure.

For example, in the present disclosure, cloud computing can be configured in which one function can be distributed to a plurality of devices via a network to be processed in cooperation.

The steps described in the above-described flowcharts can be performed by a single device and can also be distributed and performed a plurality of devices.

When a plurality of processes are included in one step, the plurality of processes included in the one step can be performed by a single device and can also be distributed and performed by a plurality of devices.

The present disclosure can be configured as follows.

(1)
A decoding device includes: a reception unit that receives a coded image of a first layer in an image layered for each gamut; a gamut conversion unit that converts a gamut of a decoded image of a second layer into a gamut of the first layer; a filter processing unit that performs a filter process on a predetermined band of the decoded image of the second layer converted by the gamut conversion unit; and a decoding unit that decodes the coded image of the first layer received by the reception unit using the decoded image of the second layer subjected to the filter process by the filter processing unit to generate a decoded image of the first layer.

(2)
In the decoding device described in the foregoing (1), the filter processing unit may perform the filter process on the decoded image of the first layer decoded by the decoding unit. The decoding unit may decode the coded image of the first layer using the decoded image of the first layer and the decoded image of the second layer subjected to the filter process by the filter processing.

(3)
In the decoding device described in the foregoing (2), the filter processing unit may perform a sample adaptive offset (SAO) process on the predetermined band of the decoded image of the second layer and the decoded image of the first layer.

(4)
In the decoding device described in the foregoing (3), the filter processing unit may perform a band offset process on the predetermined band of the decoded image of the second layer.

(5)
In the decoding device described in the foregoing (4), the filter processing unit may perform the band offset process on a low-luminance band of the decoded image of the second layer.

(6)
In the decoding device described in the foregoing (4) or (5), the filter processing unit may perform the band offset process on a high-luminance band of the decoded image of the second layer.

(7)
In the decoding device described in any one of the foregoing (1) to (6), the reception unit may receive a parameter of the filter process. The filter processing unit may perform the filter process on the predetermined band of the decoded image of the second layer using the parameter received by the reception unit.

(8)
In the decoding device described in the foregoing (7), the reception unit may receive the parameter in a largest coding unit (LCU).

(9)
A decoding method in a decoding device includes: a reception step of receiving a coded image of a first layer in an image layered for each gamut; a gamut conversion step of converting a gamut of a decoded image of a second layer into a gamut of the first layer; a filter processing step of performing a filter process on a predetermined band of the decoded image of the second layer converted in a process of the gamut conversion step; and a decoding step of decoding the coded image of the first layer received in a process of the reception step using the decoded image of the second layer subjected to the filter process in a process of the filter processing step to generate a decoded image of the first layer.

(10)

A coding device includes: a gamut conversion unit that converts a gamut of a decoded image of a second layer used for coding of an image of a first layer in an image layered for each gamut into a gamut of the first layer; a filter processing unit that performs a filter process on a predetermined band of the decoded image of the second layer converted by the gamut conversion unit; a coding unit that codes the image of the first layer using the decoded image of the second layer subjected to the filter process by the filter processing to generate a coded image of the first layer; and a transmission unit that transmits the coded image of the first layer generated by the coding unit.

(11)

The coding device described in the foregoing (10) may further include a decoding unit that decodes the coded image of the first layer to generate a decoded image of the first layer. The filter processing may perform the filter process on the decoded image of the first layer decoded by the decoding unit. The coding unit may code the image of the first layer using the decoded image of the first layer and the decoded image of the second layer subjected to the filter process by the filter processing.

(12)

In the coding device described in the foregoing (11), the filter processing unit may perform a sample adaptive offset (SAO) process on the predetermined band of the decoded image of the second layer and the decoded image of the first layer.

(13)

In the coding device described in the foregoing (12), the filter processing unit may perform a band offset process on the predetermined band of the decoded image of the second layer.

(14)

In the coding device described in the foregoing (13), the filter processing unit may perform the band offset process on a low-luminance band of the decoded image of the second layer.

(15)

In the coding device described in the foregoing (13) or (14), the filter processing unit may perform the band offset process on a high-luminance band of the decoded image of the second layer.

(16)

The coding device described in any one of the foregoing (10) to (15) may further include a calculation unit that calculates a parameter of the filter process. The filter processing unit may perform the filter process on the predetermined band of the decoded image of the second layer using the parameter calculated by the calculation unit. The transmission unit may transmit the parameter.

(17)

In the coding device described in the foregoing (16), the calculation unit may calculate the parameter in a largest coding unit (LCU).

(18)

A coding method in a coding device includes: a gamut conversion step of converting a gamut of a decoded image of a second layer used for coding of an image of a first layer in an image layered for each gamut into a gamut of the first layer; a filter processing step of performing a filter process on a predetermined band of the decoded image of the second layer converted in a process of the gamut conversion step; a coding step of coding the image of the first layer using the decoded image of the second layer subjected to the filter process by the filter processing to generate a coded image of the first layer; and a transmission step of transmitting the coded image of the first layer generated in a process of the coding step. Reference Signs List

| | |
|---|---|
| 30 | CODING DEVICE |
| 34 | TRANSMISSION UNIT |
| 73 | CALCULATION UNIT |
| 81 | ADDITION UNIT |
| 92 | GAMUT CONVERSION UNIT |
| 113 | BAND OFFSET CALCULATION UNIT |
| 114 | FILTER PROCESSING UNIT |
| 160 | DECODING DEVICE |
| 161 | RECEPTION UNIT |
| 205 | ADDITION UNIT |
| 217 | GAMUT CONVERSION UNIT |
| 234 | FILTER PROCESSING UNIT |

## Claims

1. A decoding device comprising:

   a reception unit that receives a coded image of a first layer in an image layered for each gamut;
   a gamut conversion unit that converts a gamut of a decoded image of a second layer into a gamut of the first layer;
   a filter processing unit that performs a filter process on a predetermined band of the decoded image of the second layer converted by the gamut conversion unit; and
   a decoding unit that decodes the coded image of the first layer received by the reception unit using the decoded image of the second layer subjected to the filter process by the filter processing unit to generate a decoded image of the first layer.

2. The decoding device according to claim 1,
   wherein the filter processing unit performs the filter process on the decoded image of the first layer decoded by the decoding unit, and
   wherein the decoding unit decodes the coded image of the first layer using the decoded image of the first layer and the decoded image of the second layer subjected to the filter process by the filter processing.

3. The decoding device according to claim 2, wherein the filter processing unit performs a sample adaptive offset (SAO) process on the predetermined band of the decoded image of the second layer and the decoded image of the first layer.

4. The decoding device according to claim 3, wherein the filter processing unit performs a band offset process on the predetermined band of the decoded image of the second layer.

5. The decoding device according to claim 4, wherein the filter processing unit performs the band offset process on a low-luminance band of the decoded image of the second layer.

6. The decoding device according to claim 4, wherein the filter processing unit performs the band offset process on a high-luminance band of the decoded image of the second layer.

7. The decoding device according to claim 1,
   wherein the reception unit receives a parameter of the filter process, and
   wherein the filter processing unit performs the filter process on the predetermined band of the decoded image of the second layer using the parameter received by the reception unit.

8. The decoding device according to claim 7, wherein the reception unit receives the parameter in a largest coding unit (LCU).

9. A decoding method in a decoding device, comprising:

   a reception step of receiving a coded image of a first layer in an image layered for each gamut;
   a gamut conversion step of converting a gamut of a decoded image of a second layer into a gamut of the first layer;
   a filter processing step of performing a filter process on a predetermined band of the decoded image of the second layer converted in a process of the gamut conversion step; and
   a decoding step of decoding the coded image of the first layer received in a process of the reception step using the decoded image of the second layer subjected to the filter process in a process of the filter processing step to generate a decoded image of the first layer.

10. A coding device comprising:

    a gamut conversion unit that converts a gamut of a decoded image of a second layer used for coding of an image of a first layer in an image layered for each gamut into a gamut of the first layer;
    a filter processing unit that performs a filter process on a predetermined band of the decoded image of the second layer converted by the gamut conversion unit;
    a coding unit that codes the image of the first layer using the decoded image of the second layer subjected to the filter process by the filter processing to generate a coded image of the first layer; and
    a transmission unit that transmits the coded image of the first layer generated by the coding unit.

**11.** The coding device according to claim 10, further comprising:

a decoding unit that decodes the coded image of the first layer to generate a decoded image of the first layer,
wherein the filter processing performs the filter process on the decoded image of the first layer decoded by the decoding unit, and
wherein the coding unit codes the image of the first layer using the decoded image of the first layer and the decoded image of the second layer subjected to the filter process by the filter processing.

**12.** The coding device according to claim 11, wherein the filter processing unit performs a sample adaptive offset (SAO) process on the predetermined band of the decoded image of the second layer and the decoded image of the first layer.

**13.** The coding device according to claim 12, wherein the filter processing unit performs a band offset process on the predetermined band of the decoded image of the second layer.

**14.** The coding device according to claim 13, wherein the filter processing unit performs the band offset process on a low-luminance band of the decoded image of the second layer.

**15.** The coding device according to claim 13, wherein the filter processing unit performs the band offset process on a high-luminance band of the decoded image of the second layer.

**16.** The coding device according to claim 10, further comprising:

a calculation unit that calculates a parameter of the filter process,
wherein the filter processing unit performs the filter process on the predetermined band of the decoded image of the second layer using the parameter calculated by the calculation unit, and
wherein the transmission unit transmits the parameter.

**17.** The coding device according to claim 16, wherein the calculation unit calculates the parameter in a largest coding unit (LCU).

**18.** A coding method in a coding device, comprising:

a gamut conversion step of converting a gamut of a decoded image of a second layer used for coding of an image of a first layer in an image layered for each gamut into a gamut of the first layer;
a filter processing step of performing a filter process on a predetermined band of the decoded image of the second layer converted in a process of the gamut conversion step;
a coding step of coding the image of the first layer using the decoded image of the second layer subjected to the filter process by the filter processing to generate a coded image of the first layer; and
a transmission step of transmitting the coded image of the first layer generated in a process of the coding step.

FIG. 1

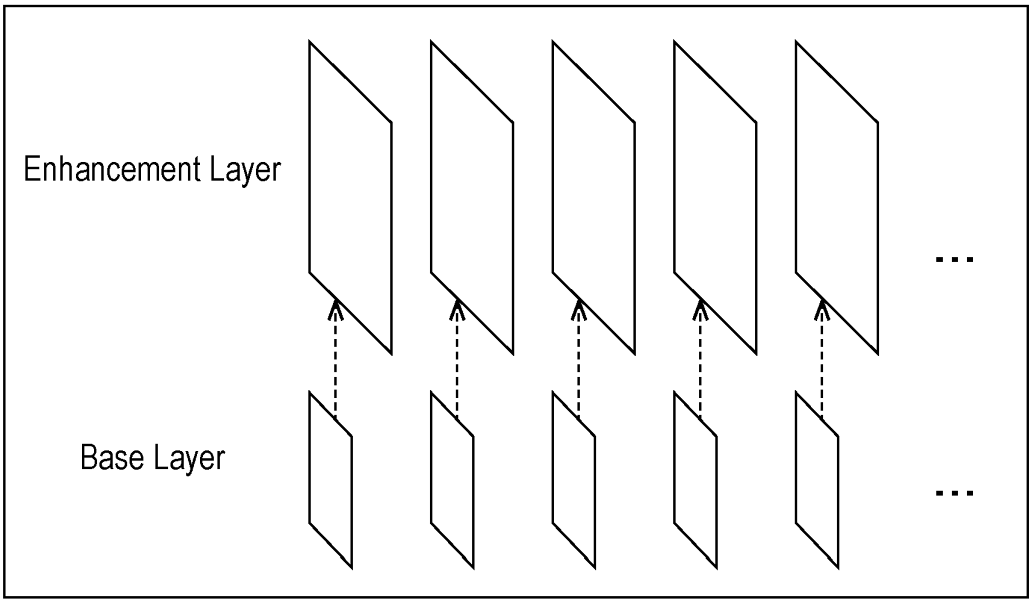


FIG. 2

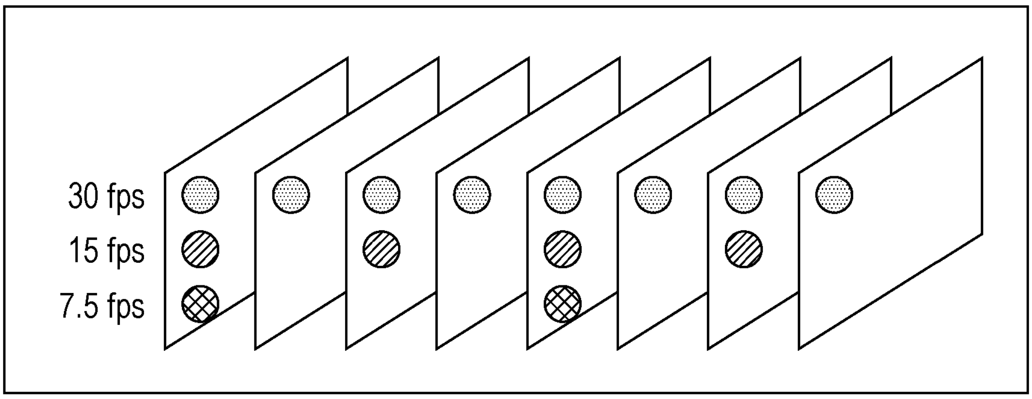

FIG. 3

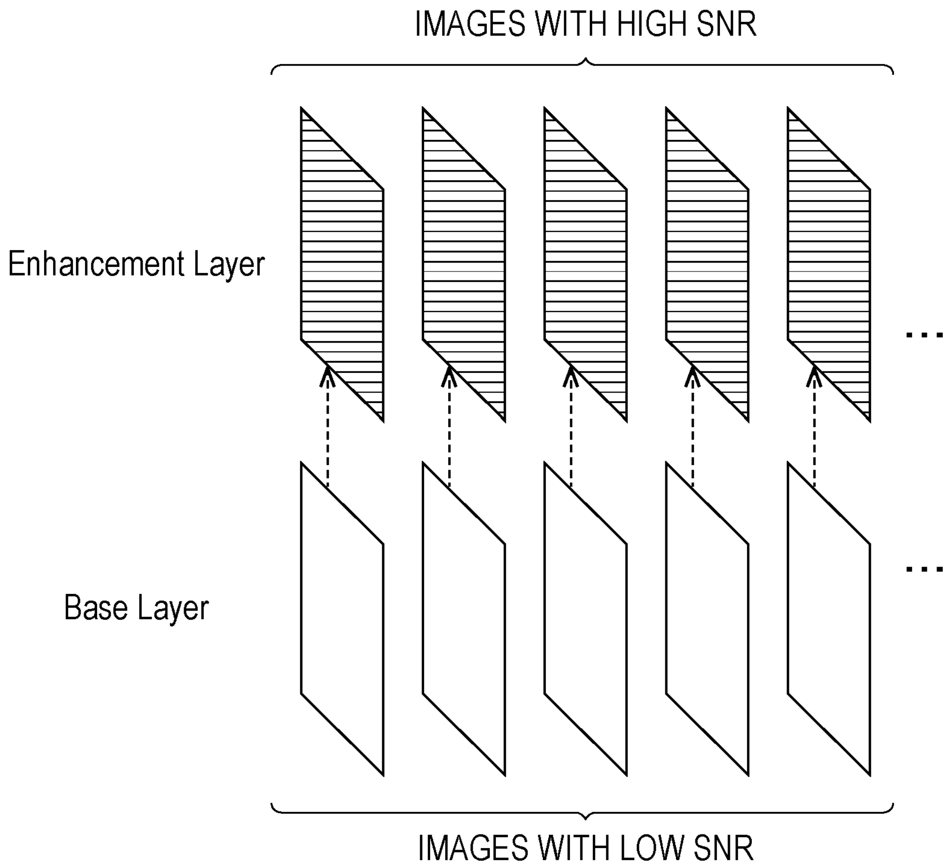
IMAGES WITH HIGH SNR
Enhancement Layer
...
Base Layer
...
IMAGES WITH LOW SNR

FIG. 4

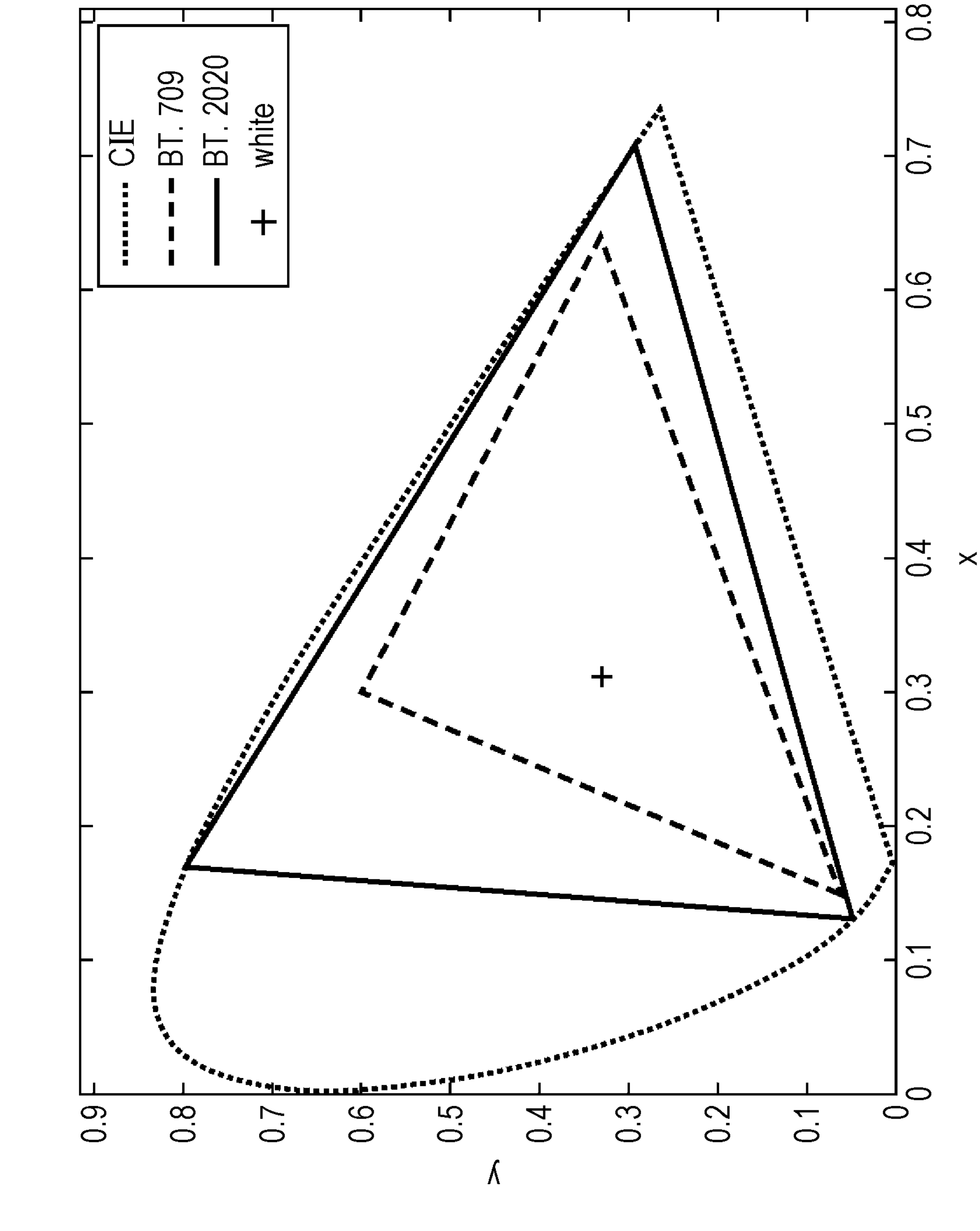

FIG. 5

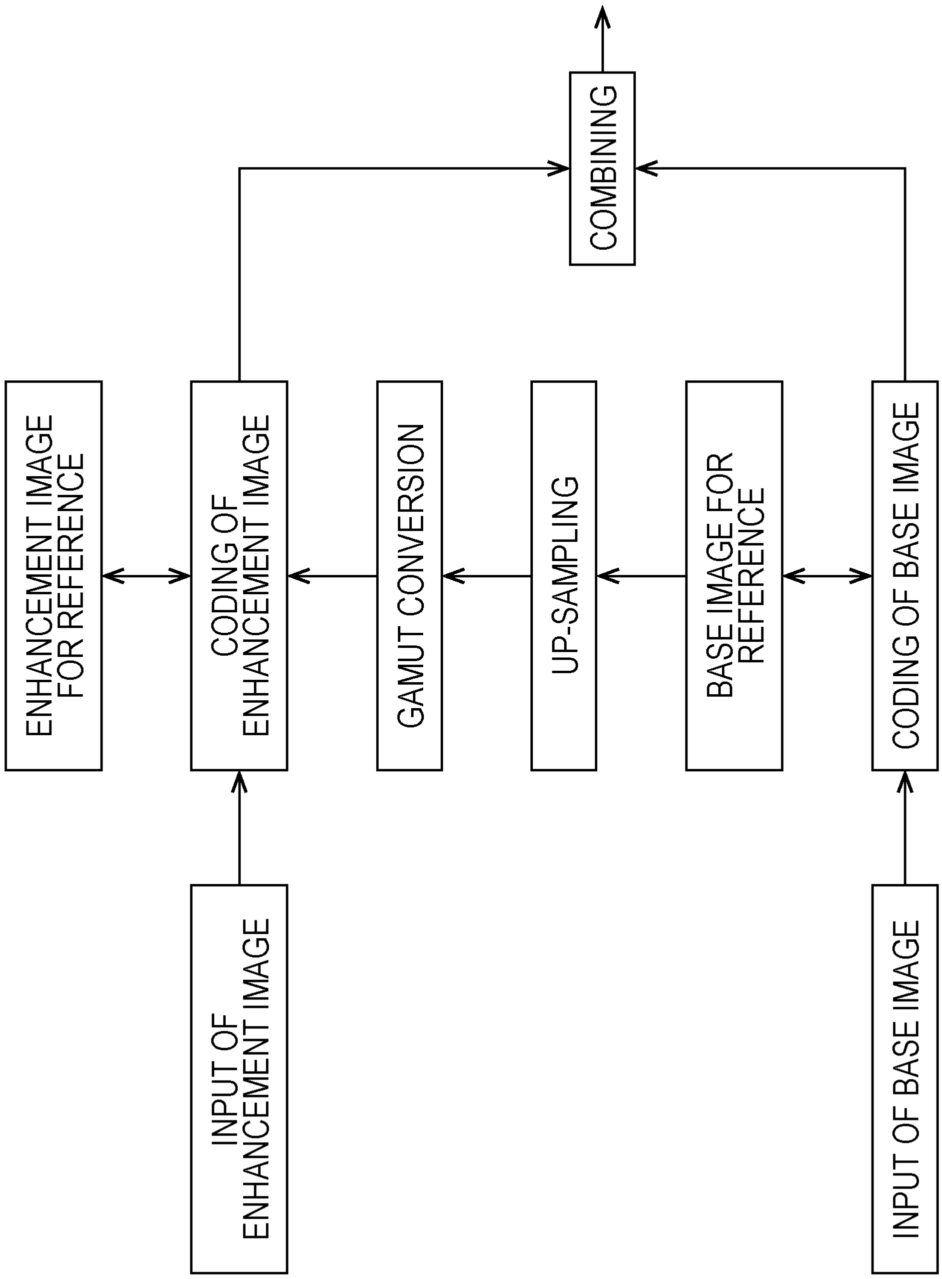
INPUT OF ENHANCEMENT IMAGE
INPUT OF BASE IMAGE
ENHANCEMENT IMAGE FOR REFERENCE
CODING OF ENHANCEMENT IMAGE
GAMUT CONVERSION
UP-SAMPLING
BASE IMAGE FOR REFERENCE
CODING OF BASE IMAGE
COMBINING

FIG. 6

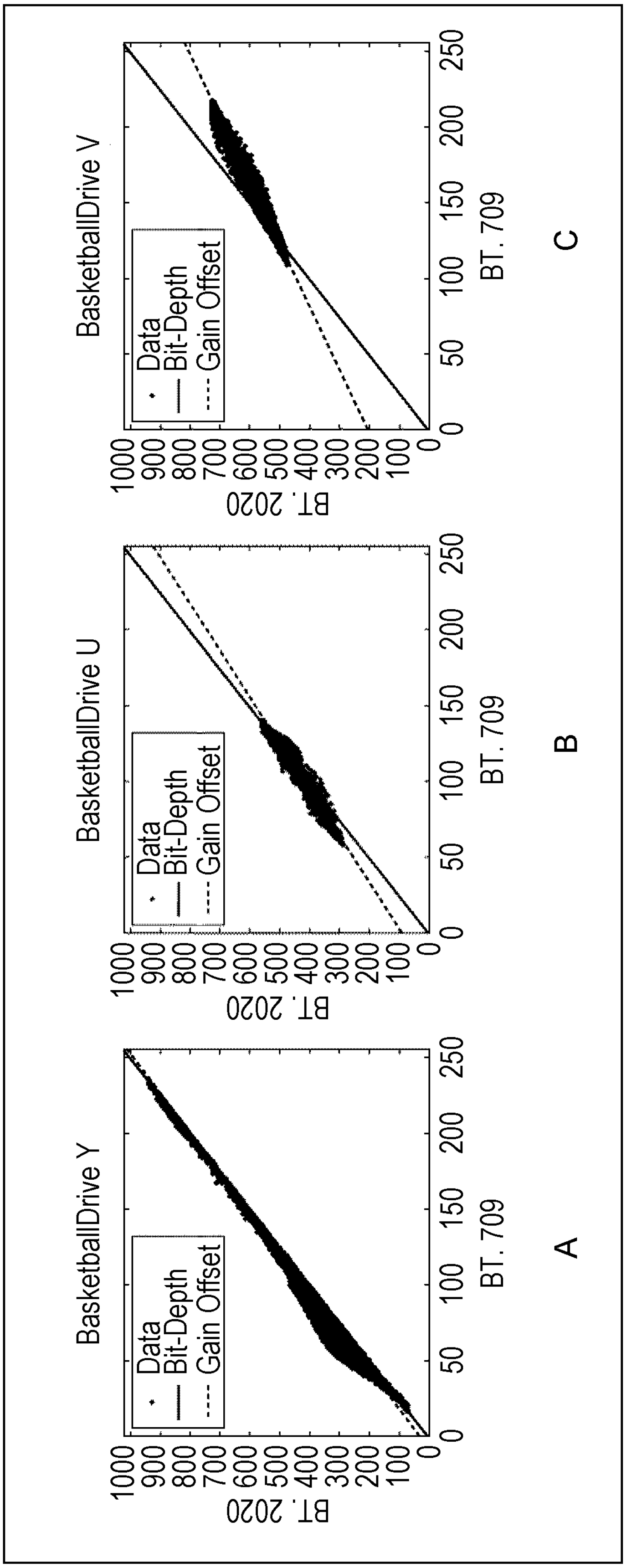
BasketballDrive Y
Data
Bit-Depth
Gain Offset
BT. 2020
BT. 709
A
BasketballDrive U
Data
Bit-Depth
Gain Offset
BT. 2020
BT. 709
B
BasketballDrive V
Data
Bit-Depth
Gain Offset
BT. 2020
BT. 709
C

FIG. 7

| | BIT SHIFT METHOD | GAIN OFFSET METHOD |
|---|---|---|
| $Y_{2020}$ | $Y_{709} << 2$ | $g_1 \cdot Y_{709} + o_1$ |
| $U_{2020}$ | $U_{709} << 2$ | $g_2 \cdot U_{709} + o_2$ |
| $V_{2020}$ | $V_{709} << 2$ | $g_3 \cdot V_{709} + o_3$ |
| NUMBER OF PARAMETERS | 0 | 0/6 |

# FIG. 8

A

| |
|---|
| **pps_extension_flag** |
| if (pps_extension_flag) |
| ······ **use_color_prediction** |
| ········· if (use_color_prediction) |
| ··········· **color_pred_data ( )** |
| rbsp_trailing_bits ( ) |

B

| **color_prediction_model** | METHODS |
|---|---|
| 0 | BIT SHIFT METHOD |
| 1 | FIXE GAIN OFFSET METHOD |
| 2 | ADAPTIVE GAIN OFFSET METHOD |

FIG. 9

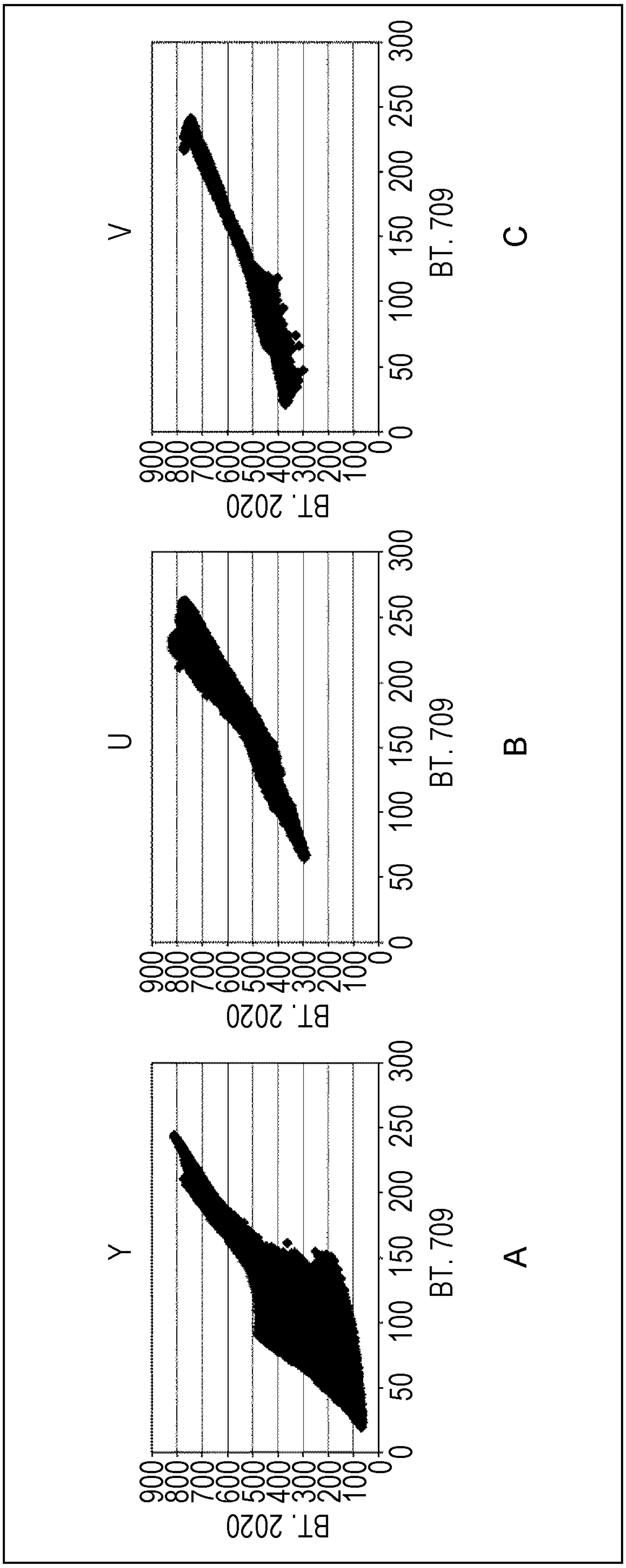
Y
BT. 2020
BT. 709
A
U
BT. 2020
BT. 709
B
V
BT. 2020
BT. 709
C
900
800
700
600
500
400
300
200
100
0
0
50
100
150
200
250
300

FIG. 10

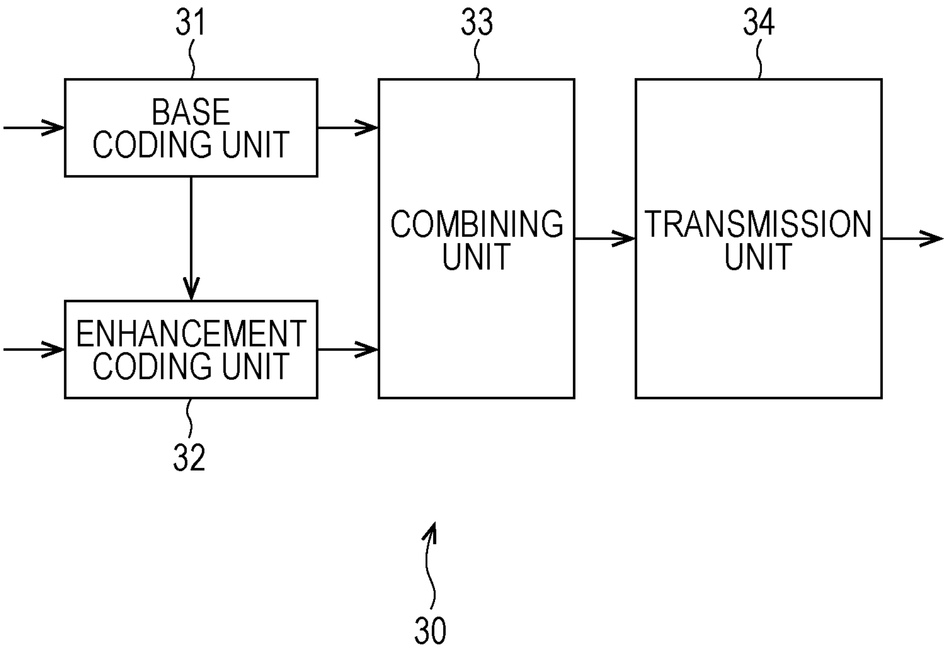
31
BASE CODING UNIT
33
COMBINING UNIT
34
TRANSMISSION UNIT
ENHANCEMENT CODING UNIT
32
30

FIG. 11

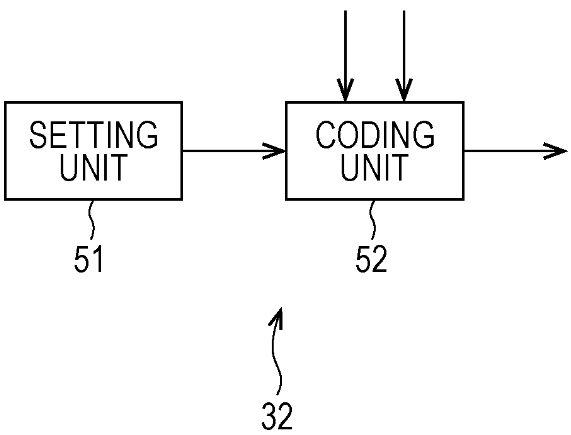
SETTING UNIT
CODING UNIT
51
52
32

FIG. 12

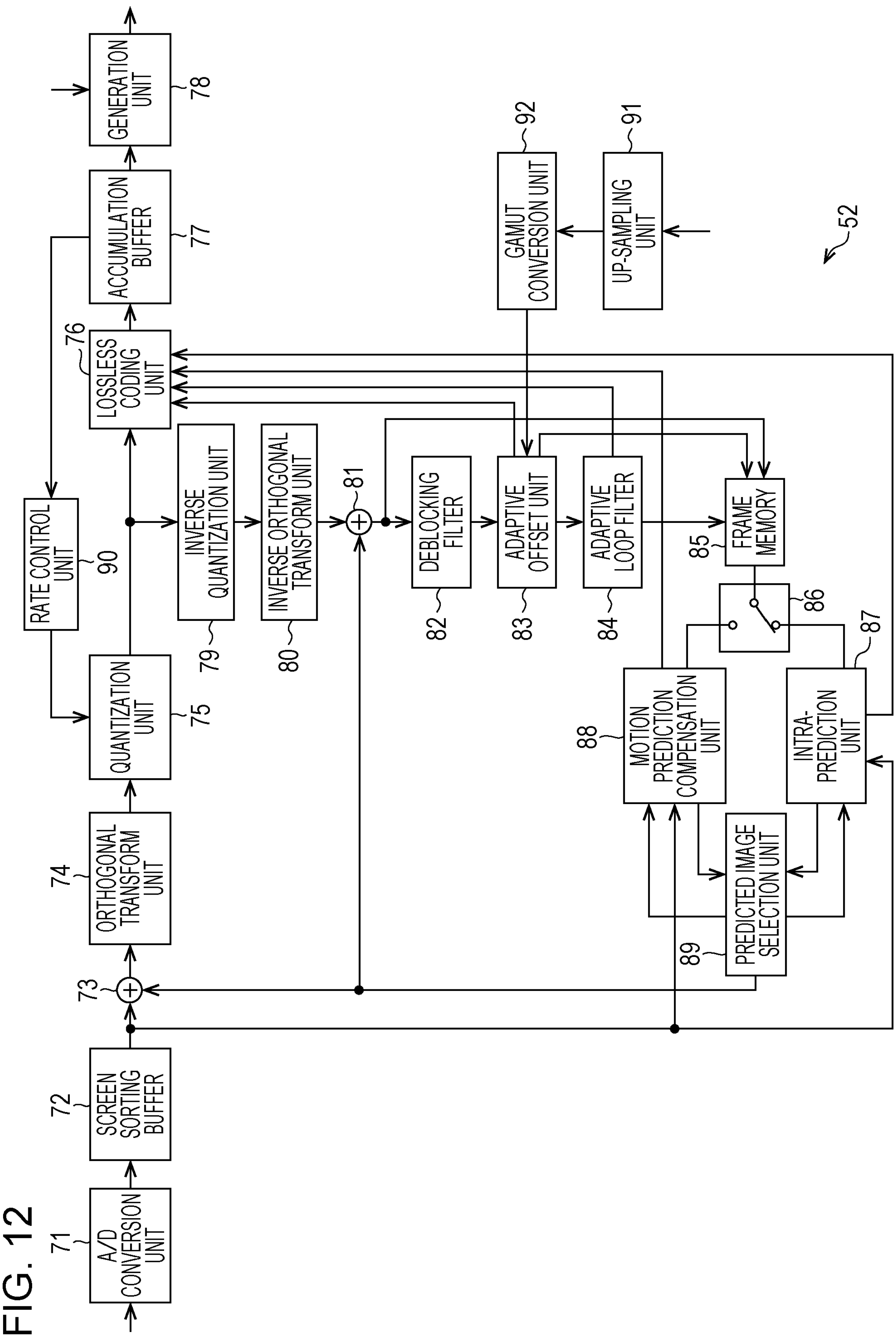
A/D CONVERSION UNIT
71
SCREEN SORTING BUFFER
72
73
ORTHOGONAL TRANSFORM UNIT
74
QUANTIZATION UNIT
75
LOSSLESS CODING UNIT
76
ACCUMULATION BUFFER
77
GENERATION UNIT
78
INVERSE QUANTIZATION UNIT
79
INVERSE ORTHOGONAL TRANSFORM UNIT
80
81
DEBLOCKING FILTER
82
ADAPTIVE OFFSET UNIT
83
ADAPTIVE LOOP FILTER
84
FRAME MEMORY
85
86
INTRA-PREDICTION UNIT
87
MOTION PREDICTION COMPENSATION UNIT
88
PREDICTED IMAGE SELECTION UNIT
89
RATE CONTROL UNIT
90
UP-SAMPLING UNIT
91
GAMUT CONVERSION UNIT
92
52

FIG. 13

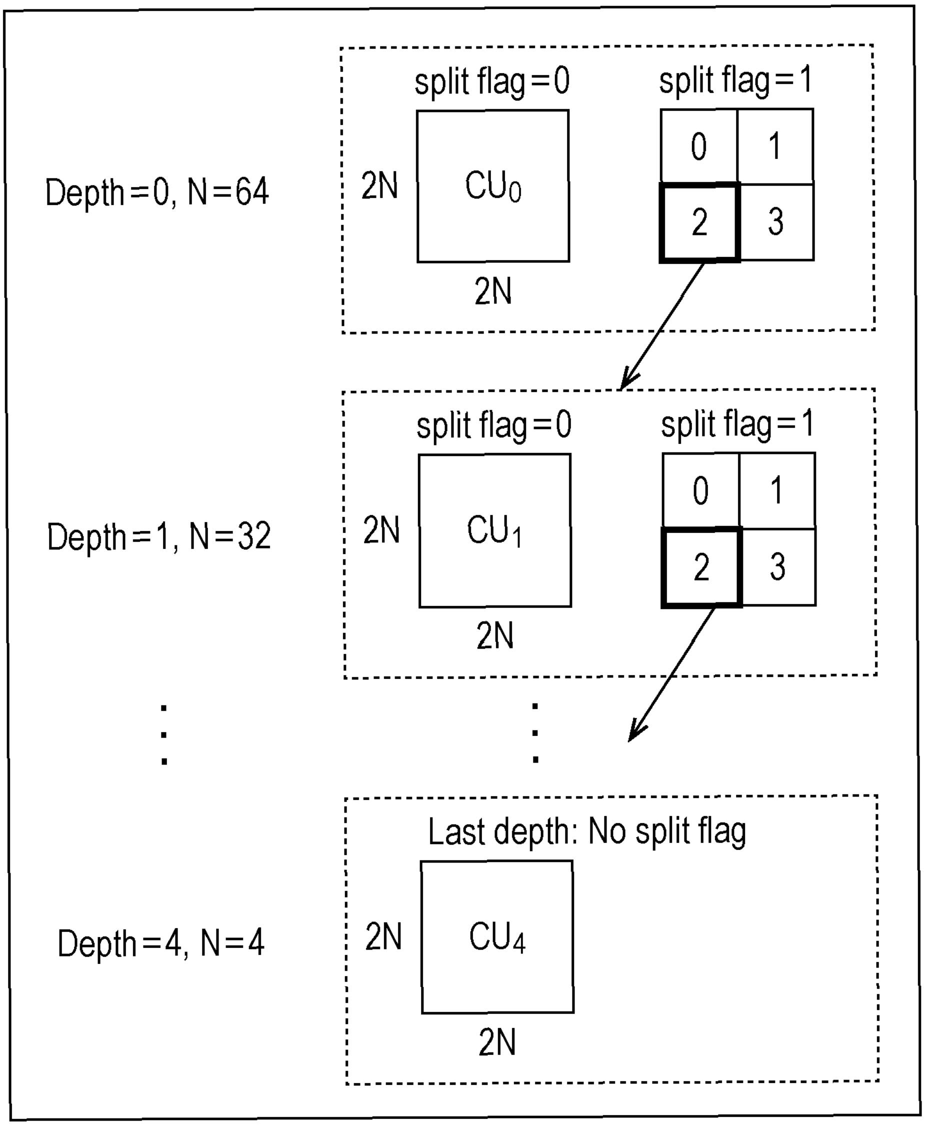
Depth=0, N=64
split flag=0
split flag=1
2N
CU0
2N
0
1
2
3
Depth=1, N=32
split flag=0
split flag=1
2N
CU1
2N
0
1
2
3
Last depth: No split flag
Depth=4, N=4
2N
CU4
2N

FIG. 14

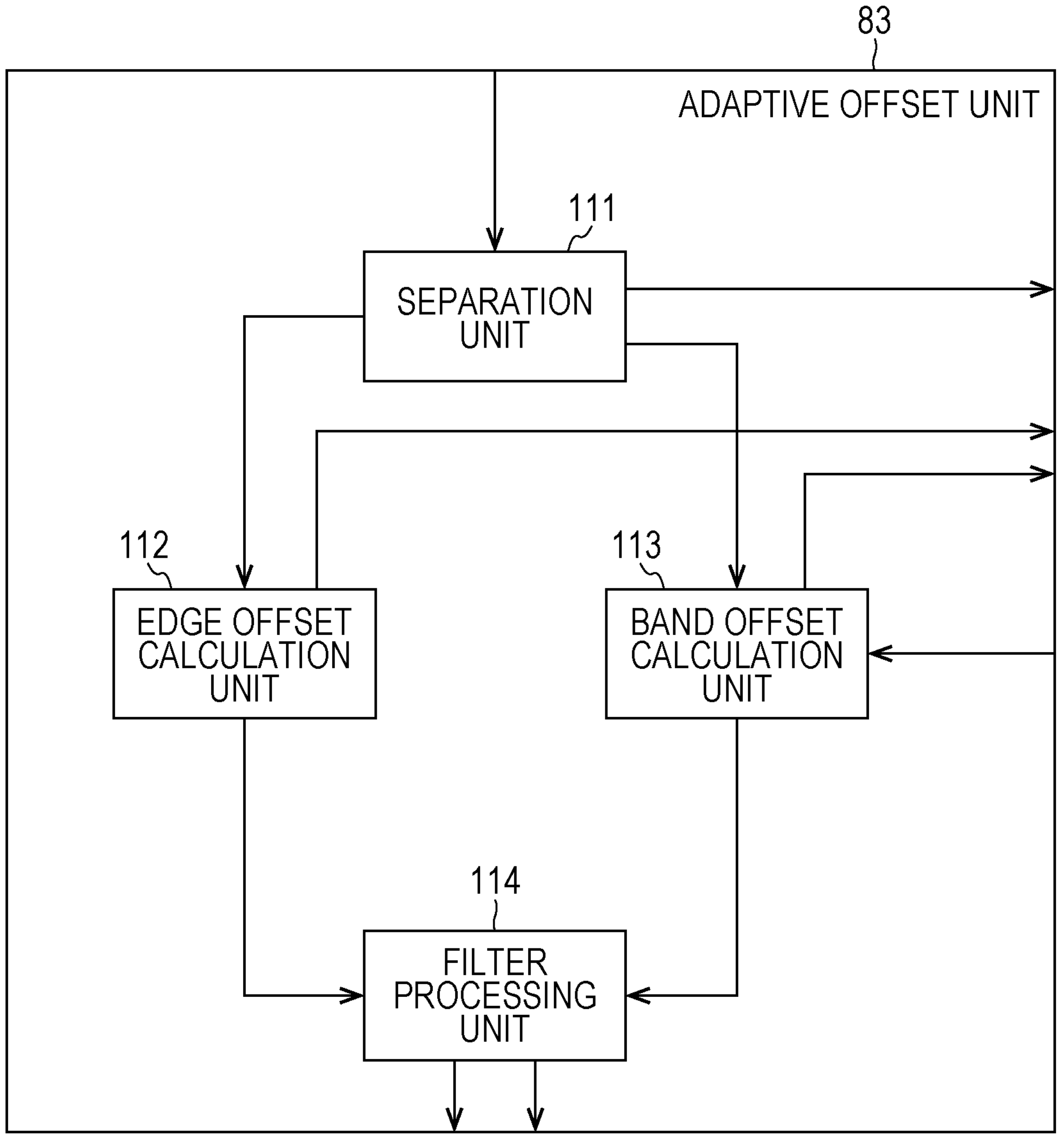
83
ADAPTIVE OFFSET UNIT
111
SEPARATION UNIT
112
EDGE OFFSET CALCULATION UNIT
113
BAND OFFSET CALCULATION UNIT
114
FILTER PROCESSING UNIT

FIG. 15

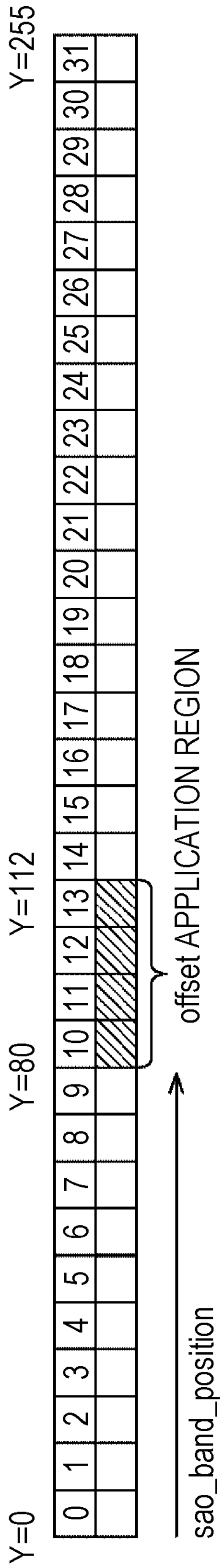
Y=0
Y=80
Y=112
Y=255
0 1 2 3 4 5 6 7 8 9 10 11 12 13 14 15 16 17 18 19 20 21 22 23 24 25 26 27 28 29 30 31
offset APPLICATION REGION
sao_band_position

FIG. 16

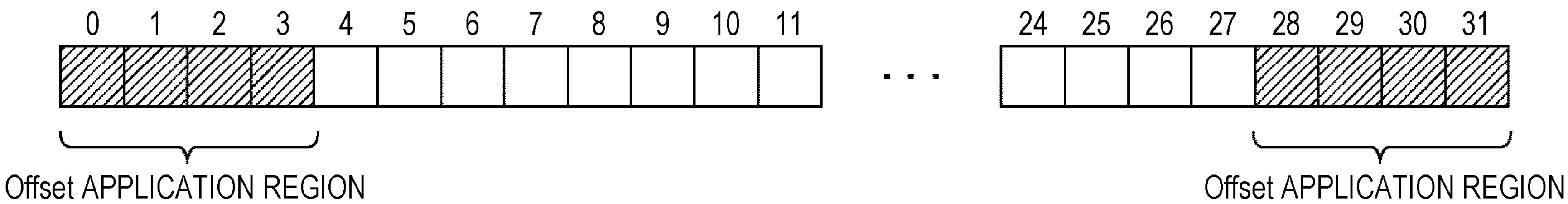
0
1
2
3
4
5
6
7
8
9
10
11
24
25
26
27
28
29
30
31
Offset APPLICATION REGION
Offset APPLICATION REGION

FIG. 17

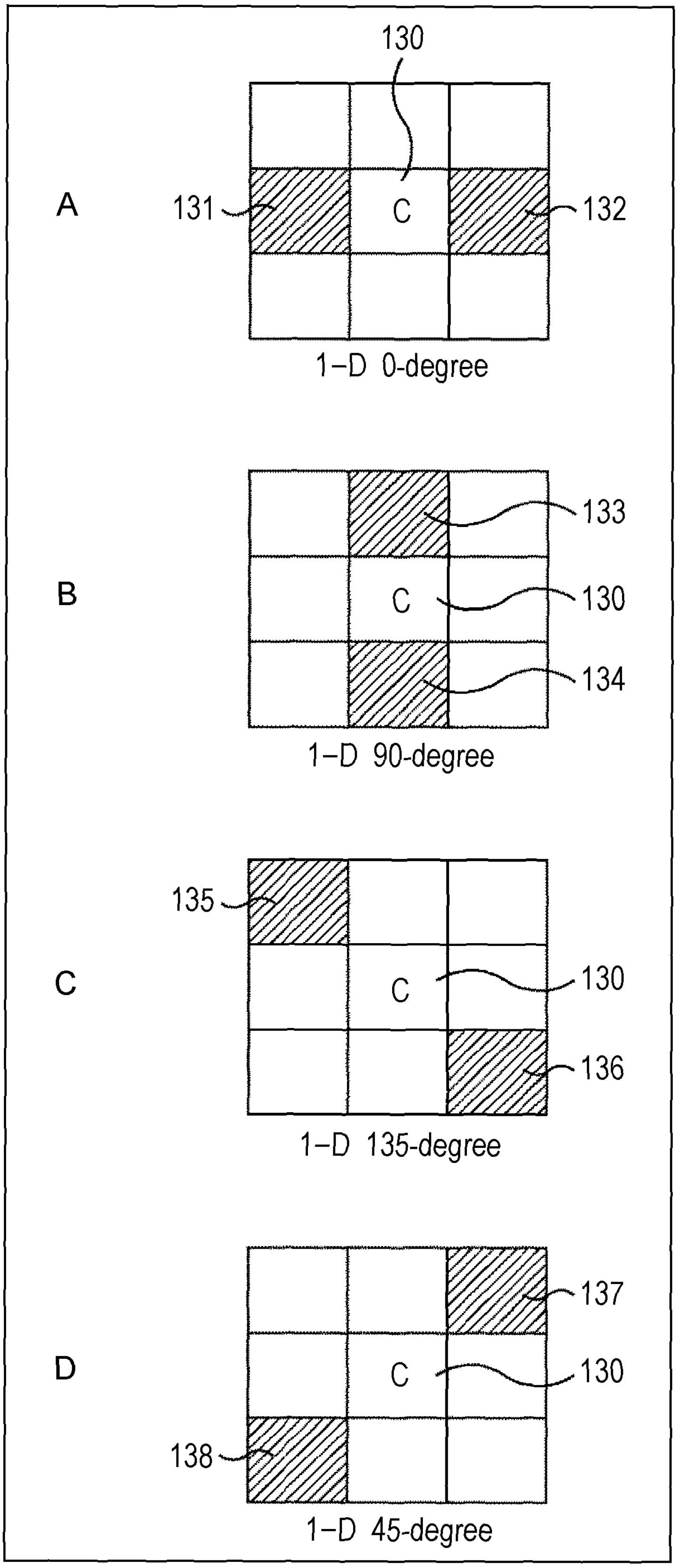
A
130
131
C
132
1–D 0-degree
B
133
C
130
134
1–D 90-degree
C
135
C
130
136
1–D 135-degree
D
137
C
130
138
1–D 45-degree

FIG. 18

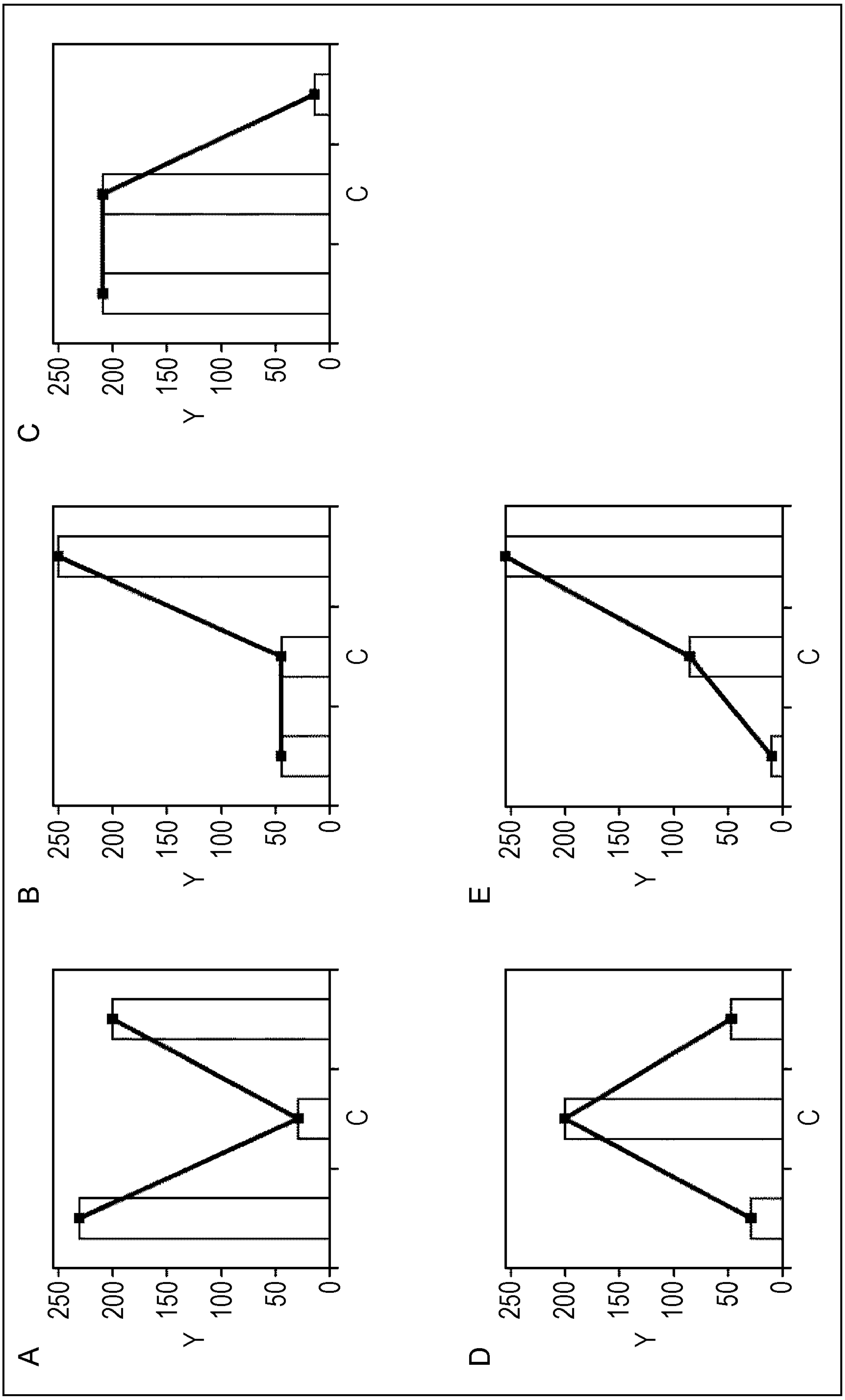

# FIG. 19

| | | |
|---|---|---|
| 1 | sao(rx,ry){ | Descriptor |
| 2 | **inter_layer_sao_flag** | **u(1)** |
| 3 | if(rx>0){ | |
| 4 | leftCtbInSliceSeg = CtbAddrInRs>SliceAddrRs | |
| 5 | leftCtbInTile = TileId[CtbAddrInTs] == TileId[CtbAddrRsToTs[CtbAddrInRs - 1]] | |
| 6 | if(leftCtbInSliceSeg && leftCtbInTile) | |
| 7 | sao_merge_left_flag | ae(v) |
| 8 | } | |
| 9 | if(ry>0 && !sao_merge_left_flag){ | |
| 10 | upCtbInSliceSeg = (CtbAddrInRs - PicWidthInCtbsY) >= SliceAddrRs | |
| 11 | upCtbInTile = TileId[CtbAddrInTs] == TileId[ CtbAddrRsToTs[CtbAddrInRs - PicWidthInCtbsY]] | |
| 12 | if(upCtbInSliceSeg && upCtbInTile) | |
| 13 | sao_merge_up_flag | ae(v) |
| 14 | } | |
| 15 | if(!sao_merge_up_flag && !sao_merge_left_flag) | |
| 16 | for(cIdx = 0;cIdx<3;cIdx++) | |
| 17 | if((slice_sao_luma_flag && cIdx == 0) \|\| (slice_sao_chroma_flag && cIdx>0)){ | |
| 18 | if(cIdx == 0){ | |
| 19 | **if((use_color_prediction ==1 && inter_layer_sao_flag == 1)** | |
| 20 | **sao_type_idx_luma = 1** | |
| 21 | **else** | |
| 22 | sao_type_idx_luma | ae(v) |
| 23 | **}** | |
| 24 | else if(cIdx == 1){ | |
| 25 | **if(use_color_prediction == 1 && inter_layer_sao_flag == 1)** | |
| 26 | **sao_type_idx_chroma = 1** | |
| 27 | **else** | |
| 28 | sao_type_idx_chroma | ae(v) |
| 29 | **}** | |
| 30 | if(SaoTypeIdx[cIdx][rx][ry] != 0){ | |
| 31 | for(i = 0;i<4;i++) | |
| 32 | sao_offset_abs[cIdx][rx][ry][i] | ae(v) |
| 33 | if(SaoTypeIdx[cIdx][rx][ry] == 1){ | |
| 34 | for(i = 0;i<4;i++) | |
| 35 | if(sao_offset_abs[cIdx][rx][ry][i] != 0) | |
| 36 | sao_offset_sign[cIdx][rx][ry][i] | ae(v) |
| 37 | sao_band_position[cIdx][rx][ry] | ae(v) |
| 38 | }else{ | |
| 39 | if(cIdx == 0) | |
| 40 | sao_eo_class_luma | ae(v) |
| 41 | if(cIdx == 1) | |
| 42 | sao_eo_class_chroma | ae(v) |
| 43 | } | |
| 44 | } | |
| 45 | } | |
| 46 | } | |

FIG. 20

| SaoTypeIdx[cIdx][rx][ry] | SAO type (informative) |
|---|---|
| 0 | Not applied |
| 1 | Band offset |
| 2 | Edge offset |

FIG. 21

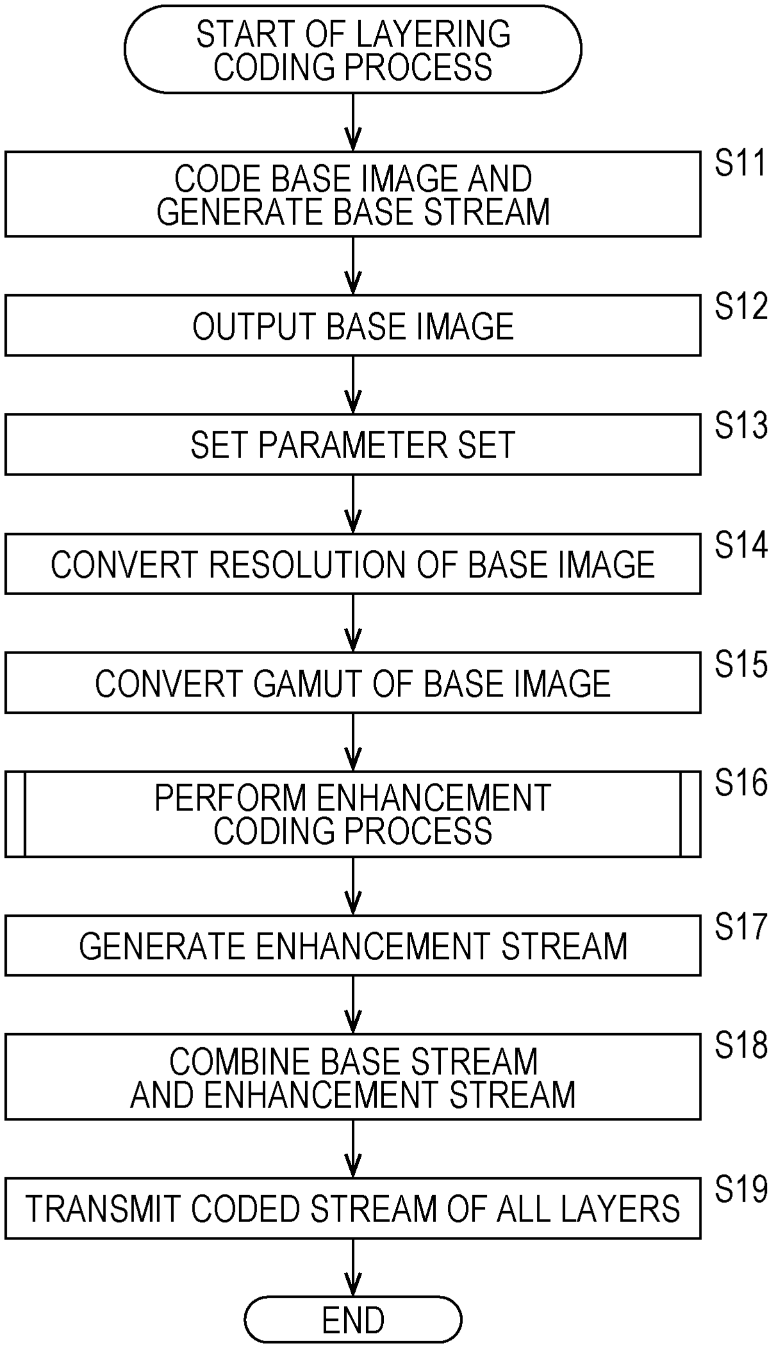
START OF LAYERING CODING PROCESS
CODE BASE IMAGE AND GENERATE BASE STREAM
S11
OUTPUT BASE IMAGE
S12
SET PARAMETER SET
S13
CONVERT RESOLUTION OF BASE IMAGE
S14
CONVERT GAMUT OF BASE IMAGE
S15
PERFORM ENHANCEMENT CODING PROCESS
S16
GENERATE ENHANCEMENT STREAM
S17
COMBINE BASE STREAM AND ENHANCEMENT STREAM
S18
TRANSMIT CODED STREAM OF ALL LAYERS
S19
END

FIG. 22

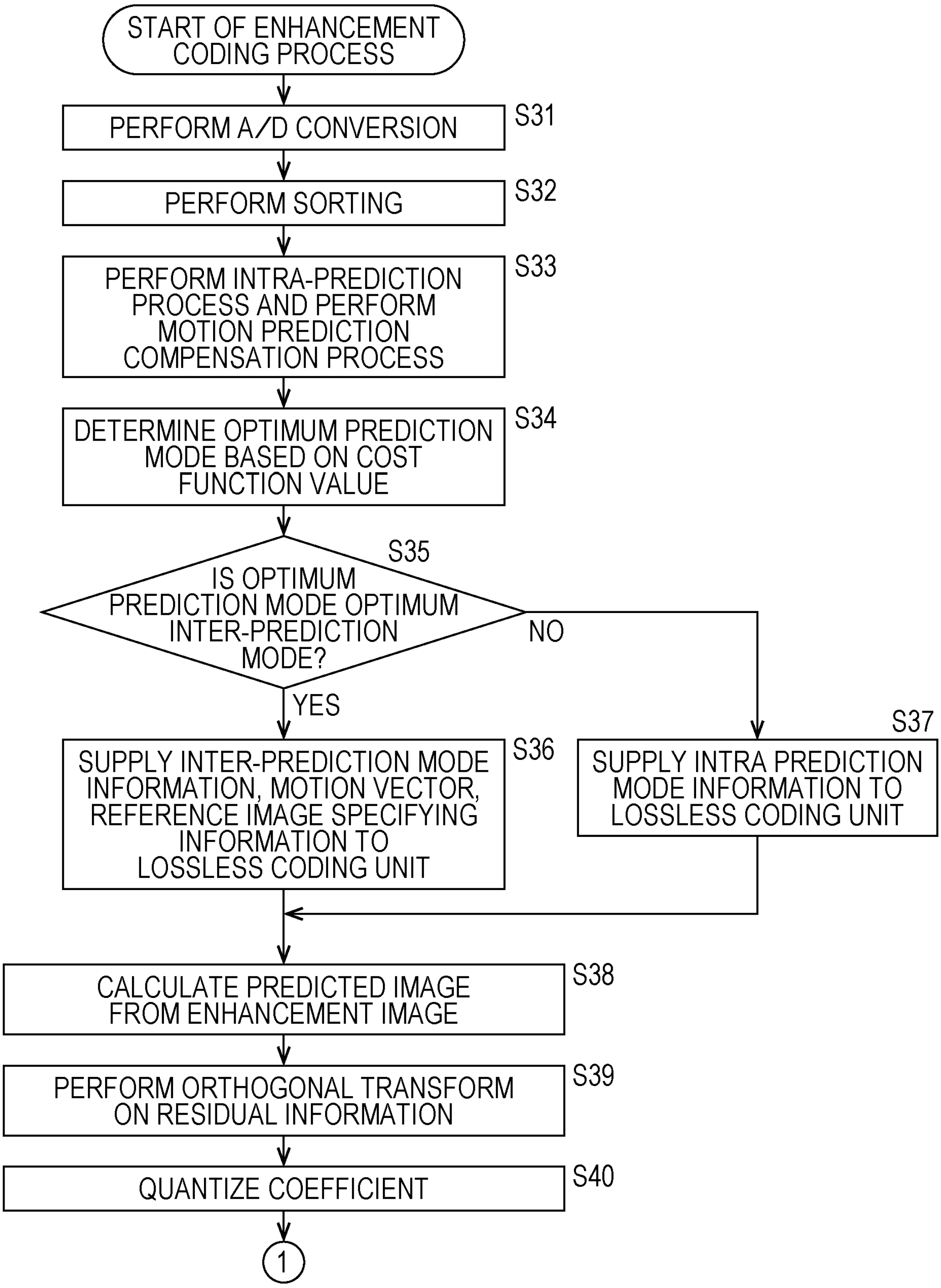
START OF ENHANCEMENT CODING PROCESS
PERFORM A/D CONVERSION
S31
PERFORM SORTING
S32
PERFORM INTRA-PREDICTION PROCESS AND PERFORM MOTION PREDICTION COMPENSATION PROCESS
S33
DETERMINE OPTIMUM PREDICTION MODE BASED ON COST FUNCTION VALUE
S34
IS OPTIMUM PREDICTION MODE OPTIMUM INTER-PREDICTION MODE?
S35
NO
YES
SUPPLY INTER-PREDICTION MODE INFORMATION, MOTION VECTOR, REFERENCE IMAGE SPECIFYING INFORMATION TO LOSSLESS CODING UNIT
S36
SUPPLY INTRA PREDICTION MODE INFORMATION TO LOSSLESS CODING UNIT
S37
CALCULATE PREDICTED IMAGE FROM ENHANCEMENT IMAGE
S38
PERFORM ORTHOGONAL TRANSFORM ON RESIDUAL INFORMATION
S39
QUANTIZE COEFFICIENT
S40
1

FIG. 23

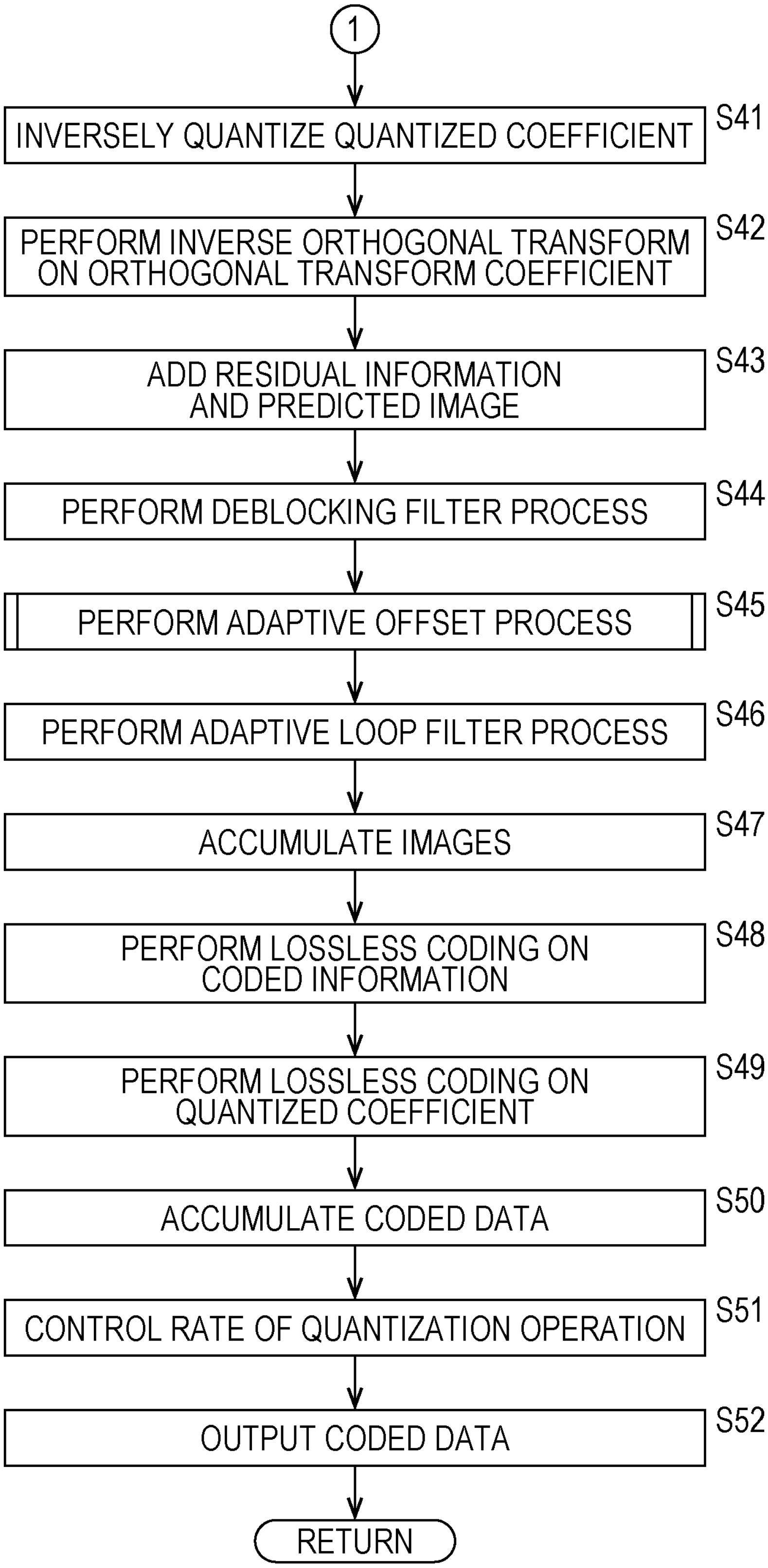
1
INVERSELY QUANTIZE QUANTIZED COEFFICIENT
S41
PERFORM INVERSE ORTHOGONAL TRANSFORM ON ORTHOGONAL TRANSFORM COEFFICIENT
S42
ADD RESIDUAL INFORMATION AND PREDICTED IMAGE
S43
PERFORM DEBLOCKING FILTER PROCESS
S44
PERFORM ADAPTIVE OFFSET PROCESS
S45
PERFORM ADAPTIVE LOOP FILTER PROCESS
S46
ACCUMULATE IMAGES
S47
PERFORM LOSSLESS CODING ON CODED INFORMATION
S48
PERFORM LOSSLESS CODING ON QUANTIZED COEFFICIENT
S49
ACCUMULATE CODED DATA
S50
CONTROL RATE OF QUANTIZATION OPERATION
S51
OUTPUT CODED DATA
S52
RETURN

FIG. 24

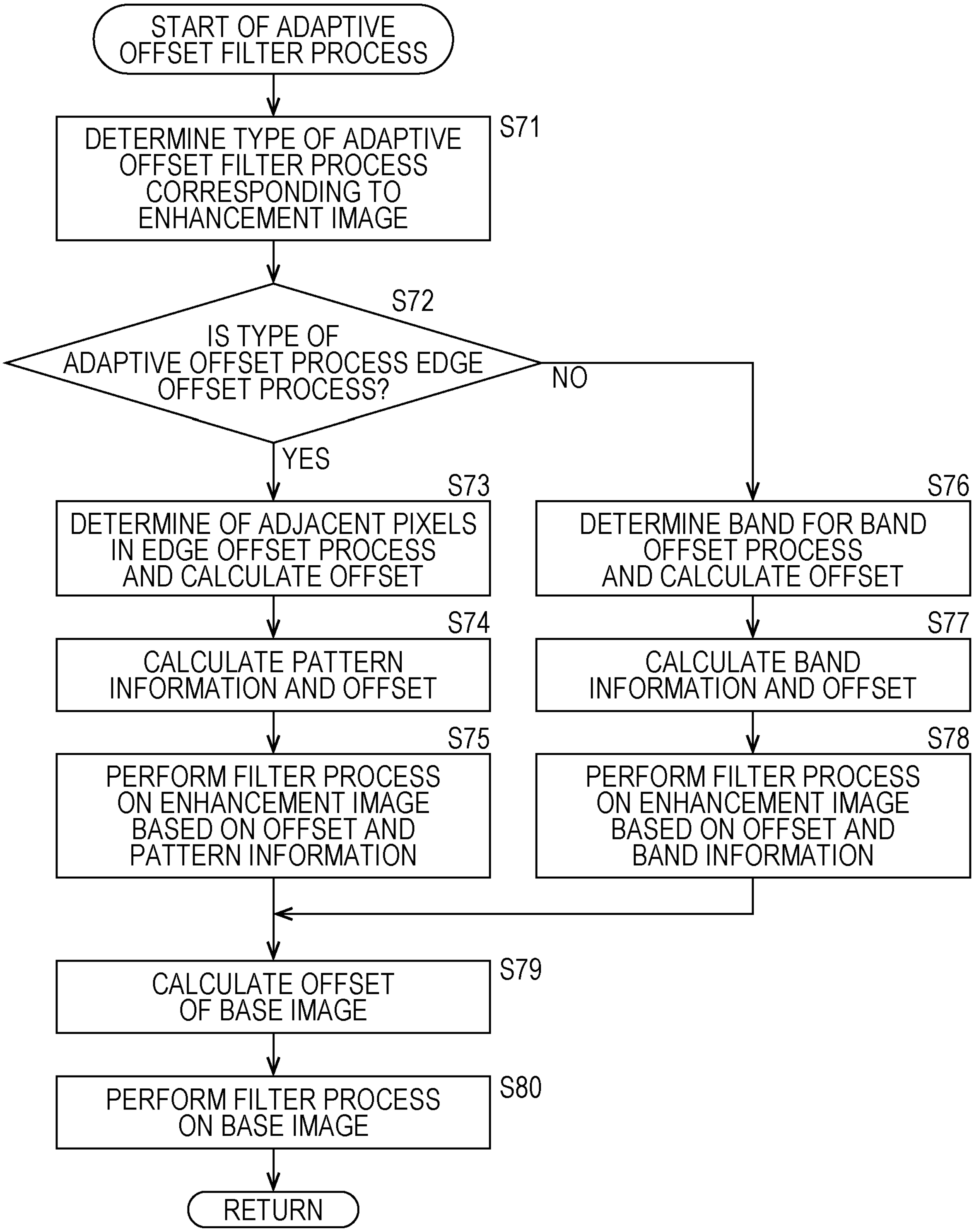
START OF ADAPTIVE OFFSET FILTER PROCESS
DETERMINE TYPE OF ADAPTIVE OFFSET FILTER PROCESS CORRESPONDING TO ENHANCEMENT IMAGE
S71
IS TYPE OF ADAPTIVE OFFSET PROCESS EDGE OFFSET PROCESS?
S72
YES
NO
DETERMINE OF ADJACENT PIXELS IN EDGE OFFSET PROCESS AND CALCULATE OFFSET
S73
CALCULATE PATTERN INFORMATION AND OFFSET
S74
PERFORM FILTER PROCESS ON ENHANCEMENT IMAGE BASED ON OFFSET AND PATTERN INFORMATION
S75
DETERMINE BAND FOR BAND OFFSET PROCESS AND CALCULATE OFFSET
S76
CALCULATE BAND INFORMATION AND OFFSET
S77
PERFORM FILTER PROCESS ON ENHANCEMENT IMAGE BASED ON OFFSET AND BAND INFORMATION
S78
CALCULATE OFFSET OF BASE IMAGE
S79
PERFORM FILTER PROCESS ON BASE IMAGE
S80
RETURN

FIG. 25

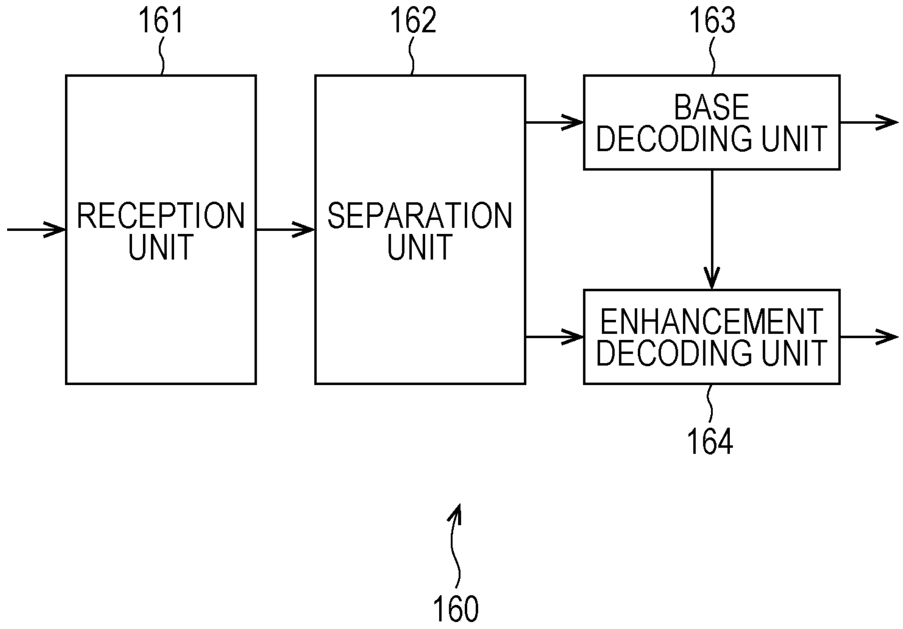
161
162
163
BASE DECODING UNIT
RECEPTION UNIT
SEPARATION UNIT
ENHANCEMENT DECODING UNIT
164
160

FIG. 26

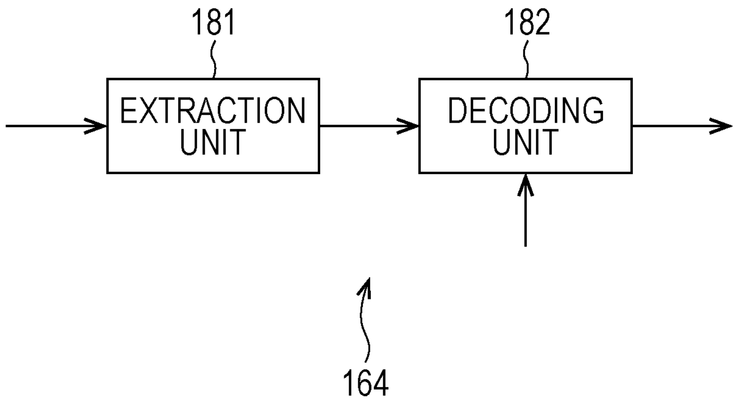
181
182
EXTRACTION UNIT
DECODING UNIT
164

FIG. 27

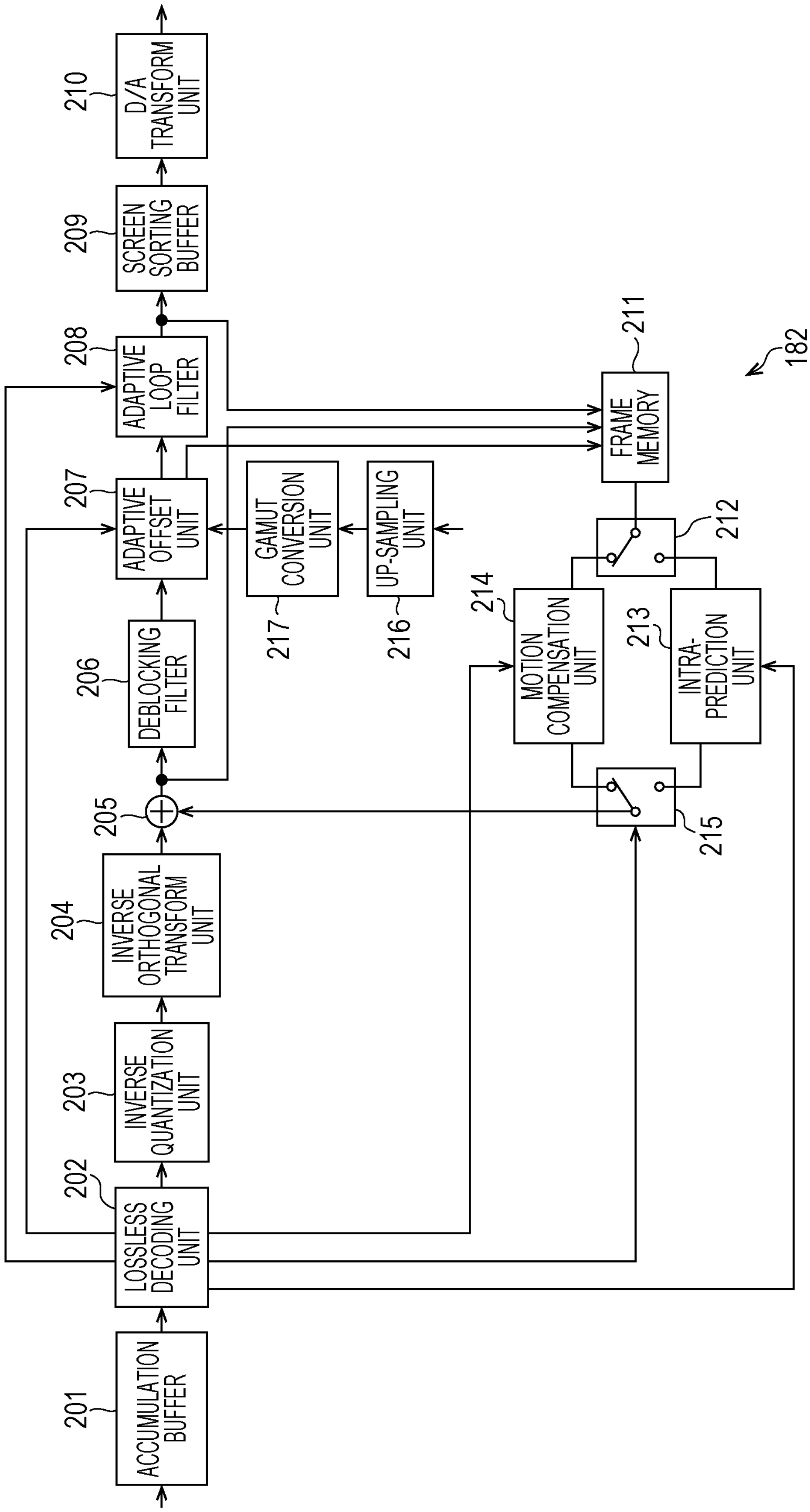
201
ACCUMULATION BUFFER
202
LOSSLESS DECODING UNIT
203
INVERSE QUANTIZATION UNIT
204
INVERSE ORTHOGONAL TRANSFORM UNIT
205
206
DEBLOCKING FILTER
207
ADAPTIVE OFFSET UNIT
208
ADAPTIVE LOOP FILTER
209
SCREEN SORTING BUFFER
210
D/A TRANSFORM UNIT
211
FRAME MEMORY
212
213
INTRA-PREDICTION UNIT
214
MOTION COMPENSATION UNIT
215
216
UP-SAMPLING UNIT
217
GAMUT CONVERSION UNIT
182

FIG. 28

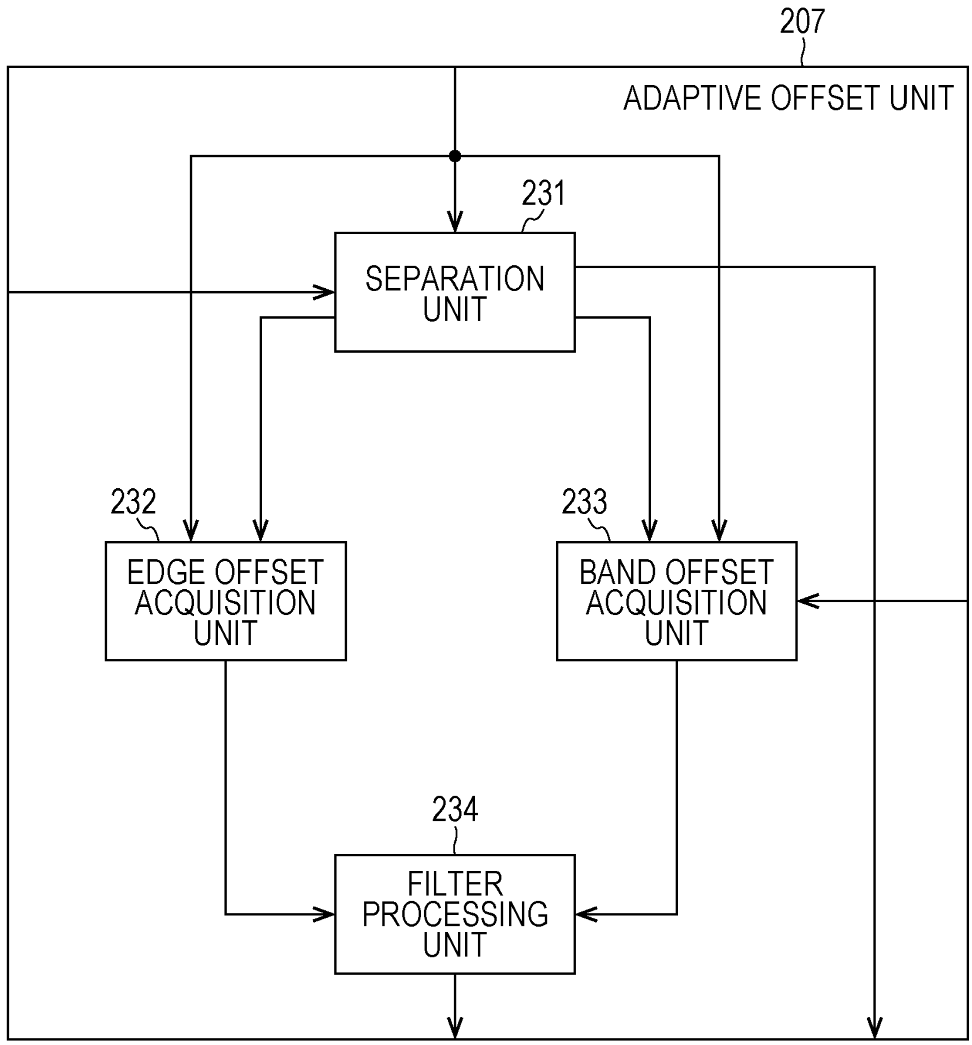
207
ADAPTIVE OFFSET UNIT
231
SEPARATION UNIT
232
EDGE OFFSET ACQUISITION UNIT
233
BAND OFFSET ACQUISITION UNIT
234
FILTER PROCESSING UNIT

FIG. 29

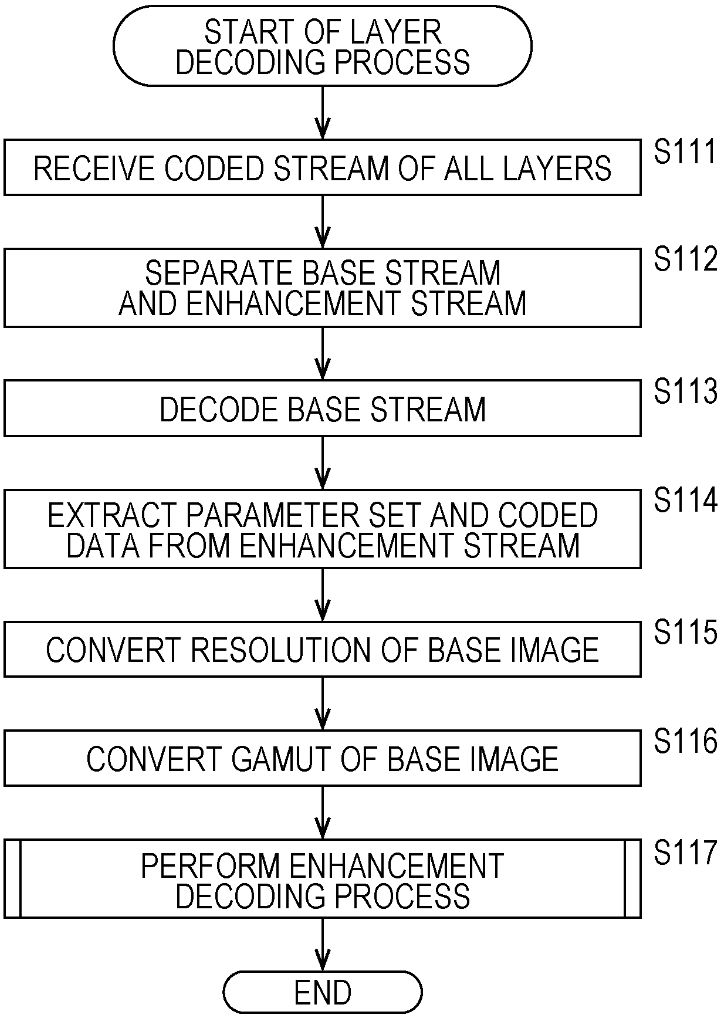
START OF LAYER DECODING PROCESS
RECEIVE CODED STREAM OF ALL LAYERS
S111
SEPARATE BASE STREAM AND ENHANCEMENT STREAM
S112
DECODE BASE STREAM
S113
EXTRACT PARAMETER SET AND CODED DATA FROM ENHANCEMENT STREAM
S114
CONVERT RESOLUTION OF BASE IMAGE
S115
CONVERT GAMUT OF BASE IMAGE
S116
PERFORM ENHANCEMENT DECODING PROCESS
S117
END

FIG. 30

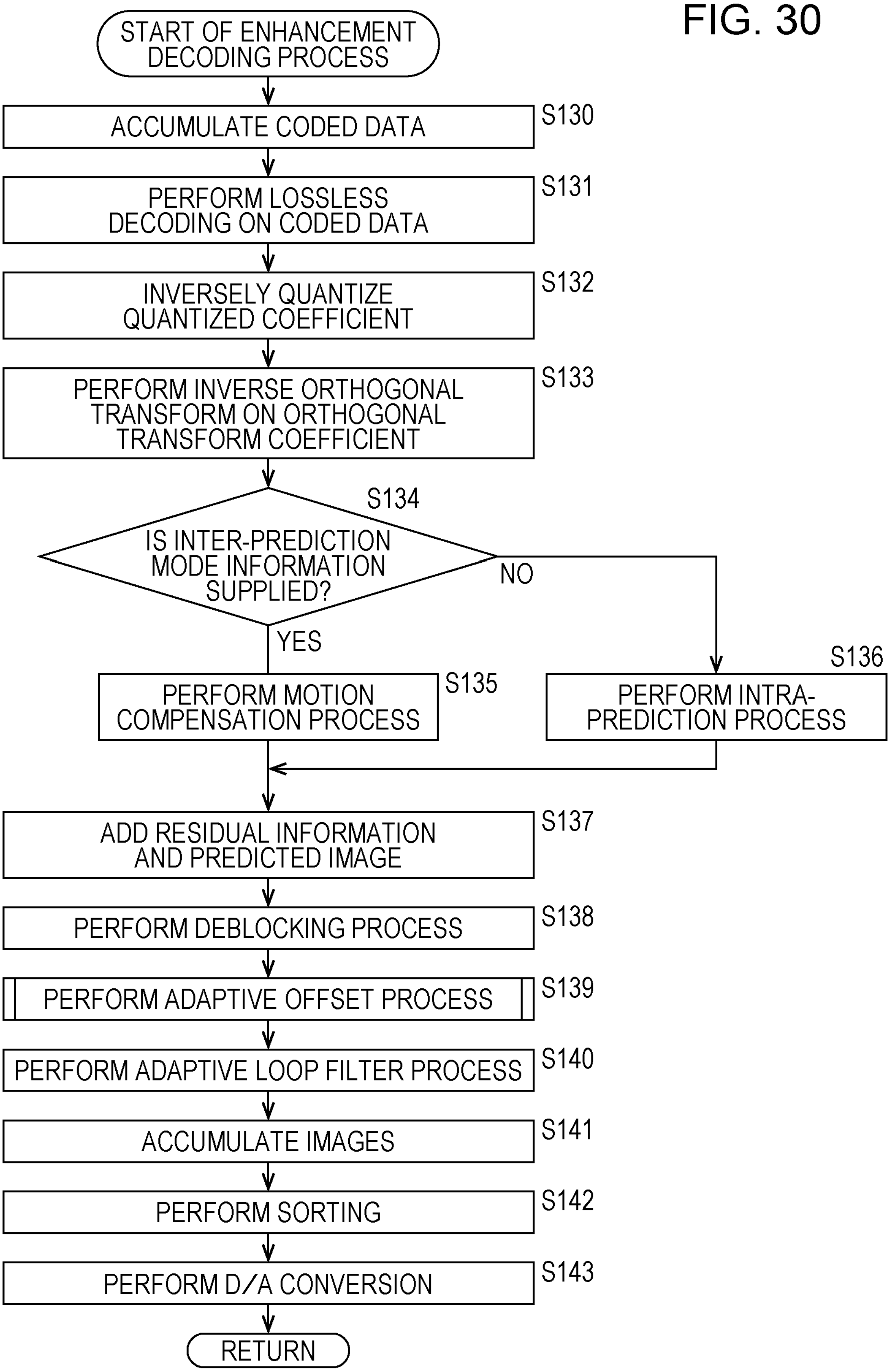
START OF ENHANCEMENT DECODING PROCESS
ACCUMULATE CODED DATA
S130
PERFORM LOSSLESS DECODING ON CODED DATA
S131
INVERSELY QUANTIZE QUANTIZED COEFFICIENT
S132
PERFORM INVERSE ORTHOGONAL TRANSFORM ON ORTHOGONAL TRANSFORM COEFFICIENT
S133
S134
IS INTER-PREDICTION MODE INFORMATION SUPPLIED?
NO
YES
S136
PERFORM MOTION COMPENSATION PROCESS
S135
PERFORM INTRA-PREDICTION PROCESS
ADD RESIDUAL INFORMATION AND PREDICTED IMAGE
S137
PERFORM DEBLOCKING PROCESS
S138
PERFORM ADAPTIVE OFFSET PROCESS
S139
PERFORM ADAPTIVE LOOP FILTER PROCESS
S140
ACCUMULATE IMAGES
S141
PERFORM SORTING
S142
PERFORM D/A CONVERSION
S143
RETURN

FIG. 31

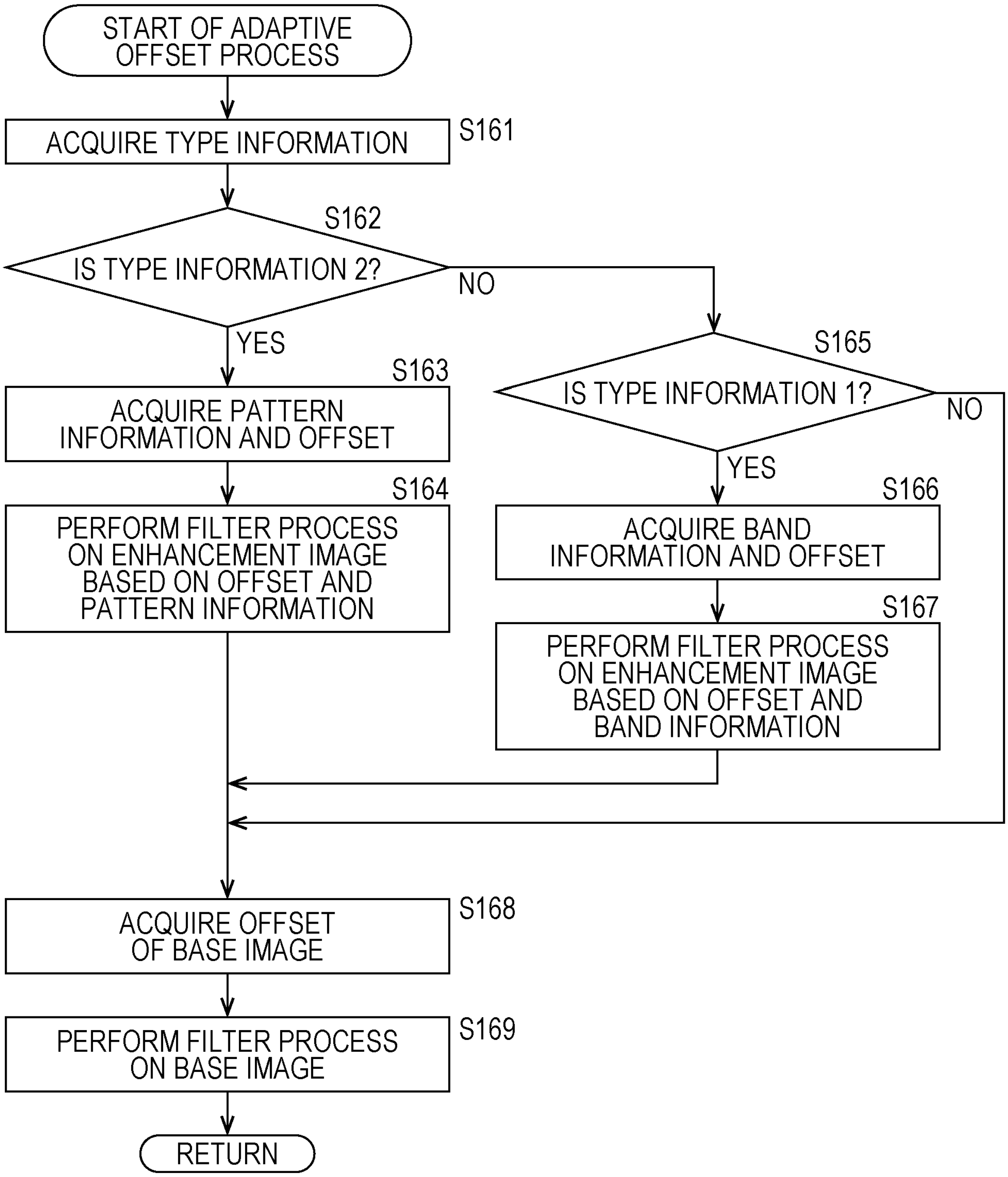
START OF ADAPTIVE OFFSET PROCESS
ACQUIRE TYPE INFORMATION
S161
IS TYPE INFORMATION 2?
S162
NO
YES
ACQUIRE PATTERN INFORMATION AND OFFSET
S163
PERFORM FILTER PROCESS ON ENHANCEMENT IMAGE BASED ON OFFSET AND PATTERN INFORMATION
S164
IS TYPE INFORMATION 1?
S165
NO
YES
ACQUIRE BAND INFORMATION AND OFFSET
S166
PERFORM FILTER PROCESS ON ENHANCEMENT IMAGE BASED ON OFFSET AND BAND INFORMATION
S167
ACQUIRE OFFSET OF BASE IMAGE
S168
PERFORM FILTER PROCESS ON BASE IMAGE
S169
RETURN

FIG. 32

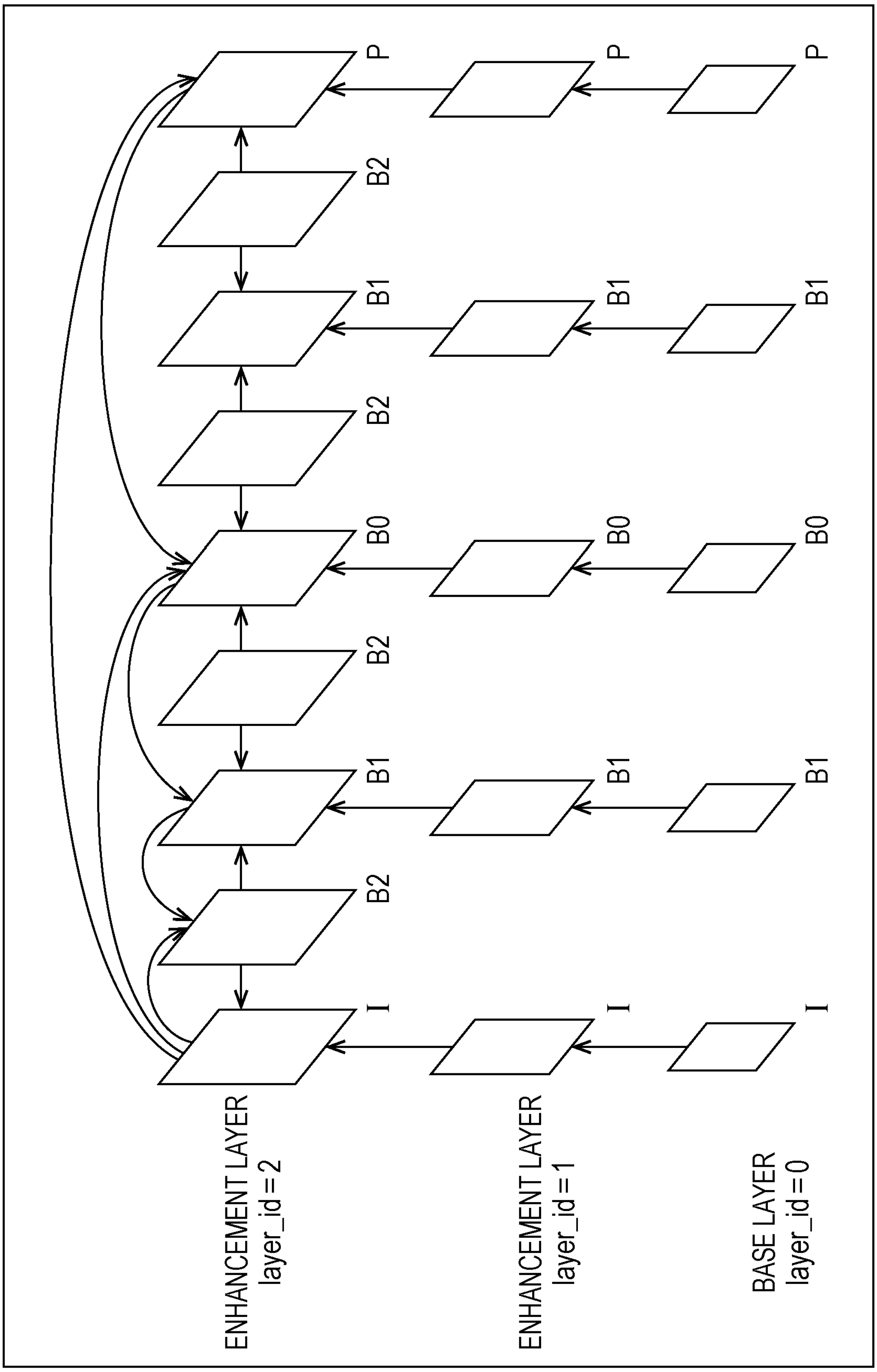
ENHANCEMENT LAYER
layer_id = 2
ENHANCEMENT LAYER
layer_id = 1
BASE LAYER
layer_id = 0
I
B2
B1
B2
B0
B2
B1
B2
P
I
B1
B0
B1
P
I
B1
B0
B1
P

FIG. 33

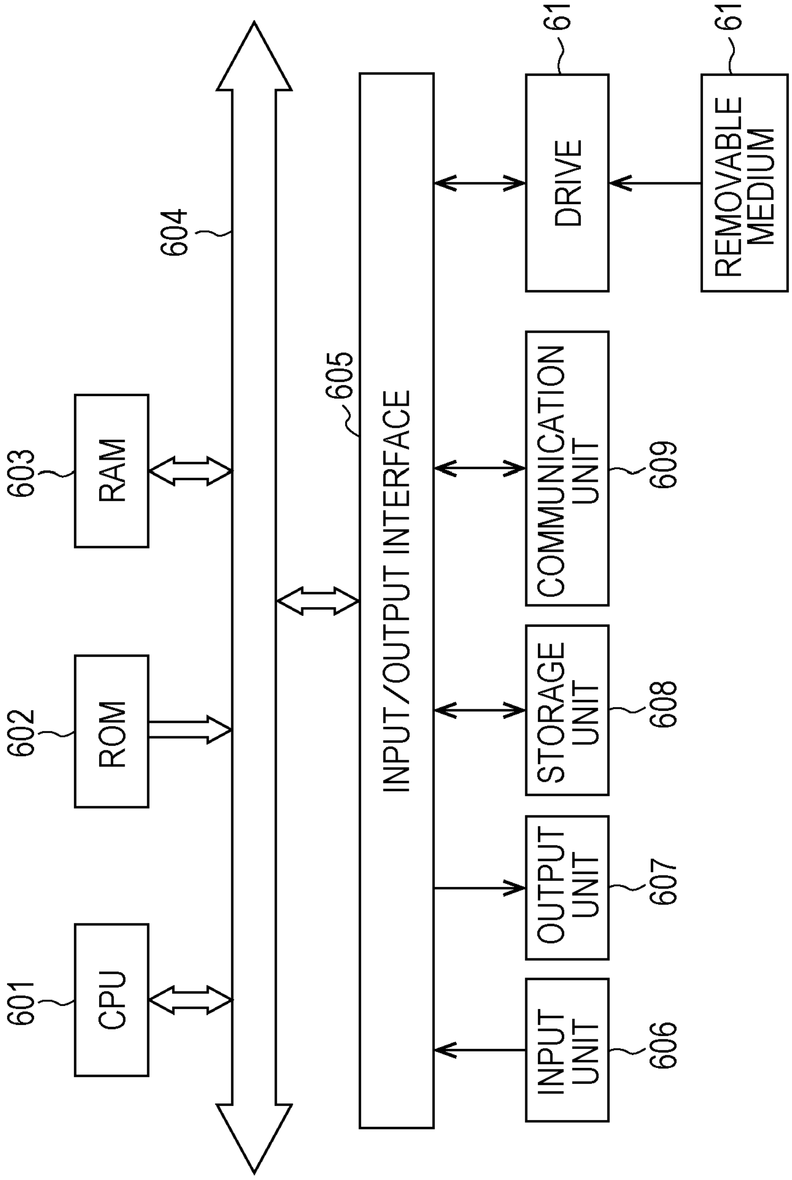
601
CPU
602
ROM
603
RAM
604
605
INPUT/OUTPUT INTERFACE
INPUT UNIT
606
OUTPUT UNIT
607
STORAGE UNIT
608
COMMUNICATION UNIT
609
DRIVE
610
REMOVABLE MEDIUM
611

FIG. 34

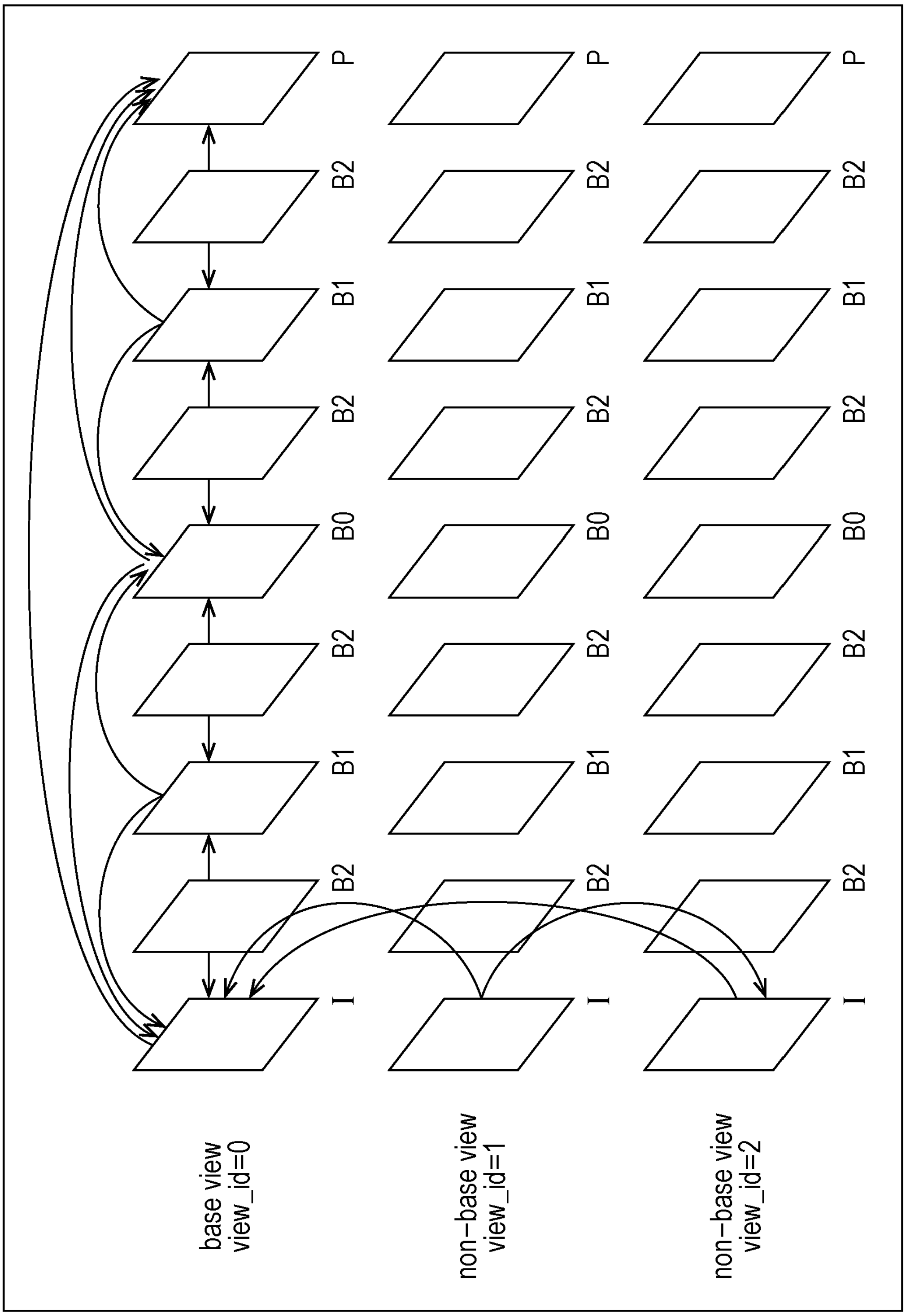
base view
view_id=0
non−base view
view_id=1
non−base view
view_id=2
I
B2
B1
B2
B0
B2
B1
B2
P

FIG. 35

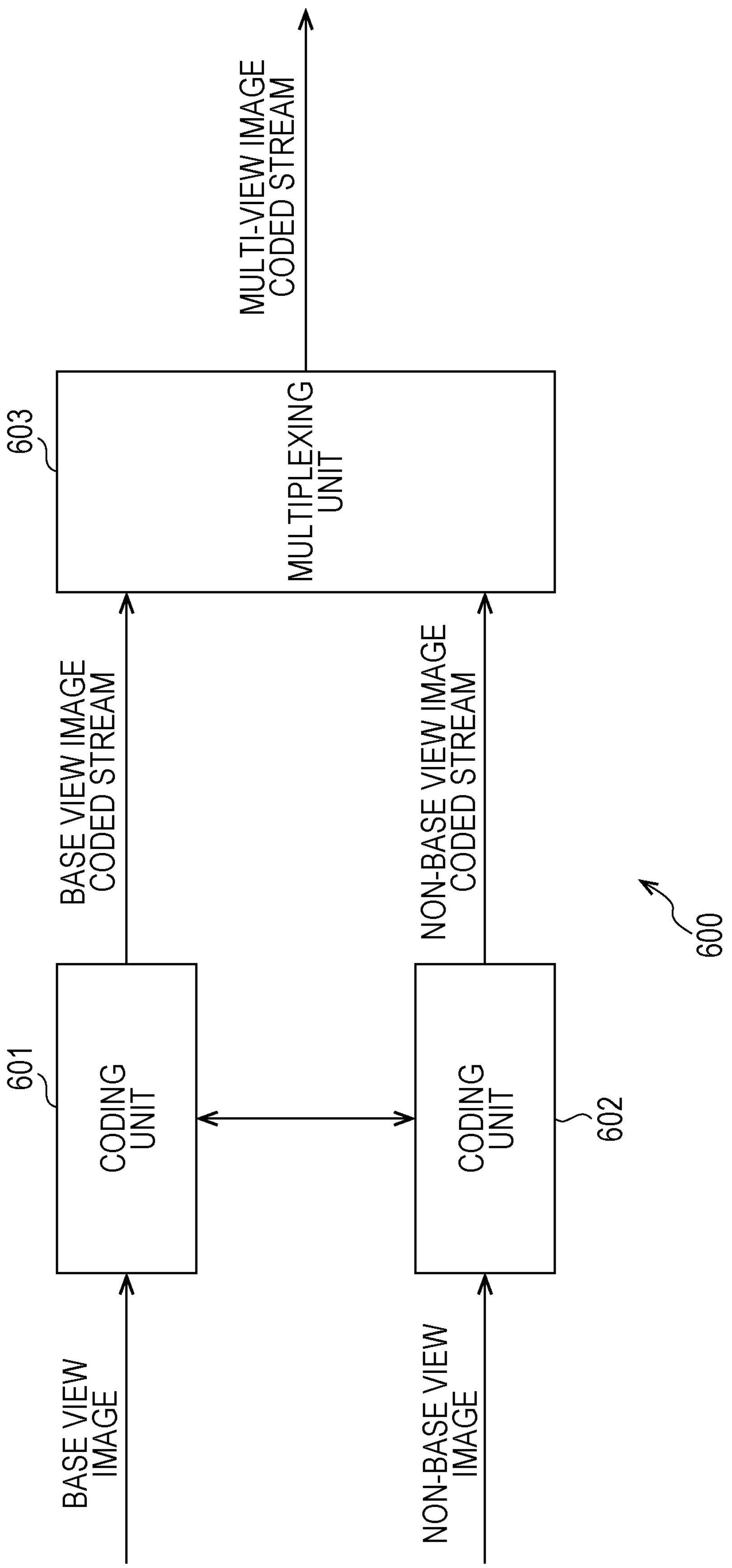
MULTI-VIEW IMAGE CODED STREAM
603
MULTIPLEXING UNIT
BASE VIEW IMAGE CODED STREAM
NON-BASE VIEW IMAGE CODED STREAM
600
601
CODING UNIT
CODING UNIT
602
BASE VIEW IMAGE
NON-BASE VIEW IMAGE

FIG. 36

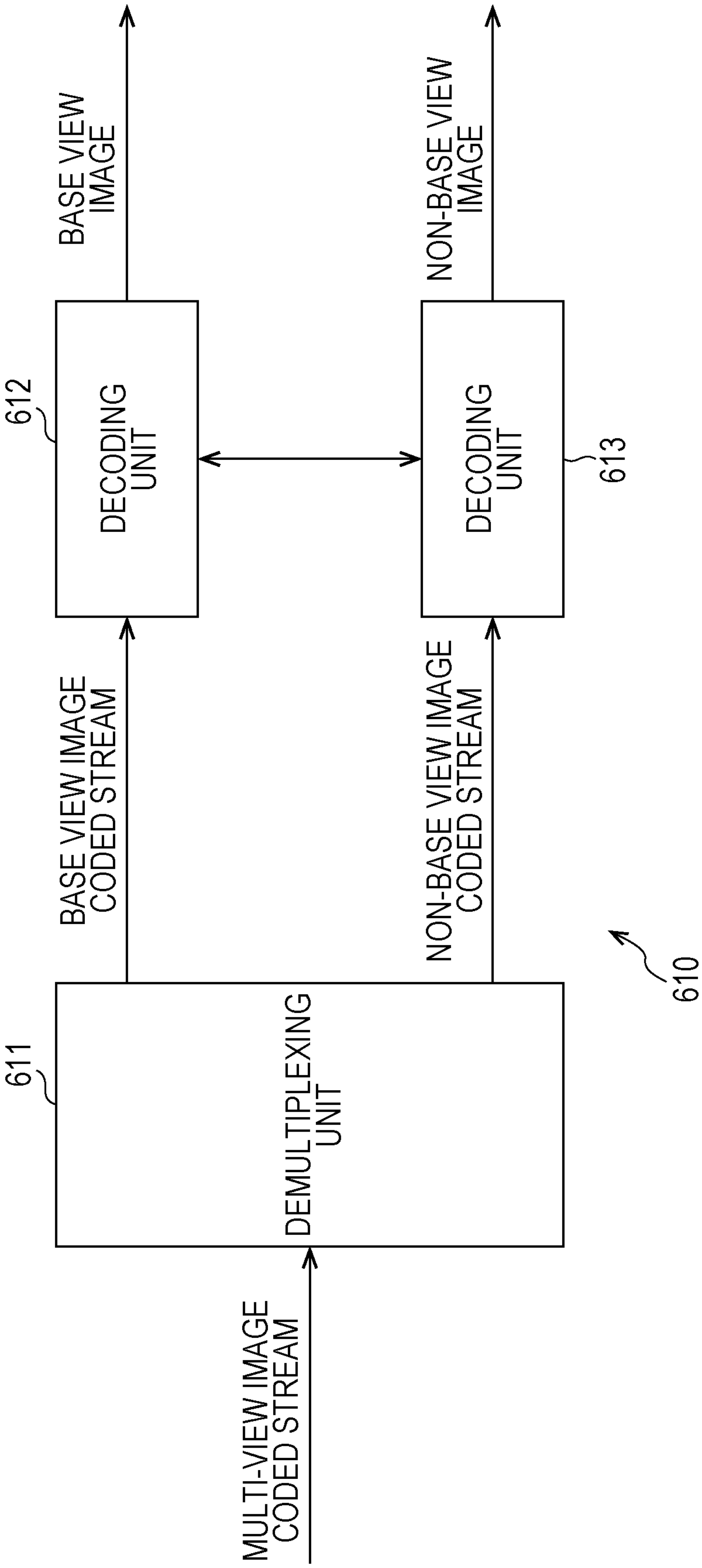
610
611
DEMULTIPLEXING UNIT
MULTI-VIEW IMAGE CODED STREAM
BASE VIEW IMAGE CODED STREAM
NON-BASE VIEW IMAGE CODED STREAM
612
DECODING UNIT
613
DECODING UNIT
BASE VIEW IMAGE
NON-BASE VIEW IMAGE

FIG. 37

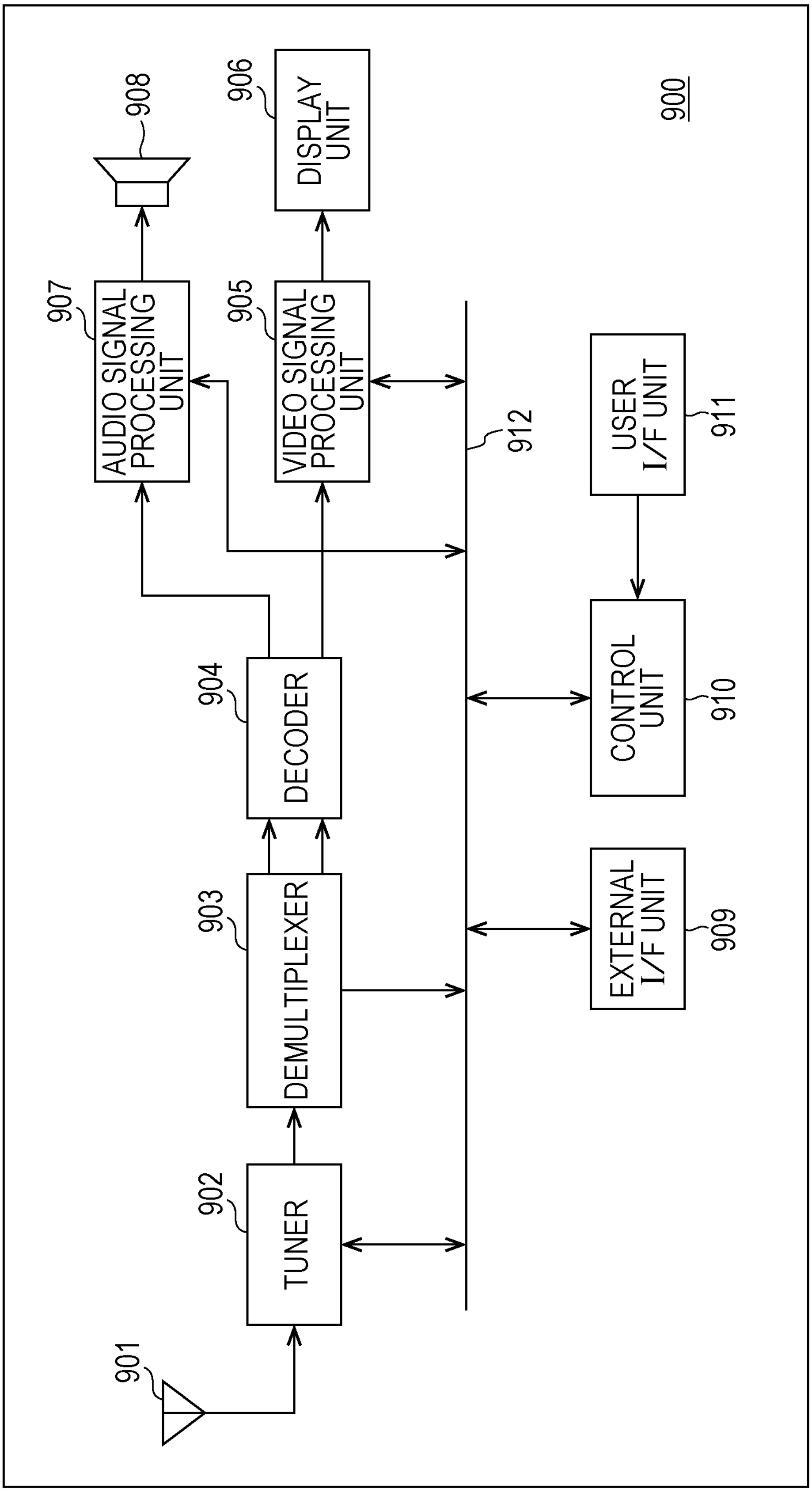
900
901
902
TUNER
903
DEMULTIPLEXER
904
DECODER
905
VIDEO SIGNAL PROCESSING UNIT
906
DISPLAY UNIT
907
AUDIO SIGNAL PROCESSING UNIT
908
909
EXTERNAL I/F UNIT
910
CONTROL UNIT
911
USER I/F UNIT
912

FIG. 38

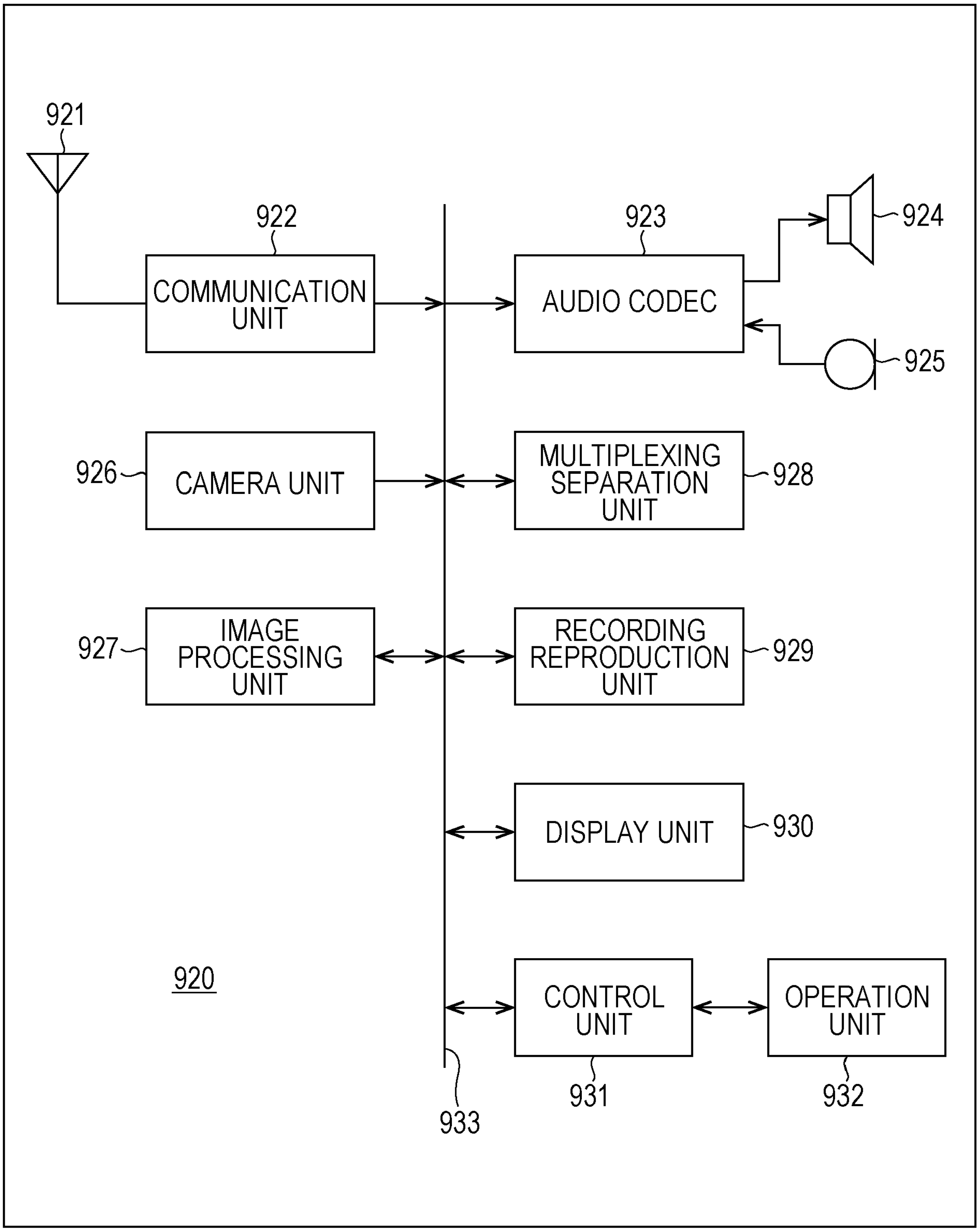
921
922
COMMUNICATION UNIT
923
AUDIO CODEC
924
925
926
CAMERA UNIT
MULTIPLEXING SEPARATION UNIT
928
927
IMAGE PROCESSING UNIT
RECORDING REPRODUCTION UNIT
929
DISPLAY UNIT
930
920
CONTROL UNIT
OPERATION UNIT
931
932
933

FIG. 39

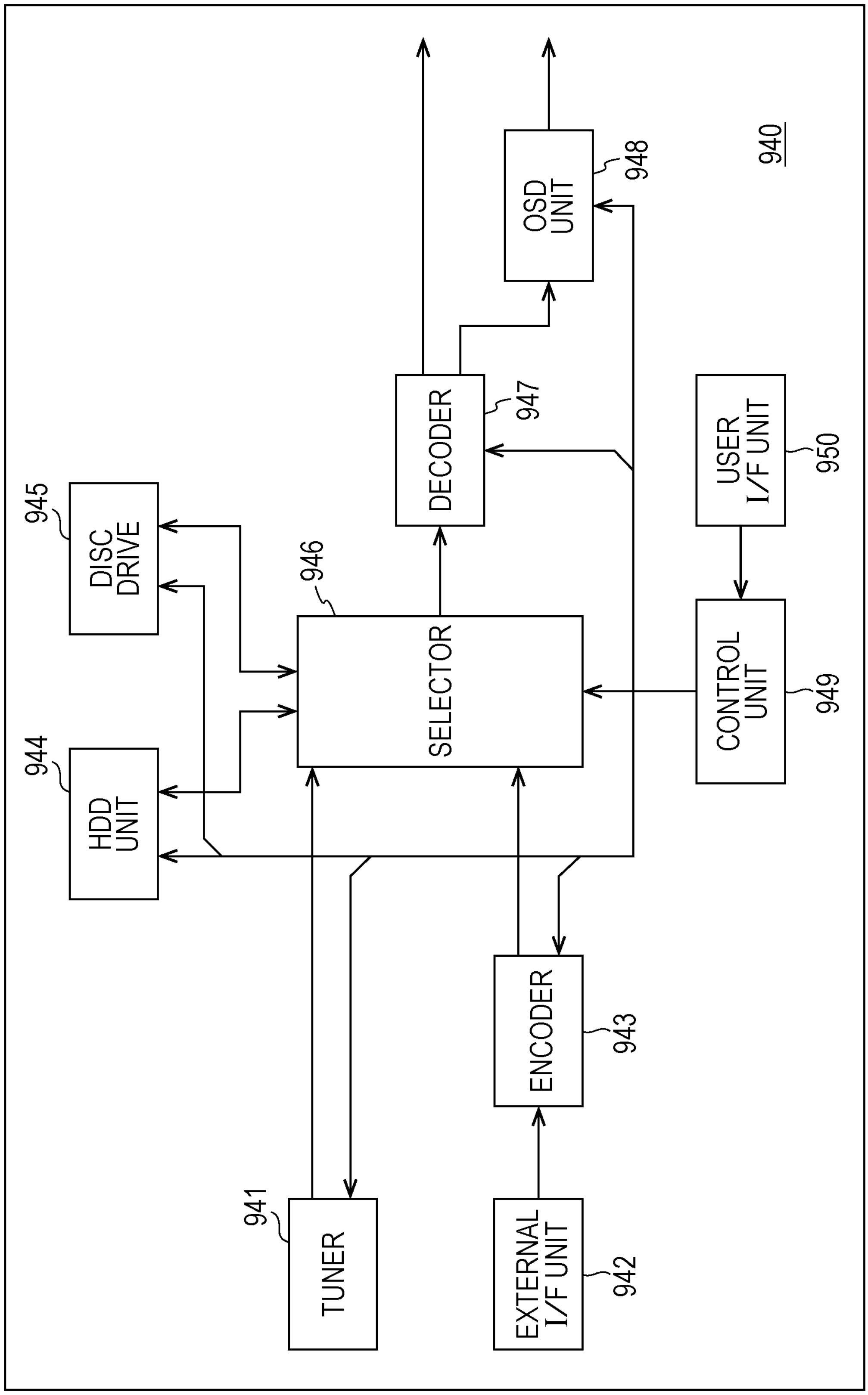
940
TUNER
941
EXTERNAL I/F UNIT
942
ENCODER
943
HDD UNIT
944
DISC DRIVE
945
SELECTOR
946
DECODER
947
OSD UNIT
948
CONTROL UNIT
949
USER I/F UNIT
950

FIG. 40

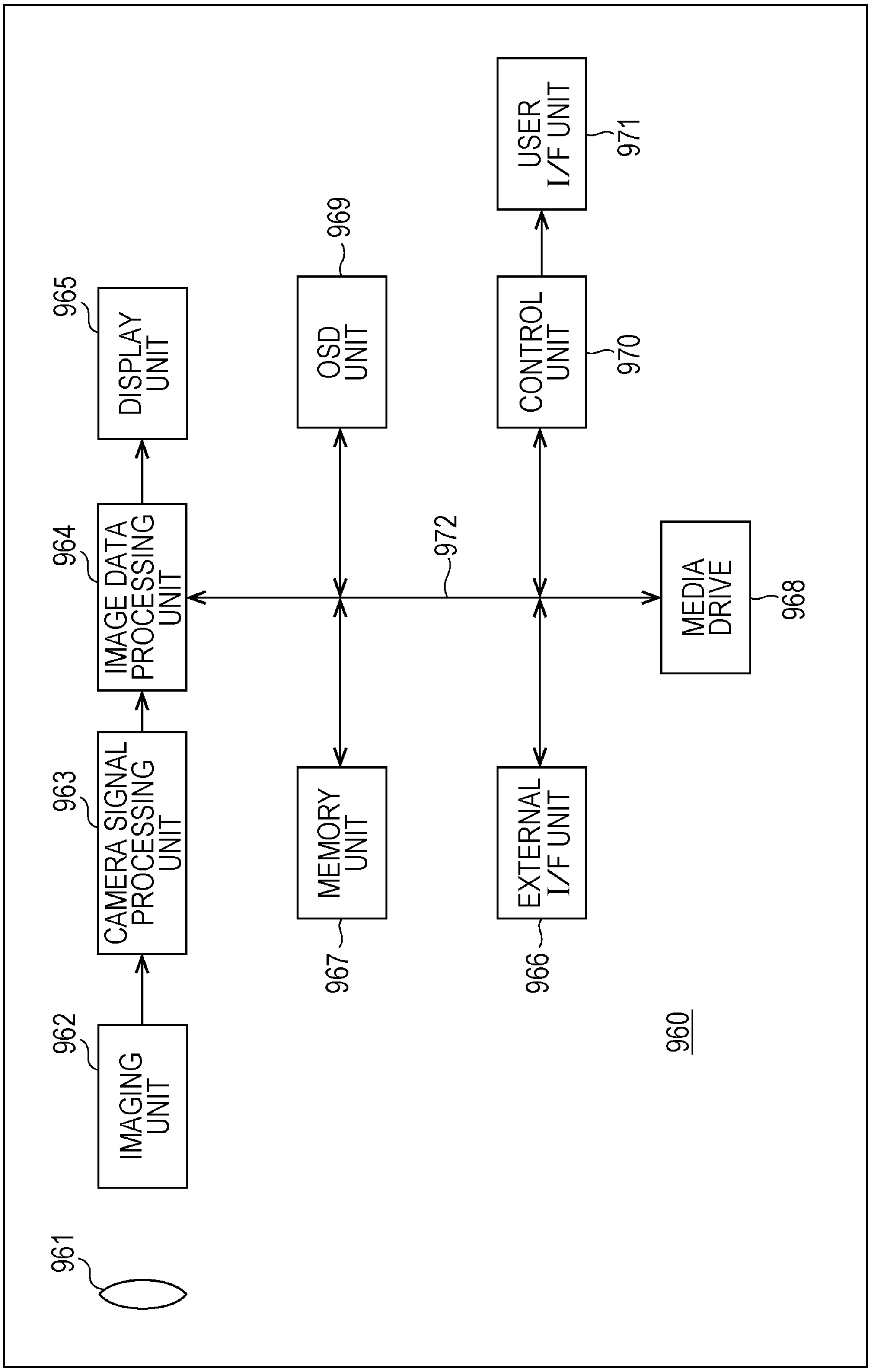
961
IMAGING UNIT
962
CAMERA SIGNAL PROCESSING UNIT
963
IMAGE DATA PROCESSING UNIT
964
DISPLAY UNIT
965
MEMORY UNIT
967
OSD UNIT
969
972
EXTERNAL I/F UNIT
966
CONTROL UNIT
970
USER I/F UNIT
971
MEDIA DRIVE
968
960

FIG. 41

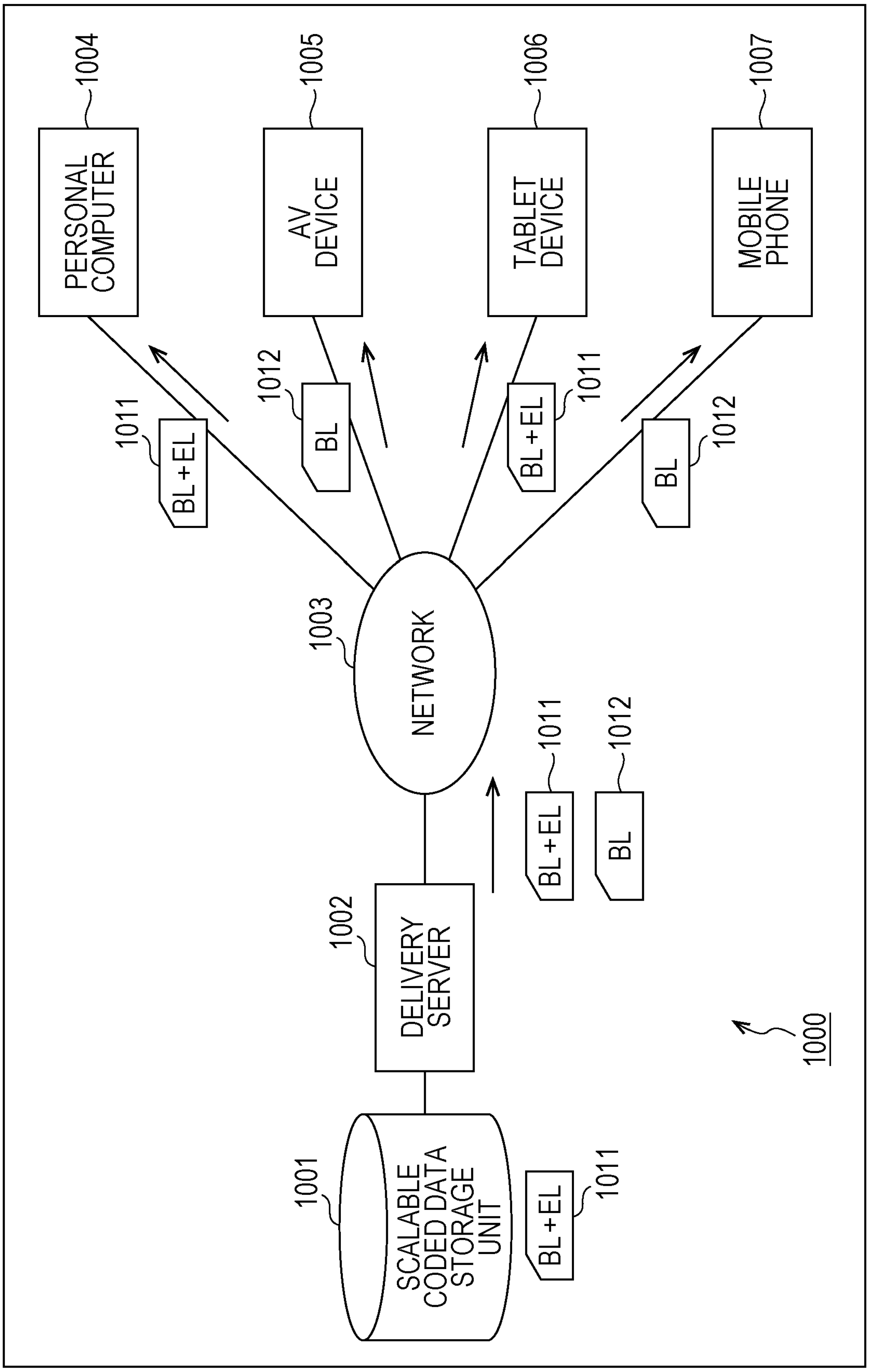
PERSONAL COMPUTER
1004
AV DEVICE
1005
TABLET DEVICE
1006
MOBILE PHONE
1007
BL+EL
1011
BL
1012
BL+EL
1011
BL
1012
NETWORK
1003
BL+EL
1011
BL
1012
DELIVERY SERVER
1002
SCALABLE CODED DATA STORAGE UNIT
1001
BL+EL
1011
1000

FIG. 42

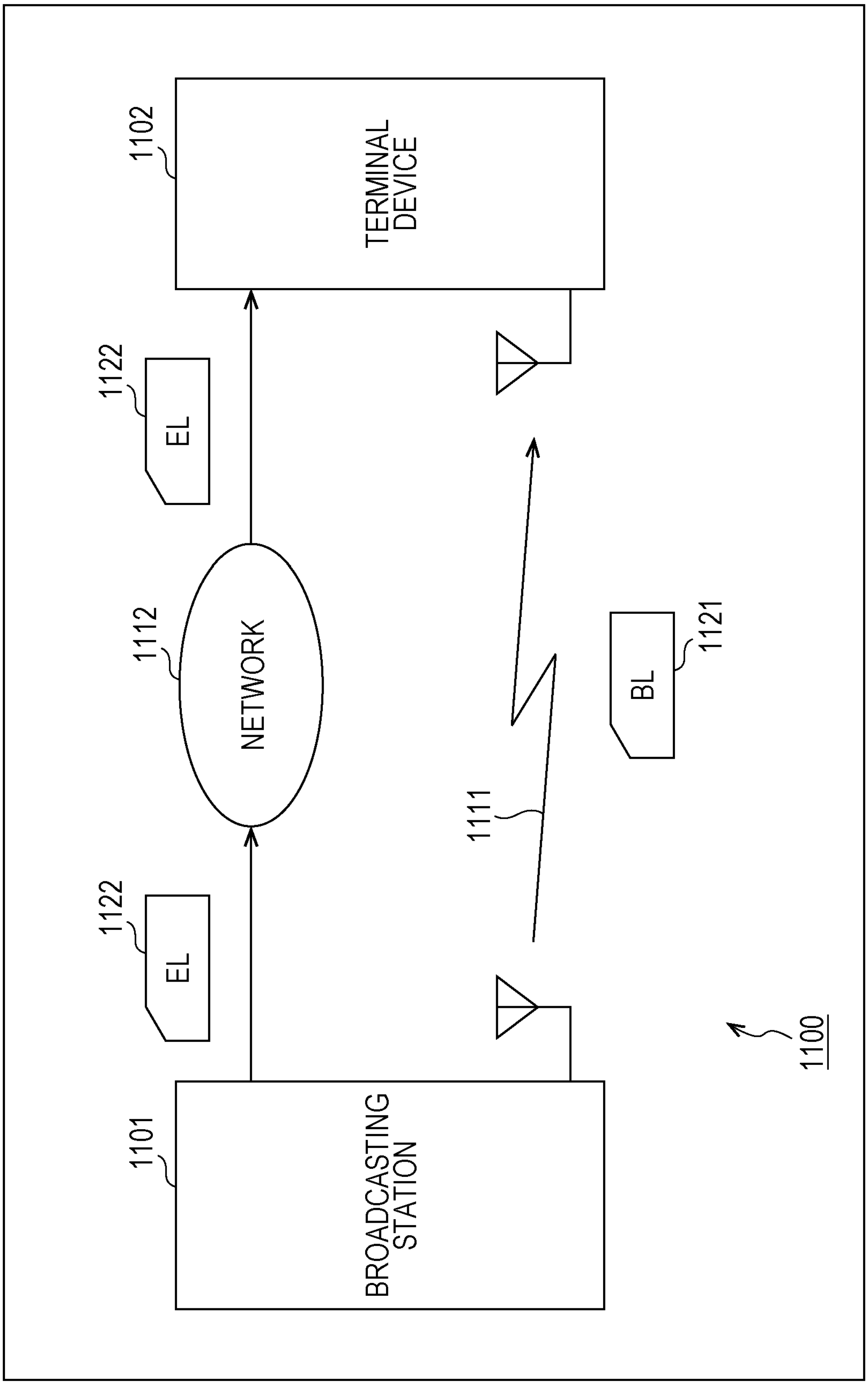
1102
TERMINAL DEVICE
1122
EL
1112
NETWORK
1121
BL
1111
1122
EL
1101
BROADCASTING STATION
1100

FIG. 43

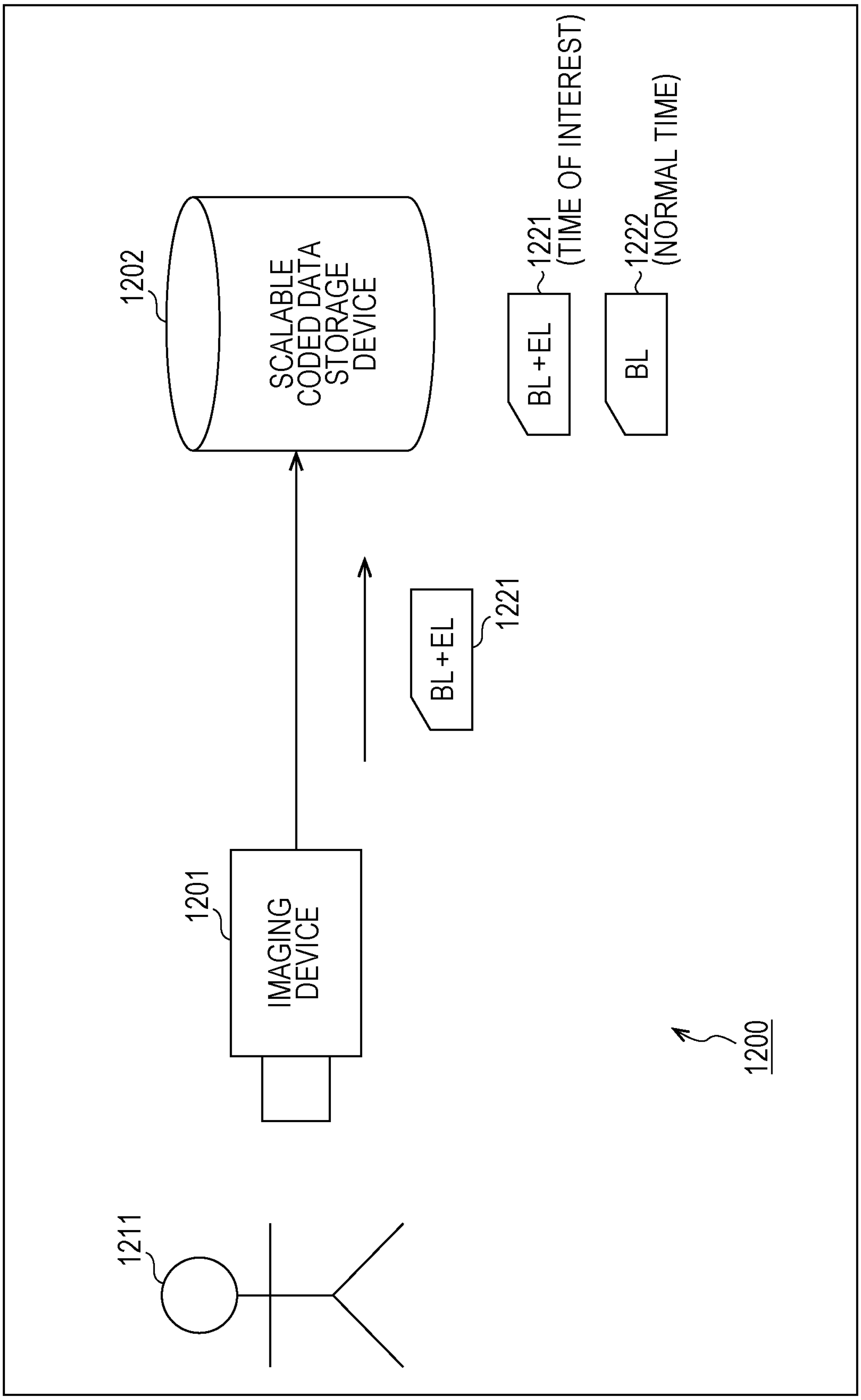
1211
IMAGING DEVICE
1201
SCALABLE CODED DATA STORAGE DEVICE
1202
BL +EL
1221
BL +EL
1221
(TIME OF INTEREST)
BL
1222
(NORMAL TIME)
1200

FIG. 44

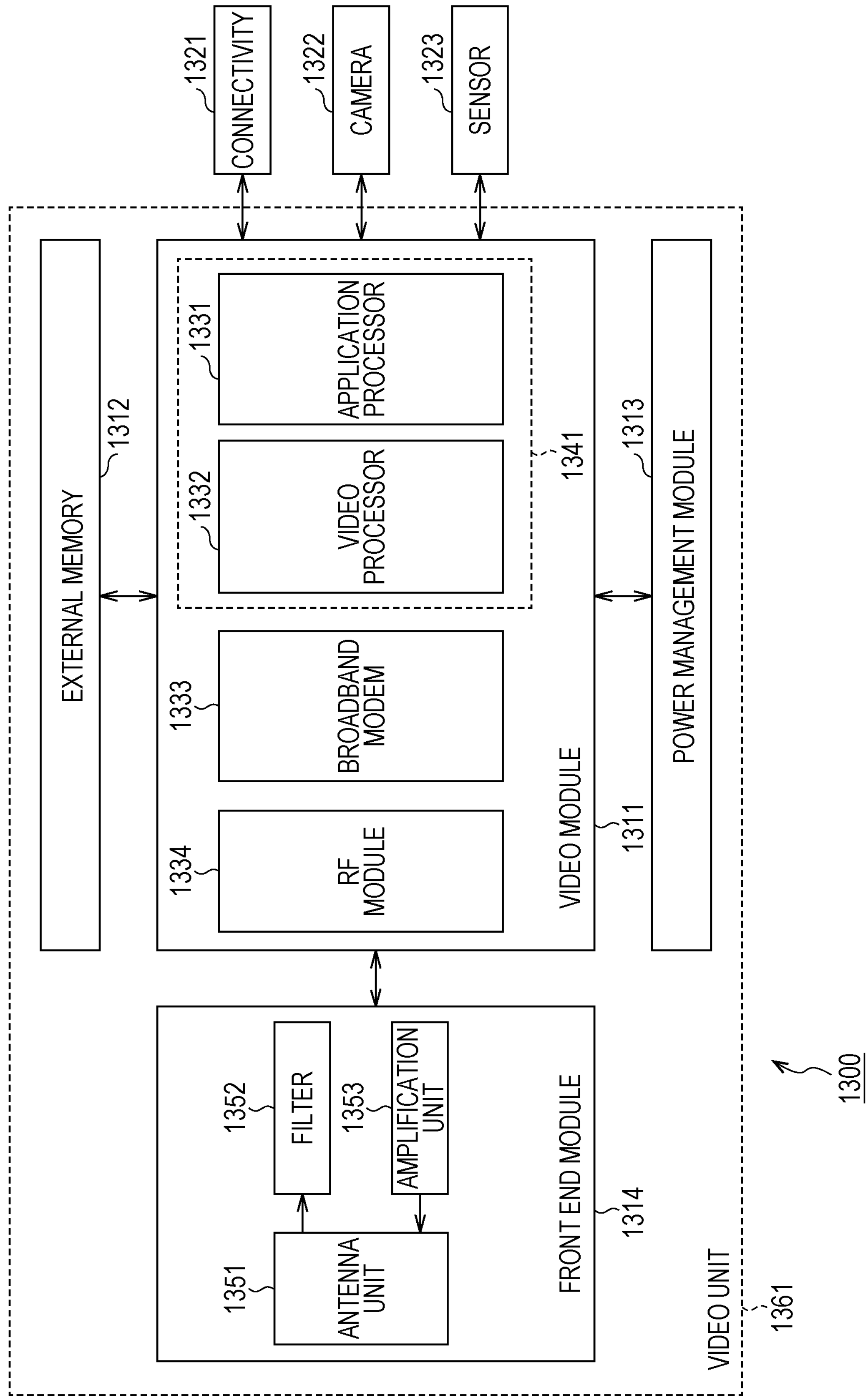
1321
CONNECTIVITY
1322
CAMERA
1323
SENSOR
1312
EXTERNAL MEMORY
1331
APPLICATION PROCESSOR
1332
VIDEO PROCESSOR
1341
1333
BROADBAND MODEM
1334
RF MODULE
VIDEO MODULE
1311
1313
POWER MANAGEMENT MODULE
1352
FILTER
1353
AMPLIFICATION UNIT
1351
ANTENNA UNIT
FRONT END MODULE
1314
VIDEO UNIT
1361
1300

FIG. 45

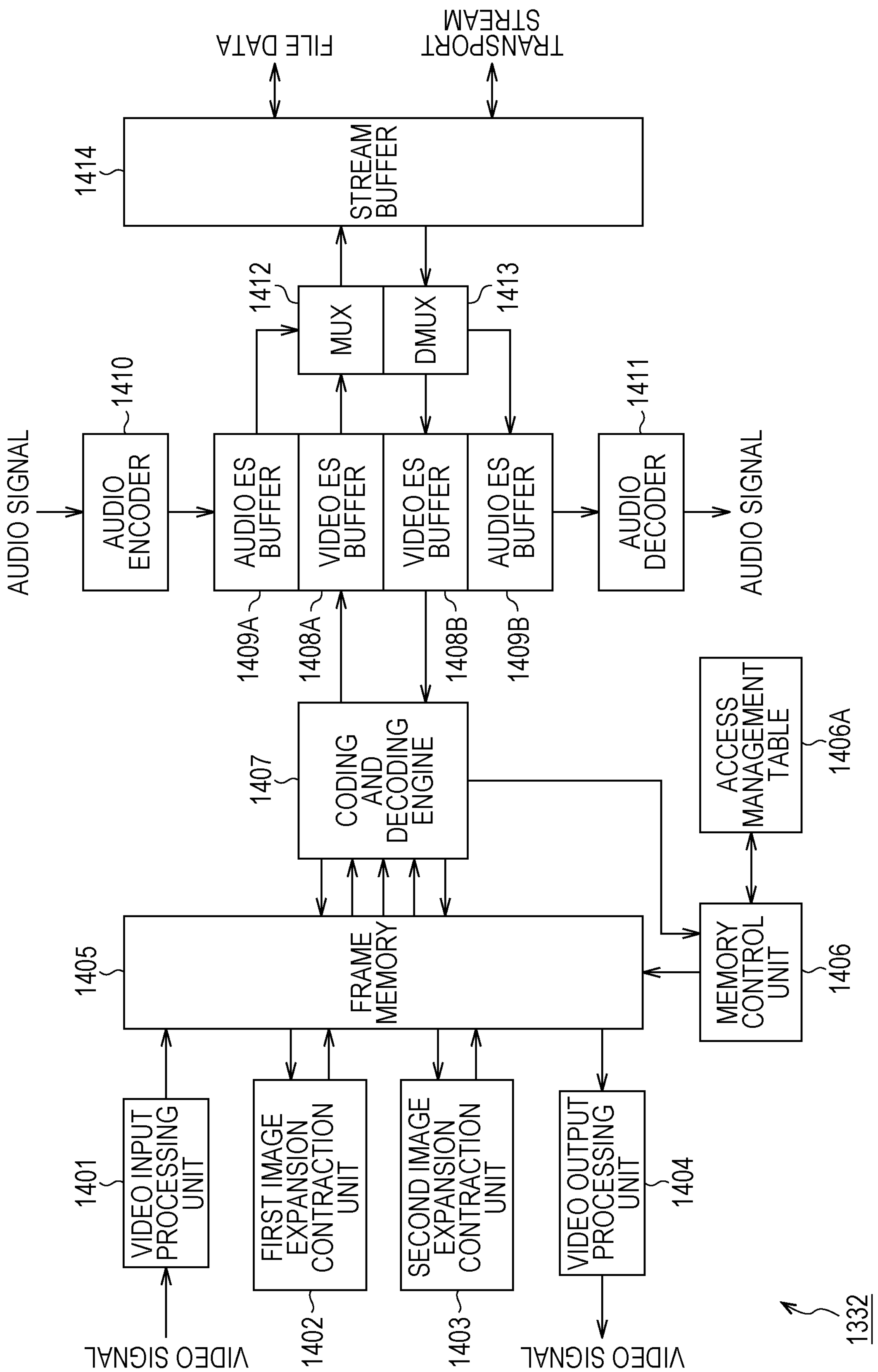
FILE DATA
TRANSPORT STREAM
1414
STREAM BUFFER
1412
MUX
DMUX
1413
1410
AUDIO SIGNAL
AUDIO ENCODER
AUDIO ES BUFFER
VIDEO ES BUFFER
VIDEO ES BUFFER
AUDIO ES BUFFER
1411
AUDIO DECODER
AUDIO SIGNAL
1409A
1408A
1408B
1409B
1407
CODING AND DECODING ENGINE
ACCESS MANAGEMENT TABLE
1406A
1405
FRAME MEMORY
MEMORY CONTROL UNIT
1406
1401
VIDEO INPUT PROCESSING UNIT
FIRST IMAGE EXPANSION CONTRACTION UNIT
SECOND IMAGE EXPANSION CONTRACTION UNIT
VIDEO OUTPUT PROCESSING UNIT
1404
1402
1403
VIDEO SIGNAL
VIDEO SIGNAL
1332

FIG. 46

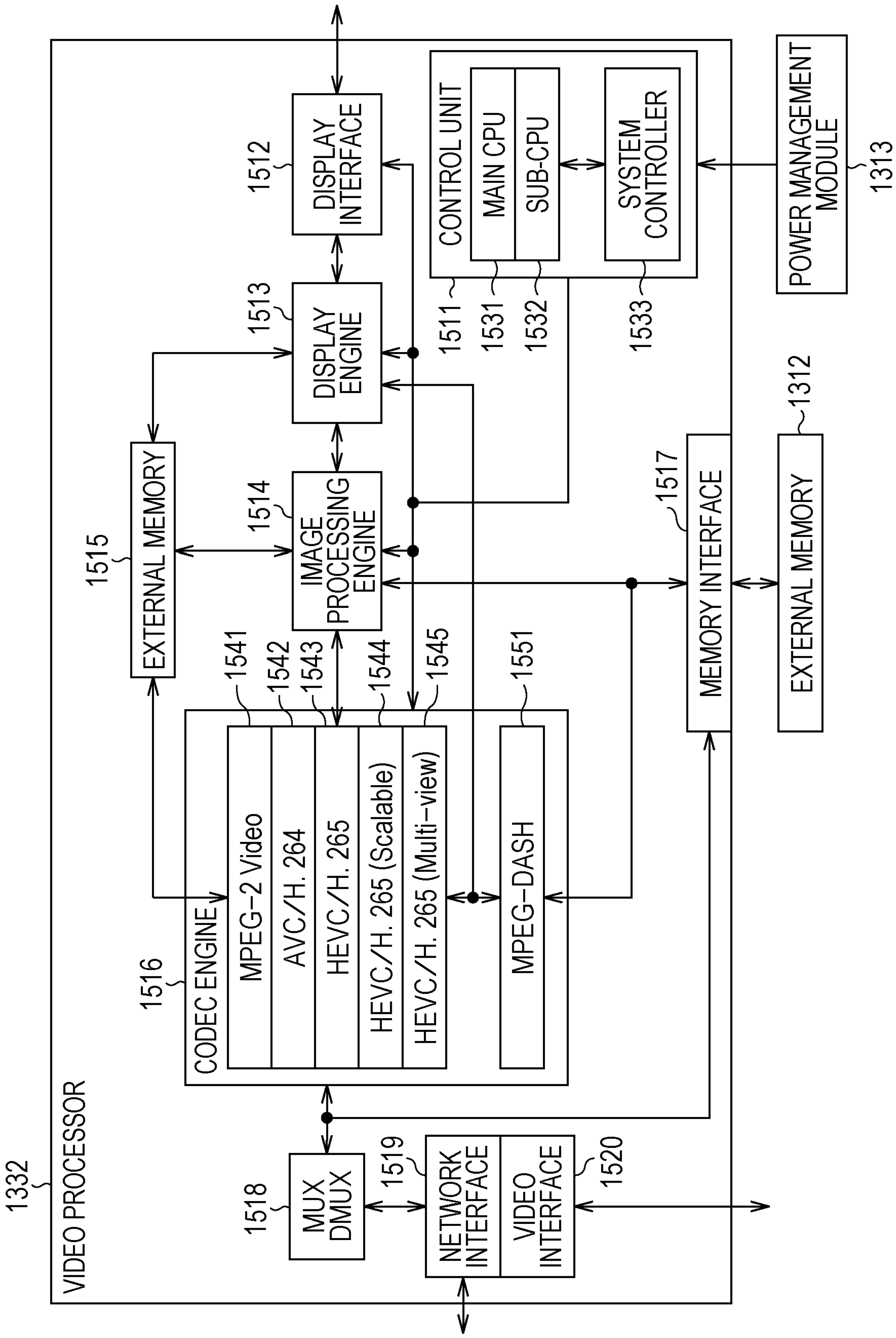
1332
VIDEO PROCESSOR
1512
DISPLAY INTERFACE
1513
DISPLAY ENGINE
1514
IMAGE PROCESSING ENGINE
1515
EXTERNAL MEMORY
1516
CODEC ENGINE
MPEG-2 Video
AVC/H. 264
HEVC/H. 265
HEVC/H. 265 (Scalable)
HEVC/H. 265 (Multi-view)
MPEG-DASH
1541
1542
1543
1544
1545
1551
1511
CONTROL UNIT
1531
MAIN CPU
1532
SUB-CPU
1533
SYSTEM CONTROLLER
1313
POWER MANAGEMENT MODULE
1517
MEMORY INTERFACE
1312
EXTERNAL MEMORY
1518
MUX DMUX
1519
NETWORK INTERFACE
1520
VIDEO INTERFACE

FIG. 47

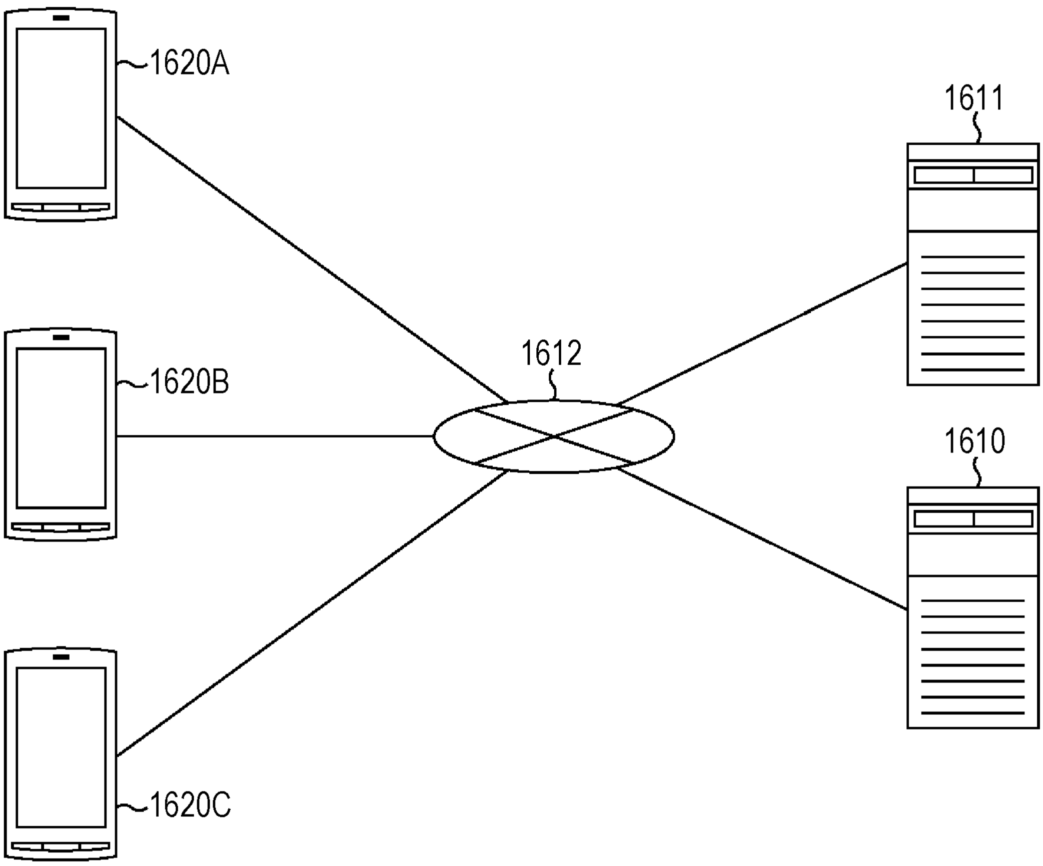

FIG. 48

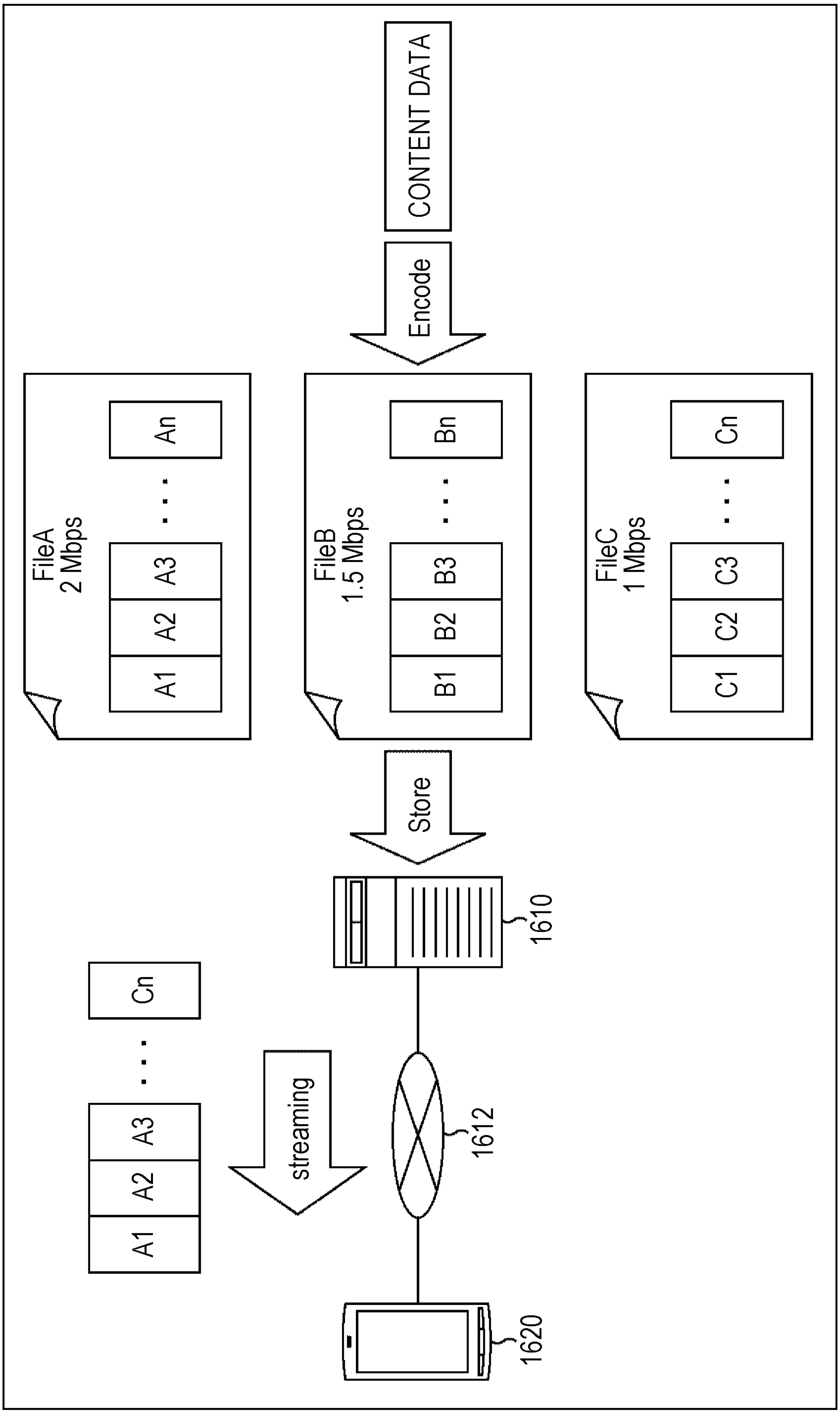
CONTENT DATA
Encode
FileA
2 Mbps
A1
A2
A3
An
FileB
1.5 Mbps
B1
B2
B3
Bn
FileC
1 Mbps
C1
C2
C3
Cn
Store
1610
1612
1620
streaming
A1
A2
A3
Cn

FIG. 49

```
<?xml version="1.0"?>
<MPD
 xmlns:xsi="http://www.w3.org/2001/XMLSchema-instance"
 xmlns="urn:mpeg:DASH:schema:MPD:2011"
 xsi:schemaLocation="urn:mpeg:DASH:schema:MPD:2011 DASH-MPD.xsd"
 type="static"
 mediaPresentationDuration="PT3256S"
 minBufferTime="PT1.2S"
 profiles="urn:mpeg:dash:profile:isoff-on-demand:2011">

 <BaseURL>http://cdn1.example.com/</BaseURL>
 <BaseURL>http://cdn2.example.com/</BaseURL>

 <Period>
   <!--English Audio-->
   <AdaptationSet mimeType="audio/mp4" codecs="mp4a.0x40" lang="en" subsegmentAlignment="true" subsegmentStartsWithSAP="1">
    <ContentProtection schemeIdUri="urn:uuid:706D6953-656C-5244-4D48-656164657221"/>
    <Representation id "1" bandwidth="64000">
     <BaseURL>7657412348.mp4</BaseURL>
    </Representation>
    <Representation id="2" bandwidth="32000">
     <BaseURL>3463646346.mp4</BaseURL>
    </Representation>
   </AdaptationSet>
<!--Video-->
   <AdaptationSet mimeType="video/mp4" codecs="avc1.4d0228" subsegmentAlignment="true" subsegmentStartsWithSAP="2">
    <ContentProtection schemeIdUri="urn:uuid:706D6953-656C-5244-4D48-656164657221"/>
    <Representation id="6" bandwidth="256000" width="320" height="240">
     <BaseURL>8563456473.mp4</BaseURL>
    </Representation>
    <Representation id="7" bandwidth="512000" width="320" height="240">
     <BaseURL>56363634.mp4</BaseURL>
    </Representation>
    <Representation id="8" bandwidth="1024000" width="640" height="480">
     <BaseURL>562465736.mp4</BaseURL>
    </Representation>
    <Representation id="9" bandwidth="1384000" width="640" height="480">
     <BaseURL>41325645.mp4</BaseURL>
    </Representation>
    <Representation id="A" bandwidth="1536000" width="1280" height="720">
     <BaseURL>89045625.mp4</BaseURL>
    </Representation>
    <Representation id="B" bandwidth="2048000" width="1280" height="720">
     <BaseURL>23536745734.mp4</BaseURL>
    </Representation>
   </AdaptationSet>
 </Period>
</MPD>
```

FIG. 50

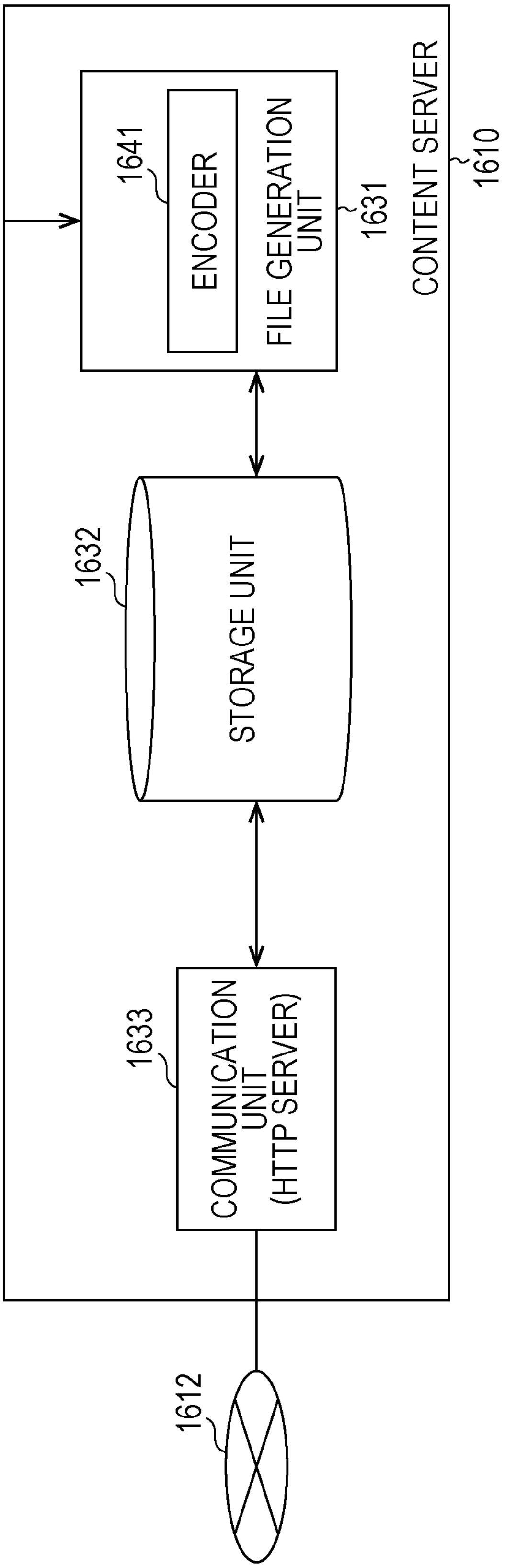

ENCODER
1641
FILE GENERATION UNIT
1631
CONTENT SERVER
1610
STORAGE UNIT
1632
COMMUNICATION UNIT (HTTP SERVER)
1633
1612

FIG. 51

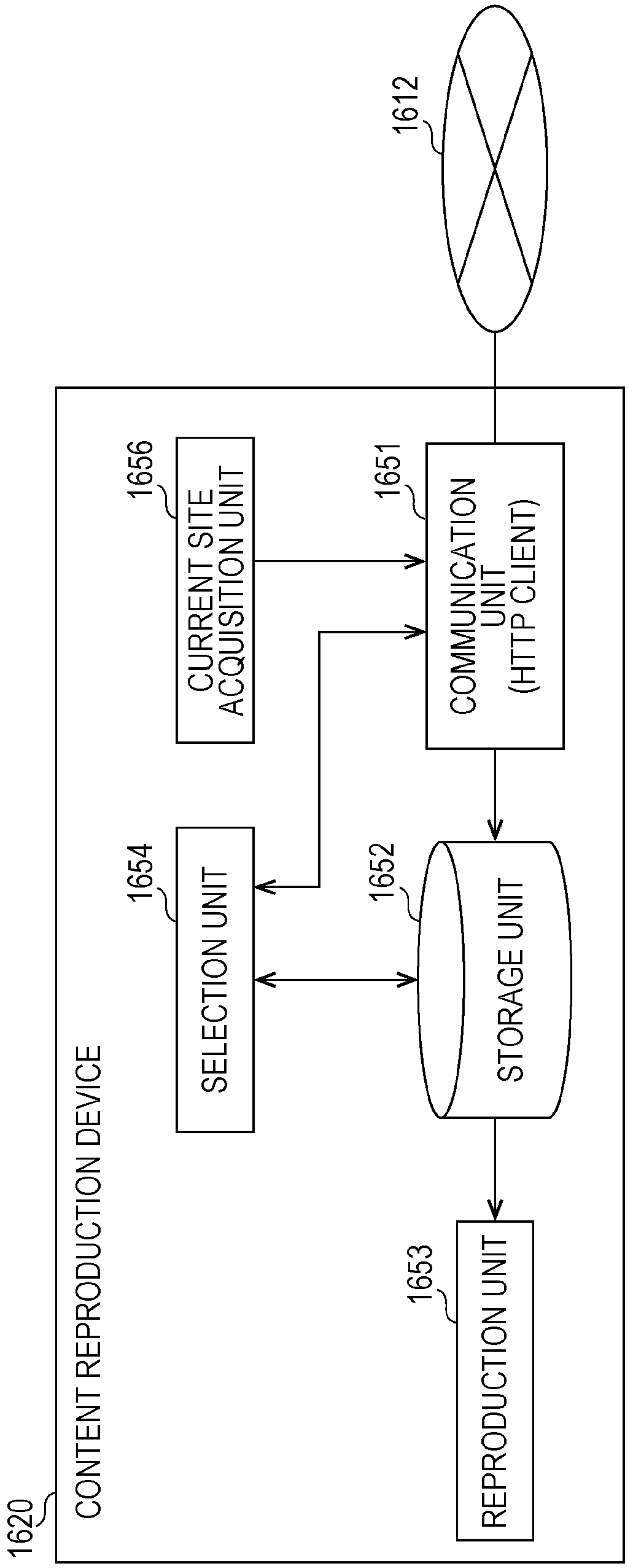
1612
1620
CONTENT REPRODUCTION DEVICE
1656
CURRENT SITE ACQUISITION UNIT
1651
COMMUNICATION UNIT (HTTP CLIENT)
1654
SELECTION UNIT
1652
STORAGE UNIT
1653
REPRODUCTION UNIT

FIG. 52

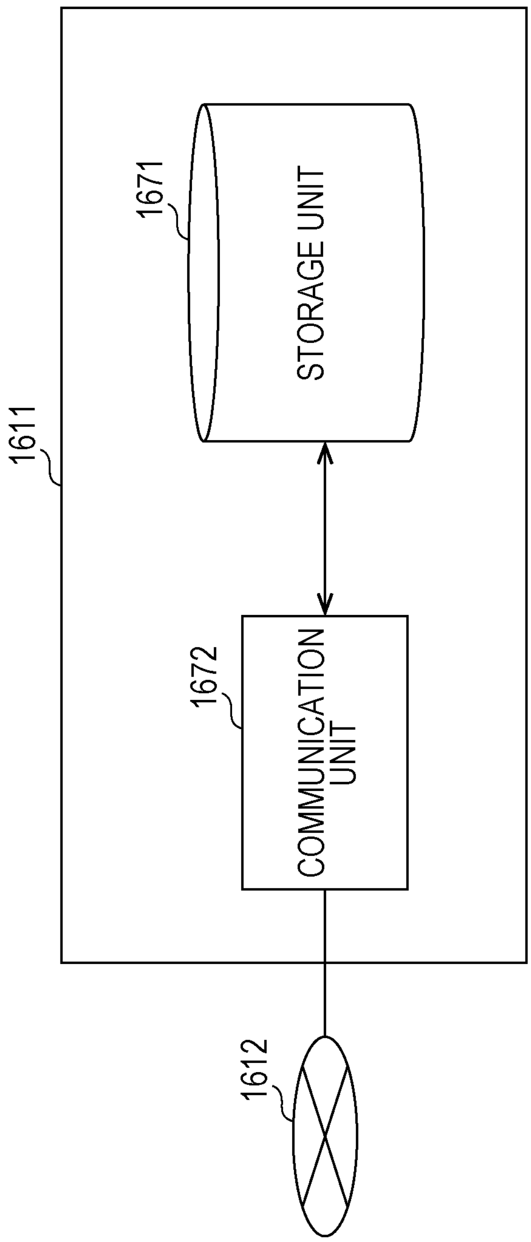

FIG. 53

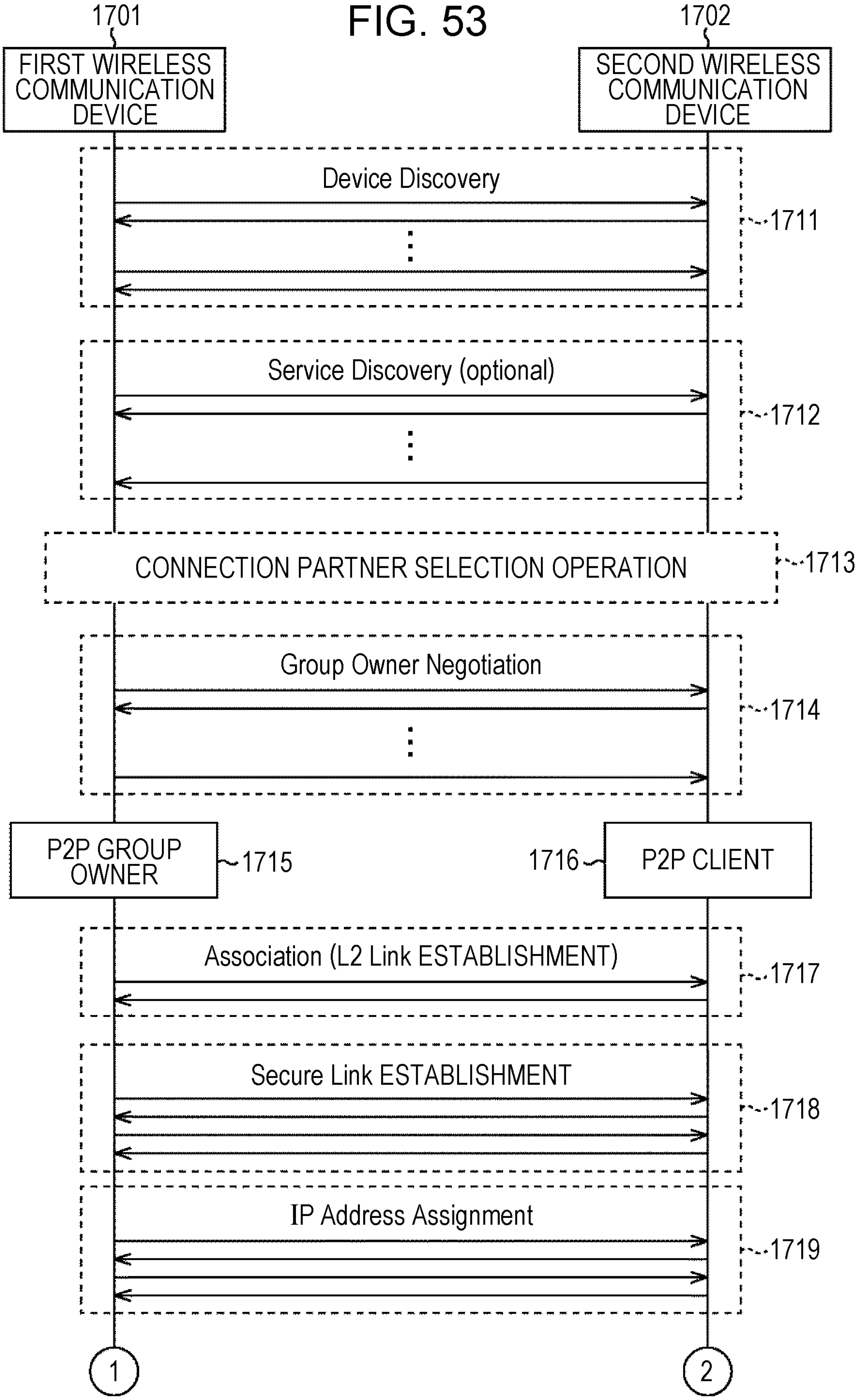
1701
FIRST WIRELESS COMMUNICATION DEVICE
1702
SECOND WIRELESS COMMUNICATION DEVICE
Device Discovery
1711
Service Discovery (optional)
1712
CONNECTION PARTNER SELECTION OPERATION
1713
Group Owner Negotiation
1714
P2P GROUP OWNER
1715
1716
P2P CLIENT
Association (L2 Link ESTABLISHMENT)
1717
Secure Link ESTABLISHMENT
1718
IP Address Assignment
1719
1
2

FIG. 54

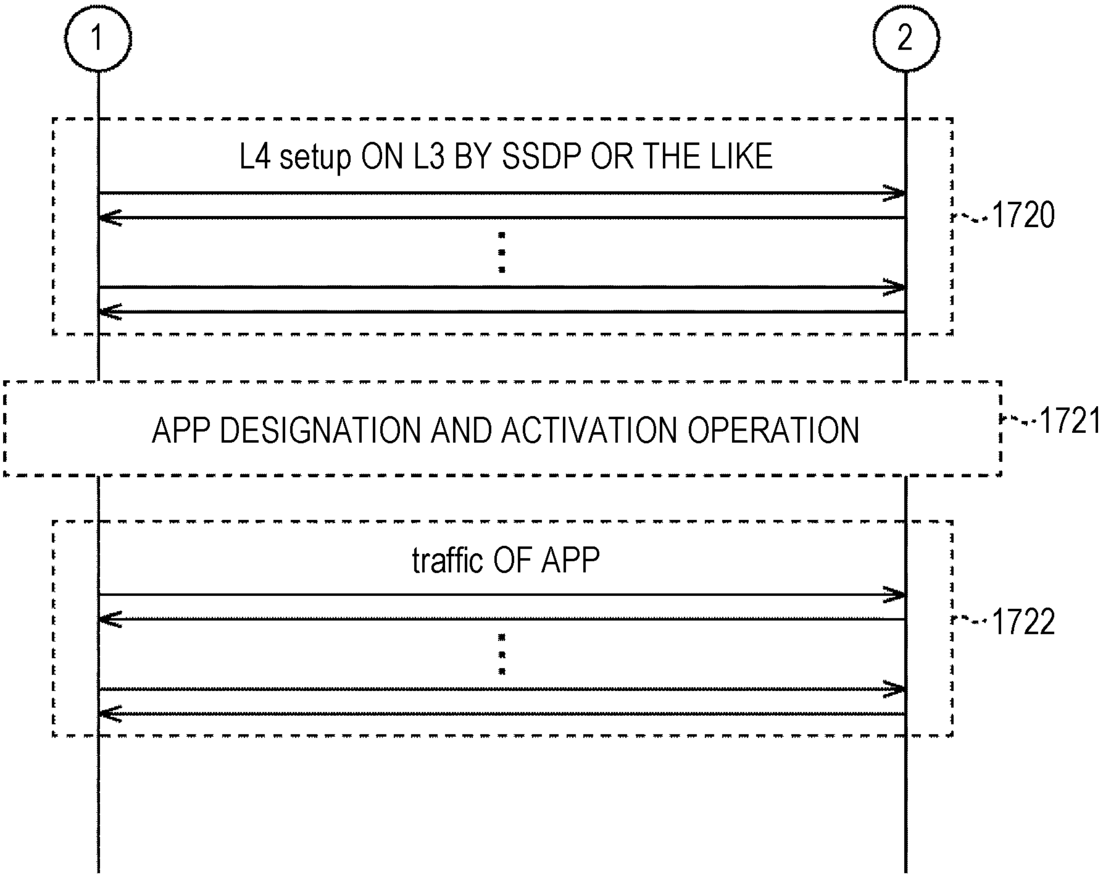
1
2
L4 setup ON L3 BY SSDP OR THE LIKE
1720
APP DESIGNATION AND ACTIVATION OPERATION
1721
traffic OF APP
1722

FIG. 55

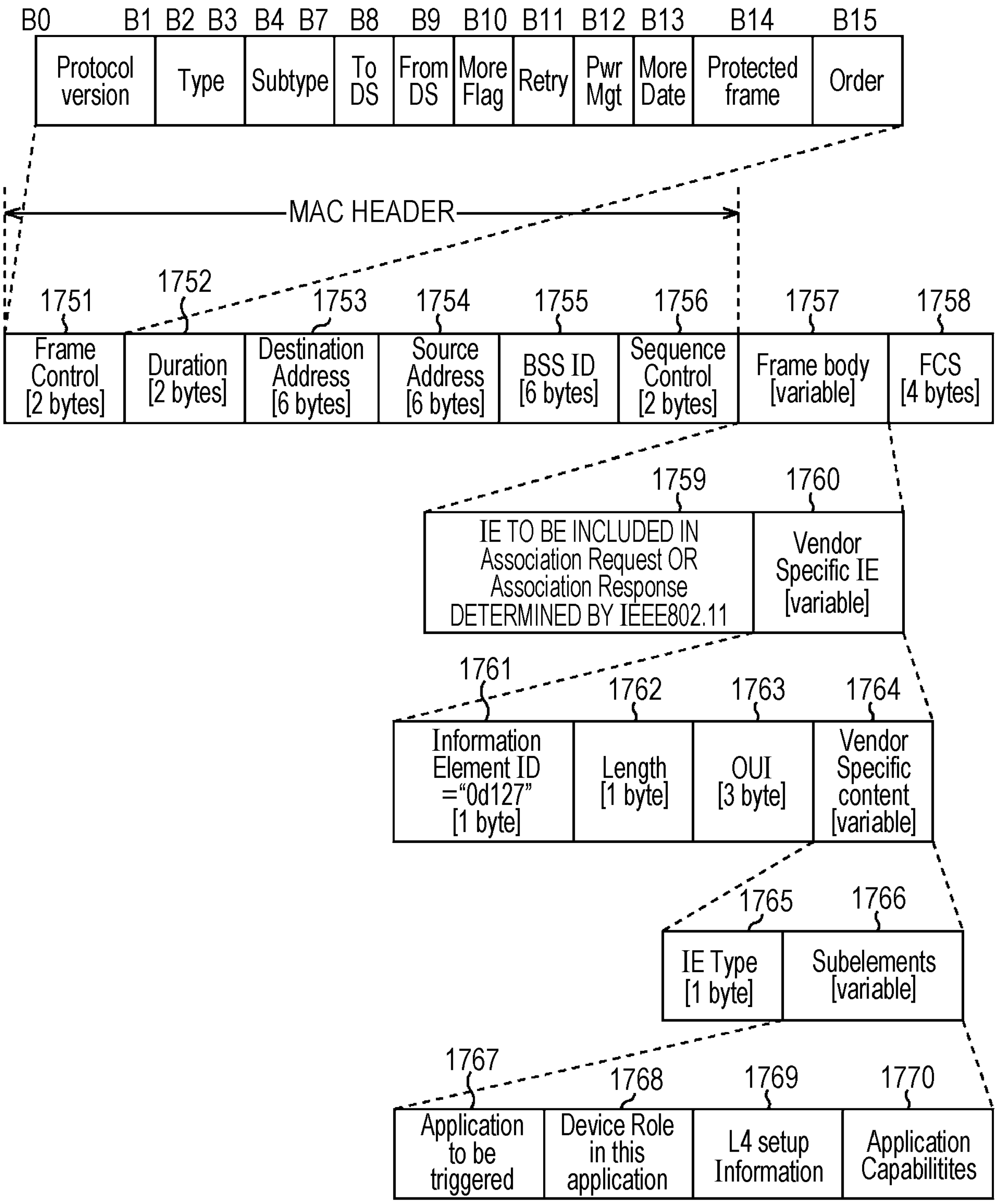
B0
B1
B2
B3
B4
B7
B8
B9
B10
B11
B12
B13
B14
B15
Protocol version
Type
Subtype
To DS
From DS
More Flag
Retry
Pwr Mgt
More Date
Protected frame
Order
MAC HEADER
1751
1752
1753
1754
1755
1756
1757
1758
Frame Control [2 bytes]
Duration [2 bytes]
Destination Address [6 bytes]
Source Address [6 bytes]
BSS ID [6 bytes]
Sequence Control [2 bytes]
Frame body [variable]
FCS [4 bytes]
1759
1760
IE TO BE INCLUDED IN Association Request OR Association Response DETERMINED BY IEEE802.11
Vendor Specific IE [variable]
1761
1762
1763
1764
Information Element ID ="0d127" [1 byte]
Length [1 byte]
OUI [3 byte]
Vendor Specific content [variable]
1765
1766
IE Type [1 byte]
Subelements [variable]
1767
1768
1769
1770
Application to be triggered
Device Role in this application
L4 setup Information
Application Capabilitites

FIG. 56

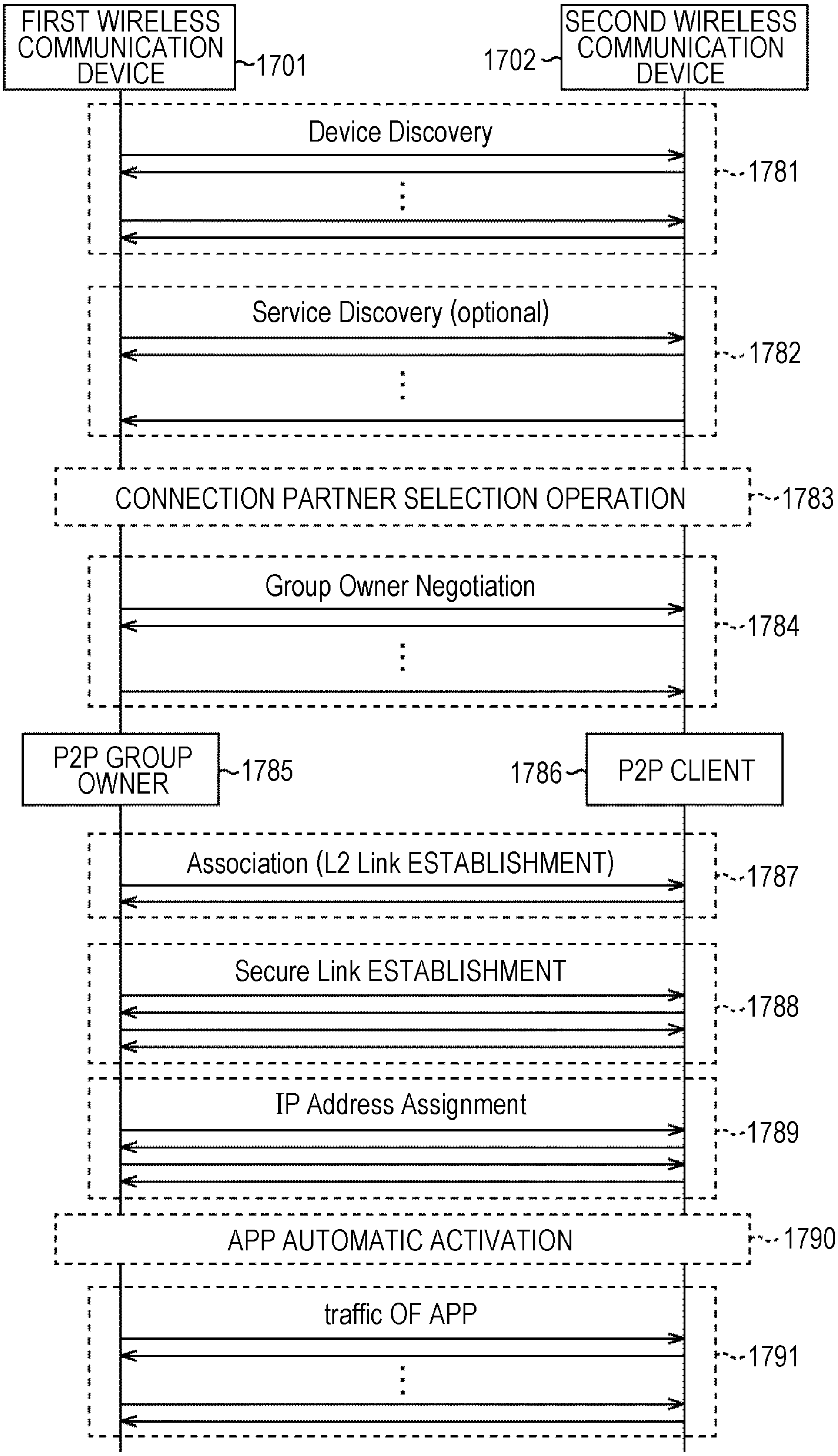
FIRST WIRELESS COMMUNICATION DEVICE
1701
1702
SECOND WIRELESS COMMUNICATION DEVICE
Device Discovery
1781
Service Discovery (optional)
1782
CONNECTION PARTNER SELECTION OPERATION
1783
Group Owner Negotiation
1784
P2P GROUP OWNER
1785
1786
P2P CLIENT
Association (L2 Link ESTABLISHMENT)
1787
Secure Link ESTABLISHMENT
1788
IP Address Assignment
1789
APP AUTOMATIC ACTIVATION
1790
traffic OF APP
1791

## INTERNATIONAL SEARCH REPORT

International application No.
PCT/JP2014/065287

A. CLASSIFICATION OF SUBJECT MATTER
*H04N19/30*(2014.01)i

According to International Patent Classification (IPC) or to both national classification and IPC

B. FIELDS SEARCHED

Minimum documentation searched (classification system followed by classification symbols)
H04N19/00-19/98

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | Louis Kerofsky (et al.), "Color Gamut Scalable Video Coding: New Results", Joint Collaborative Team on Video Coding (JCT-VC) of ITU-T SG16 WP3 and ISO/IEC JTC1/SC29/WG11 JCTVC-L0334, ITU-T, 2013.01.23, p.1-18 | 1-4,7-13, 16-18 |
| Y | Ximin Zhang (et al.), "TE4.3.1: Inter-layer SAO", Joint Collaborative Team on Video Coding (JCT-VC) of ITU-T SG16 WP3 and ISO/IEC JTC1/SC29/WG11 JCTVC-L0212, ITU-T, 2013.01.23, p.1-4 | 1-4,7-13, 16-18 |
| A | JP 2011-509536 A (Sharp Corp.), 24 March 2011 (24.03.2011), paragraphs [0010] to [0060], [0084] to [0085]; fig. 1A, 1B, 2 to 9 & WO 2009/087952 A1 & US 2009/0175338 A1 | 1-18 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 July, 2014 (28.07.14) | 12 August, 2014 (12.08.14) |
| Name and mailing address of the ISA/ Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **BENJAMIN BROSS ; WOO-JIN HAN ; JENS-RAINER OHM ; GARY J. SULLIVAN ; YE-KUI WANG ; THOMAS WIEGAND.** High Efficiency Video Coding (HEVC) text specification draft 10. *JCTVC-L1003,* 2013, vol. 34, 1. 14-1. 23
- **LOUIS KEROFSKY ; ANDREW SEGALL ; SEUNG-HWAN KIM ; KIRAN MISRA.** Color Gamut Scalable Video Coding: New Results. *JCTVC-L0334,* 2013, 1. 14-1. 23